(19) Europäisches Patentamt

European Patent Office

Office européen des brevets

(11) **EP 1 001 284 B1**

(12) **EUROPEAN PATENT SPECIFICATION**

(45) Date of publication and mention
of the grant of the patent:
**15.05.2002 Bulletin 2002/20**

(51) Int Cl.[7]: **G02B 6/06**, G06T 1/00,
G01T 1/00, G02B 6/08,
G06K 9/00, H01J 29/89

(21) Application number: **98935280.2**

(22) Date of filing: **30.07.1998**

(86) International application number:
**PCT/JP98/03394**

(87) International publication number:
**WO 99/06862 (11.02.1999 Gazette 1999/06)**

(54) **OPTICAL ELEMENT, AND IMAGING UNIT, IMAGING APPARATUS, RADIATION IMAGE SENSOR AND FINGERPRINT COLLATOR WHICH USE THE SAME**

OPTISCHES ELEMENT UND EINE ABBILDUNGSEINHEIT, ABBILDUNGSVORRICHTUNG, STRAHLUNGSBILDSENSOR UND FINGERABDRUCKANALYSATOR UNTER VERWENDUNG DERSELBEN

ELEMENT OPTIQUE, UNITE D'IMAGERIE, APPAREIL D'IMAGERIE DETECTEUR D'IMAGE RADIANTE ET ANALYSEUR D'EMPREINTES DIGITALES L'UTILISANT

(84) Designated Contracting States:
**DE FR GB**

(30) Priority: **30.07.1997 JP 20456097
31.07.1997 JP 20612097
04.09.1997 JP 23983097
30.04.1998 JP 12129498
30.04.1998 JP 12131098
12.05.1998 JP 12897498**

(43) Date of publication of application:
**17.05.2000 Bulletin 2000/20**

(73) Proprietor: **Hamamatsu Photonics K.K.
Shizuoka-ken 435-8558 (JP)**

(72) Inventors:
• **SUGAWARA, Takeo
Hamamatsu-shi, Shizuoka-ken 435-8558 (JP)**
• **SUZUKI, Makoto
Hamamatsu-shi, Shizuoka-ken 435-8558 (JP)**
• **KATO, Masayoshi
Hamamatsu-shi, Shizuoka-ken 435-8558 (JP)**

(74) Representative: **Brown, Kenneth Richard et al
R.G.C. Jenkins & Co.
26 Caxton Street
London SW1H 0RJ (GB)**

(56) References cited:
EP-A- 0 692 339     EP-A- 0 756 243
JP-A- 2 249 537     JP-A- 6 051 142
JP-A- 8 286 048     JP-A- 8 315 143
JP-A- 9 043 439     US-A- 3 402 000
US-A- 4 139 261     US-A- 4 615 583
US-A- 5 360 630

**EP 1 001 284 B1**

## Description

### Technical Field

The present invention relates to an optical device; and an imaging unit, an imaging apparatus, a radiation image sensor, and a fingerprint identifying apparatus which use the same.

### Background Art

Known as an optical member for transmitting an optical image is one in which a plurality of optical fibers are arranged parallel to each other and integrally formed. Also, an optical device transmitting an optical image while enlarging or reducing it to a given magnification by using two optical members, each of which is mentioned above and has respective end faces cut obliquely and perpendicularly with respect to the optical axis, is disclosed, for example, in U.S. Patent No. 3402000. The features of the preamble of claim 1 are, in combination, known from US 3402000 A.

EP-A-0 756 243 (HAMAMATSU PHOTONICS KK) 29 January 1997 (1997-01-29) discloses an optical device wherein the axes of an input optical member, an intermediate optical member, and an output optical member all lie parallel to a common plane. The optical axes of the fibres of the input optical member and the optical axes of the fibres of the intermediate optical member all lie parallel to the common plane. The output optical member is tapered.

### Disclosure of the Invention

However, the above-mentioned optical device has been problematic in that its optical image transmission efficiency is not always sufficient. Therefore, it is an object of the present invention to provide an optical device having a favorable optical image transmission efficiency.

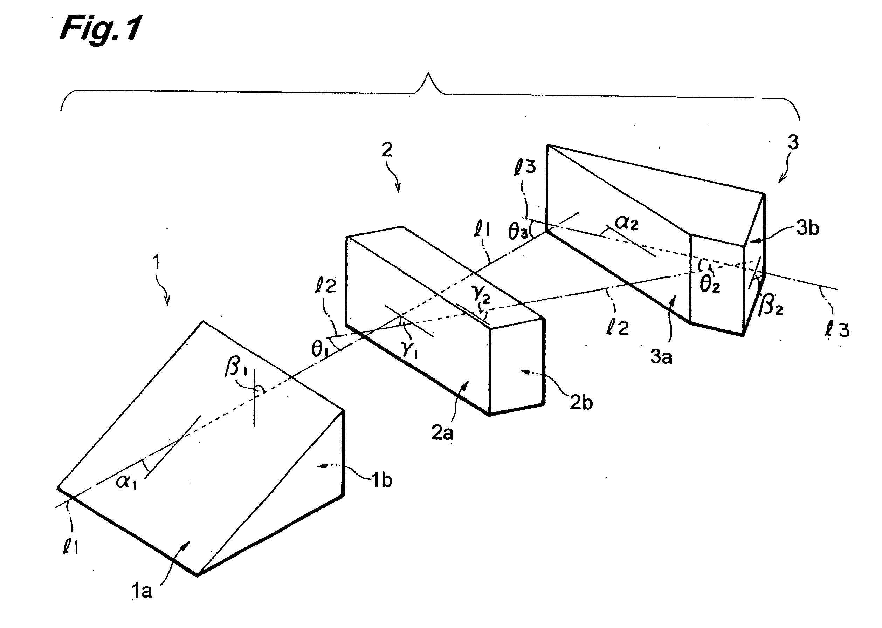

In order to achieve the above-mentioned object, the optical device of the present invention comprises, for example, as shown in Fig. 1 as an exploded view, a first optical member 1, composed of a plurality of optical fibers arranged parallel to each other and integrally formed, having a first entrance surface 1a and a first exit surface 1b which intersect an optical axis 11 at respective angles of $\alpha_1$, $\beta_1$; an intermediate optical member 2, composed of a plurality of light-transmitting lines arranged parallel to each other, having a first end face 2a, and a second end face 2b which intersect an axis 12 of the light-transmitting lines at respective angles of $\gamma_1$, $\gamma_2$; and a second optical member 3, composed of a plurality of optical fibers arranged parallel to each other and integrally formed, having a second entrance surface 3a and a second exit surface 3b which intersect an optical axis 13 at respective angles of $\alpha_2$, $\beta_2$; wherein the optical axes of said first and second optical members and said axis of the light-transmitting lines of the intermediate optical member all lie parallel to the same plane (x, y); wherein the first exit surface 1b and the first end face 2a are in contact with each other, and the second end face 2b and the second entrance surface 3a are in contact with each other, and an angle $\theta_1$ formed between the optical axis 11 of the first optical member 1 and the axis 12 of the light-transmitting lines of the intermediate optical member 2; and wherein an angle $\theta_2$ formed between the axis 12 of the light-transmitting lines of the intermediate optical member 2 and the optical axis 13 of the second optical member 3, and an angle $\theta_3$ formed between the optical axis 11 of the first optical member 1 and the optical axis 13 of the second optical member 3 have relationships of $\theta_3 > \theta_1$, and $\theta_3 > \theta_2$ therebetween.

When $\theta_3 > \theta_1$, and $\theta_3 > \theta_2$ as in the configuration mentioned above, the transmission loss of light caused by flexure of the transmission line can be reduced. As a result, an optical image incident on the first entrance surface 1a can efficiently be transmitted to the second exit surface 3b.

Also, the optical device of the present invention may comprise a first optical member, composed of a plurality of optical fibers arranged parallel to each other and integrally formed, having a first entrance surface and a first exit surface which intersect an optical axis at respective angles of $\alpha_1$,$\beta_1$; first to n-th intermediate optical members whose number is n (where n is an integer of at least 2); and a second optical member, composed of a plurality of optical fibers arranged parallel to each other and integrally formed, having a second entrance surface and a second exit surface which intersect an optical axis at respective angles of $\alpha_2$,$\beta_2$; wherein the i-th intermediate optical member (where i is an integer from 1 to n) is composed of a plurality of light-transmitting lines arranged parallel to each other and has a (2i-1)-th end face and a 2i-th end face which intersect an axis of the light-transmitting lines at respective angles of $\gamma_{2i-1}$, $\gamma_{2i}$ wherein the optical axes of said first and second optical members and said axis of the light-transmitting lines of each of said intermediate optical members all lie parallel to the same plane (x, y); wherein the first exit surface and the first end face of the first intermediate optical member (i.e. where i = 1) are in contact with each other, the 2i-th end face and the (2i+1)-th end face are in contact with each other (where i is an integer from i to n-1), and the 2n-th end face and the second entrance surface are in contact with each other; and wherein each of an angle $\theta_1$ formed between the optical axis of the first optical member and the axis of the light-transmitting lines of the first intermediate optical member, an angle $\theta_{i+1}$formed between the axis of the light-transmitting lines of the i-th intermediate optical member and the axis

2

**EP 1 001 284 B1**

of the light-transmitting lines of the (i+1)-th intermediate optical member (where i is an integer from 1 to n-1), and an angle $\theta_{n+1}$ formed between the axis of the light-transmitting lines of the n-th intermediate optical member and the optical axis of the second optical member is smaller than an angle $\theta_{n+2}$ formed between the optical axis of the first optical member and the optical axis of the second optical member.

The above-mentioned configuration can further reduce the transmission loss of light caused by flexure of the transmission line as compared with the case using a single sheet of intermediate optical member. As a result, an optical image incident on the first entrance surface can be transmitted to the second exit surface more efficiently.

**Brief Description of the Drawings**

Fig. 1 is an exploded view of an optical device;
Fig. 2 is a perspective view of an optical device;
Fig. 3 is a schematic sectional view of the optical device;
Fig. 4 is a view for explaining the use of the optical device;
Fig. 5 is an explanatory view showing light propagation within the optical device;
Fig. 6 is an explanatory view showing light propagation within the optical device;
Fig. 7 is an explanatory view showing light propagation within the optical device;
Fig. 8 is a perspective view of an imaging unit;
Fig. 9 is a perspective view of an imaging apparatus;
Fig. 10 is a perspective view of a radiation image sensor;
Fig. 11 is a schematic sectional view of the radiation image sensor;
Fig. 12 is an explanatory view showing incidence of a radiation onto the radiation image sensor;
Fig. 13 is an explanatory view showing incidence of the radiation onto the radiation image sensor;
Fig. 14 is a configurational view of a fingerprint identifying apparatus;
Fig. 15 is a perspective view of an optical device;
Fig. 16 is a schematic sectional view of the optical device;
Fig. 17 is a perspective view of an optical device;
Fig. 18 is a schematic sectional view of the optical device;
Fig. 19 is a perspective view of an optical device;
Fig. 20 is a schematic sectional view of the optical device;
Fig. 21 is an explanatory view showing light propagation within the optical device;
Fig. 22 is an explanatory view showing light propagation within the optical device;
Fig. 23 is a perspective view of an optical device;
Fig. 24 is a schematic sectional view of the optical device;
Fig. 25 is a perspective view of an optical device;
Fig. 26 is a schematic sectional view of the optical device;
Fig. 27 is a schematic sectional view of an optical device;
Fig. 28 is a schematic sectional view of an optical device;
Fig. 29 is a schematic sectional view of an optical device;
Fig. 30 is a schematic sectional view of an optical device;
Fig. 31 is a schematic sectional view of an optical device;
Fig. 32 is a schematic sectional view of an optical device;
Fig. 33 is a schematic sectional view of an optical device;
Fig. 34 is a perspective view of an optical device;
Fig. 35 is a perspective view of an intermediate optical member;
Fig. 36 is a partly enlarged perspective view of the intermediate optical member;
Fig. 37 is a schematic sectional view of the intermediate optical member;
Fig. 38 is a partly enlarged schematic sectional view of the intermediate optical member;
Fig. 39 is a schematic sectional view of an optical device;
Fig. 40 is an explanatory view showing light propagation within the optical device;
Fig. 41 is an explanatory view showing light propagation within the optical device;
Fig. 42 is a perspective view of an optical device;
Fig. 43 is a schematic sectional view of the optical device;
Fig. 44 is a perspective view of an optical device;
Fig. 45 is a schematic sectional view of the optical device;
Fig. 46 is a perspective view of an intermediate. optical member;

Fig. 47 is a partly enlarged perspective view of the intermediate optical member;

Fig. 48 is a schematic sectional view of the intermediate optical member;

Fig. 49 is a partly enlarged schematic sectional view of the intermediate optical member;

Fig. 50 is a perspective view of an intermediate optical member;

Fig. 51 is a partly enlarged perspective view of the intermediate optical member;

Fig. 52 is a schematic sectional view of the intermediate optical member;

Fig. 53 is a partly enlarged schematic sectional view of the intermediate optical member;

Fig. 54 is a perspective view of an optical device;

Fig. 55 is a schematic sectional view of the optical device;

Fig. 56 is a perspective view of an imaging apparatus;

Fig. 57 is a perspective view of an imaging apparatus;

Fig. 58 is a perspective view of an imaging apparatus;

Fig. 59 is a perspective view of an imaging apparatus;

Fig. 60 is a perspective view of an imaging apparatus;

Fig. 61 is a perspective view of an imaging apparatus;

Fig. 62 is a perspective view of a radiation image sensor;

Fig. 63 is a schematic sectional view of the radiation image sensor;

Fig. 64 is a schematic sectional view of the radiation image sensor;

Fig. 65 is a schematic sectional view of the radiation image sensor;

Fig. 66 is a schematic sectional view of the radiation image sensor;

Fig. 67 is a schematic sectional view of the radiation image sensor;

Fig. 68 is a schematic sectional view of the radiation image sensor; and

Fig. 69 is a schematic sectional view of the radiation image sensor.

**Best Mode for Carrying Out the Invention**

(1) Optical Device According to Embodiment of Present Invention

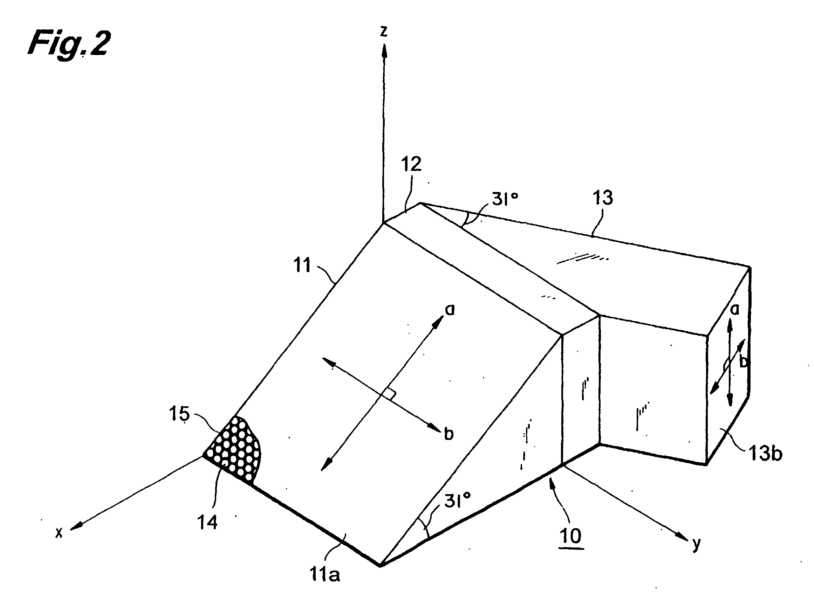

An optical device in accordance with an embodiment of the present invention will be explained. As shown in Fig. 2, the optical device 10 in accordance with this embodiment is constituted by an input optical member 11, an intermediate optical member 12, and an output optical member 13.

Each of the input optical member 11, intermediate optical member 12, and output optical member 13 is composed of a number of optical fibers 14 arranged parallel to each other and integrally formed. In the optical fibers 14 constituting each optical member, the refractive index of the core 14a, the refractive index of the cladding 14b, and the numerical aperture are as shown in Table 1.

TABLE 1

|  | Core Refractive Index | Cladding Refractive Index | Numerical Aperture |
|---|---|---|---|
| Input Optical Member | 1.56 | 1.52 | 0.35 |
| Intermediate Optical Member | 1.82 | 1.495 | 1.0 |
| Output Optical Member | 1.82 | 1.495 | 1.0 |

Also, gaps among the individual optical fibers 14 constituting each optical member are filled with a light-absorbing material 15.

The input optical member 11 has an entrance surface 11a which is obliquely cut with respect to the optical axis (the optical axis of the optical fibers constituting the optical member) at an angle of 31° and an exit surface 11b which is perpendicularly cut with respect to the optical axis, whereby an optical image incident on the entrance surface 11a can be outputted to the exit surface 11b while being reduced in a specific direction. Also, the angle (31° ) formed between the optical axis and the entrance surface 11a is such an angle that the light incident on the entrance surface 11a from the air does not satisfy a total reflection condition within the optical fibers 14 constituting the input optical member 11.

The intermediate optical member 12 has an entrance surface 12a which is obliquely cut with respect to the optical axis at an angle of 66° and an exit surface 12b which is cut parallel to the entrance surface 12a, whereby an optical image incident on the entrance surface 12a can be outputted to the exit surface 12b.

The output optical member 13 has an entrance surface 13a which is obliquely cut with respect to the optical axis at an angle of 31° and an exit surface 13b which is perpendicularly cut with respect to the optical axis, whereby an optical image incident on the entrance surface 13a can be outputted to the exit surface 13b while being reduced in a specific direction.

The exit surface 11b of the input optical member 11 and the entrance surface 12a of the intermediate optical member 12 are in contact with each other, and the exit surface 12b of the intermediate optical member 12 and the entrance surface 13a of the output optical member 13 are in contact with each other. In particular, a line parallel to both of the entrance surface 11a and exit surface 11b of the input optical member 11 and a line parallel to both of the entrance surface 13a and exit surface 13b of the output optical member 13 are perpendicular to each other. As a consequence, the optical image incident on the entrance surface 11a of the input optical member 11 is reduced in the a-axis direction of Fig. 2 by the input optical member 11 and is reduced in the b-axis direction perpendicular to the a-axis direction by the output optical member 13, so as to be outputted from the exit surface 13b of the output optical member 13.

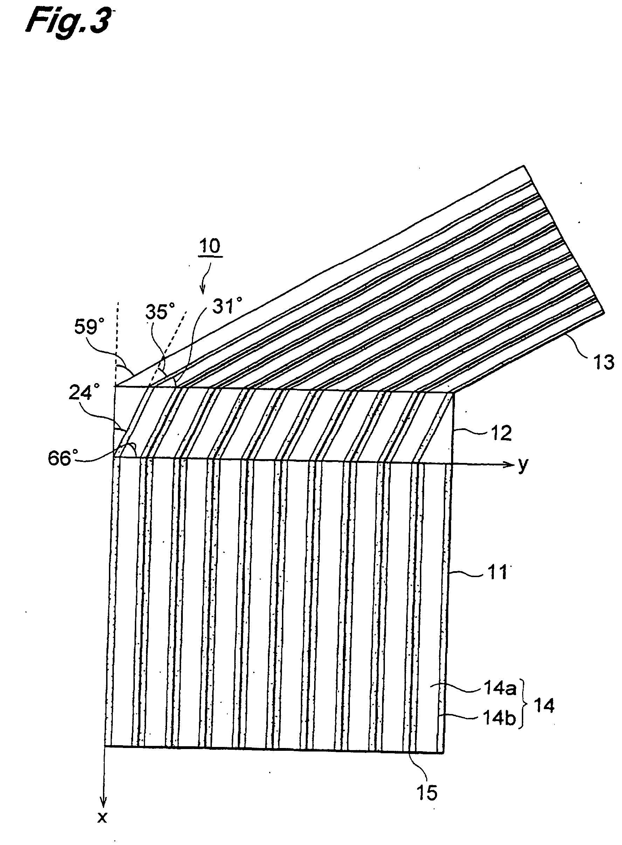

The optical axes of the input optical member 11, intermediate optical member 12, and output optical member 13 are parallel to the xy plane of Fig. 2, whereas Fig. 3 shows a cross-sectional view of the optical device 10 taken along a plane parallel to the xy plane in Fig. 2. Fig. 3 is a schematic sectional view showing relationships of the optical axes of the individual optical members, whereas each optical member is a bundle of several thousand optical fibers in practice. Here, since the angle formed between the entrance surface 12a of the intermediate optical member 12 and its optical axis is 66° , and the angle formed between the entrance surface 13a of the output optical member 13 and its optical axis is 31° , the angle formed between the optical axis of the input optical member 11 and the optical axis of the intermediate optical member 12 becomes 24° , and the angle formed between the optical axis of the intermediate optical member 12 and the optical axis of the output optical member 13 becomes 35° , whereby each of them is smaller than 59° , i.e., the angle formed between the optical axis of the input optical member 11 and the optical axis of the output optical member 13.

Further, the angle (24° ) formed between the optical axis of the input optical member 11 and the optical axis of the intermediate optical member 12 is such an angle that nearly 100% of the light incident on the entrance surface 12a of the intermediate optical member 12 from the exit surface of the input optical member 11 satisfies a total reflection condition within the optical fibers 14 constituting the intermediate optical member 12, whereas the angle (35° ) formed between the optical axis of the intermediate optical member 12 and the optical axis of the output optical member 13 is such that about 50% of the light incident on the entrance surface 13a of the output optical member 13 from the exit surface 12b of the intermediate optical member 12 satisfies a total reflection condition within the optical fibers 14 constituting the output optical member 13.

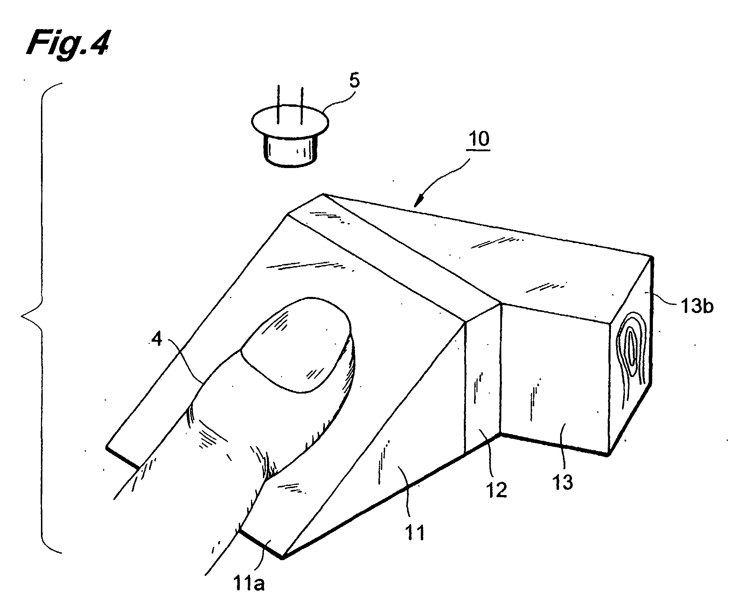

For example, when the optical device 10 is used for reducing and transmitting a fingerprint image, it is arranged as shown in Fig. 4. Namely, a finger 4 is brought into contact with the entrance surface 11a of the input optical member 11, and light is projected from above the finger by use of an LED 5 or the like. The angle formed between the optical axis of the input optical member 11 and the entrance surface 11a is set to 31° such that the incident light from the air does not satisfy a total reflection condition within the optical fibers 14 constituting the input optical member 11. As a consequence, while the light incident on the input optical member 11 from the air attenuates and disappears within the input optical member 11, the light incident on the input optical member 11 by way of the contact portion (protrusions of the fingerprint) of the finger 4 propagates through the optical device 10. Hence, the fingerprint image is transmitted to the exit surface 13b of the output optical member 13. When this fingerprint image is captured with an imaging device, a reduced fingerprint image can be obtained.

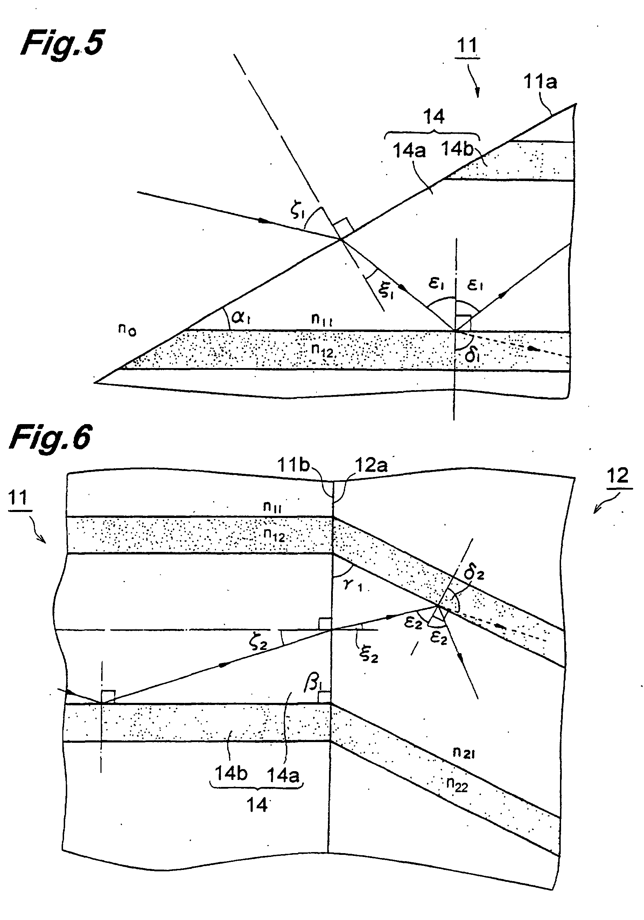

Operations of the optical device in accordance with this embodiment will now be explained. First, a case where the light incident on the entrance surface 11a of the input optical member 11 from the air propagates while being refracted and reflected by the core/cladding interface of the optical fibers 14 constituting the input optical member 11 as shown in Fig. 5 will be considered. Here, let $n_0$ be the refractive index of the air, and $n_{11}$ and $n_{12}$ be the respective refractive indices of the core 14a and cladding 14b of the optical fibers 14 constituting the input optical member 11. Also, let $\alpha_1$ be the angle formed between the optical axis of the input optical member 11 and its entrance surface 11a, $\zeta_1$ be the angle of incidence of light incident on the entrance surface 11a of the input optical member 11 from the air, $\xi_1$ be the angle of refraction thereof, $\varepsilon_1$ be the angle of incidence of light incident on the cladding 14b of the input optical member 11 from its core 14a, and $\delta_1$ be the angle of refraction thereof.

The relationship between $\zeta_1$ and $\xi_1$ is expressed by

$$n_0 \sin\zeta_1 = n_{11}\sin\xi_1 \tag{1}$$

from the law of refraction. As a consequence, the incident light from all directions ($0° \leqq \zeta_1 \leqq 90°$ ) in the air enters the input optical member 11 from its entrance surface 11a within the range of $\xi_1$ satisfying

$$0 \leqq \sin\xi_1 \leqq n_0/n_{11}. \tag{2}$$

On the other hand, $\alpha_1$, $\xi_1$, and $\varepsilon_1$ have a relationship of

$$\alpha_1 + (90° + \xi_1) + (90° - \varepsilon_1) = 180° \tag{3}$$

as seen from Fig. 5.

Therefore, if expression (3) is used for determining $\alpha_1$ so as not to satisfy the total reflection condition in the core/cladding interface

$$\sin\varepsilon_1 > n_{12}/n_{11} \tag{4}$$

in all $\varepsilon_1$ satisfying expression (2), then the light incident on the input optical member 11 from the air will attenuate and disappear within the input optical member 11, and will not propagate therethrough.

On the other hand, a part of the light incident on the input optical member 11 from the contact portion of a sample such as a finger, which is a material having a refractive index higher than that of the air, with respect to the entrance surface 11a satisfies the total reflection condition, thereby propagating through the input optical member 11.

In the optical device 10 in accordance with this embodiment, since $n_{11} = 1.56$ and $n_{12} = 1.52$, the light incident on the entrance surface 11a of the input optical member 11 from the air can be attenuated and extinguished within the input optical member 11 if $\alpha_1$ is set to 37.1° or less (assuming that the refractive index of air $n_0 = 1.00$). Here, in the optical device 10 in accordance with this embodiment, $\alpha_1$ is set to 31° in view of the efficiency of reduction and the light-receiving angle ratio from the intermediate optical member 12 to the output optical member 13 (details of which will be explained later).

Also, since the angle $\alpha_1$ formed between the optical axis and the entrance surface 11a is set to 31°, and the exit surface 11b is made perpendicular to the optical axis, the input optical member 11 acts to reduce the optical image incident on the entrance surface 11a to 0.52 (sin31°) in size in the a-axis direction and output thus reduced image to the exit surface 11b.

A case where the light incident on the entrance surface 12a of the intermediate optical member 12 from the exit surface 11b of the input optical member 11 propagates while being refracted and reflected by the core/cladding interface of the optical fibers 14 constituting the intermediate optical member 12 as shown in Fig. 6 will now be considered. Here, let $n_{21}$ and $n_{22}$ be the respective refractive indices of the core 14a and cladding 14b of the optical fibers 14 constituting the intermediate optical member 12. Also, let $\gamma_1$ be the angle formed between the optical axis of the intermediate optical member 12 and its entrance surface 12a, $\zeta_2$ be the angle of incidence of light incident on the entrance surface 12a of the intermediate optical member 12 from the exit surface 11b of the input optical member 11, $\xi_2$ be the angle of refraction thereof, $\varepsilon_2$ be the angle of incidence of light incident on the cladding 14b of the intermediate optical member 12 from its core 14a, and $\delta_2$ be the angle of refraction thereof. Here, the angle $\beta_1$ formed between the optical axis of the input optical member 11 and its exit surface 11b is a right angle.

According to the total reflection condition of the input optical member 11, $\zeta_2$ is within the range satisfying

$$\sin(90° - \zeta_2) > n_{12}/n_{11}. \tag{5}$$

Also, $\zeta_2$ and $\xi_2$ satisfy a relationship of

$$n_{11}\sin\zeta_2 = n_{21}\sin\xi_2 \tag{6}$$

according to the law of refraction.

On the other hand, $\gamma_1$, $\xi_2$, and $\varepsilon_2$ have a relationship of

$$\gamma_1 + (90° - \xi_2) + (90° - \varepsilon_2) = 180° \tag{7}$$

as seen from Fig. 6.

Therefore, if expression (7) is used for determining $\gamma_1$ such that at least a part of $\xi_2$ satisfying both of expressions (5) and (6) satisfies the total reflection condition in the core/cladding interface

$$\sin\varepsilon_2 > n_{22}/n_{21}, \tag{8}$$

then at least a part of the light incident on the entrance surface 12a of the intermediate optical member 12 from the exit surface 11b of the input optical member 11 propagates through the intermediate optical member 12 while satisfying the total reflection condition.

In the optical device 10 in accordance with this embodiment, since $n_{11} = 1.56$, $n_{12} = 1.52$, $n_{21} = 1.82$, and $n_{22} = 1.495$, nearly 100% of the light incident on the entrance surface 12a of the intermediate optical member 12 from the exit surface 11b of the input optical member 11 is transmitted through the intermediate optical member 12 if $\gamma_1$ is set to 66° .

Also, since the entrance surface 12a and exit surface 12b of the intermediate optical member 12 are cut parallel to each other, the optical image incident on the entrance surface 12a of the intermediate optical member 12 would be outputted from the exit surface 12b of the intermediate optical member 12 without being enlarged or reduced.

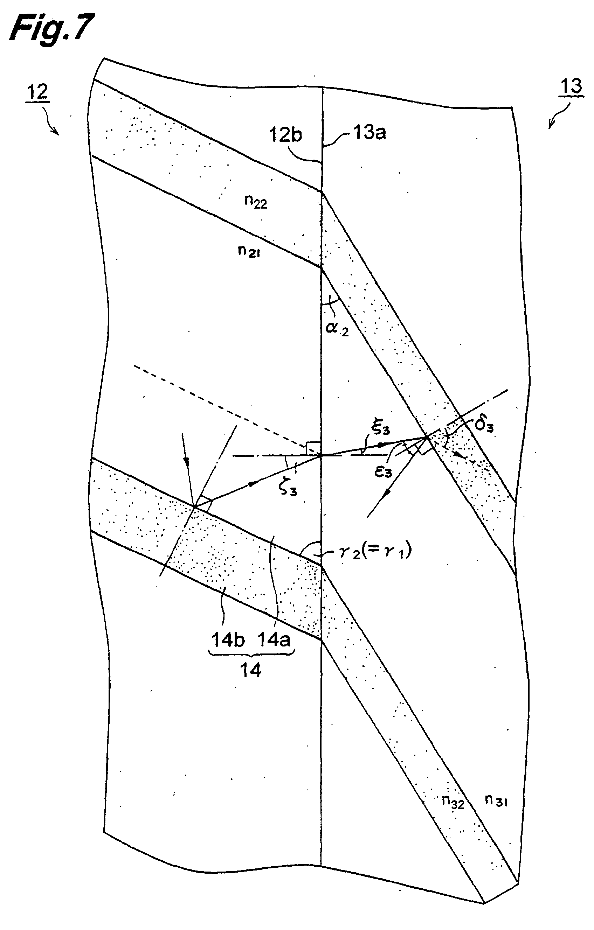

A case where the light incident on the entrance surface 13a of the output optical member 13 from the exit surface 12b of the intermediate optical member 12 propagates while being refracted and reflected by the core/cladding interface of the optical fibers 14 constituting the output optical member 13 as shown in Fig. 7 will now be considered. Here, let $n_{31}$ and $n_{32}$ be the respective refractive indices of the core 14a and cladding 14b of the optical fibers 14 constituting the output optical member 13. Also, let $\alpha_2$ be the angle formed between the optical axis of the output optical member 13 and its entrance surface 13a, $\zeta_3$ be the angle of incidence of light incident on the entrance surface 13a of the output optical member 13 from the exit surface 12b of the intermediate optical member 12, $\xi_3$ be the angle of refraction thereof, $\varepsilon_3$ be the angle of incidence of light incident on the cladding 14b of the output optical member 13 from its core 14a, and $\delta_3$ be the angle of refraction thereof. Here, the angle $\gamma_2$ formed between the optical axis of the intermediate optical member 12 and its exit surface 12b equals $\gamma_1$.

According to the total reflection condition of the intermediate optical member 12, $\zeta_3$ is within the range satisfying

$$\sin(\gamma_2 - \zeta_3) > n_{22}/n_{21}. \tag{9}$$

Also, $\zeta_3$ and $\xi_3$ satisfy a relationship of

$$n_{21}\sin\zeta_3 = n_{31}\sin\xi_3 \tag{10}$$

according to the law of refraction.

On the other hand, $\alpha_2$, $\xi_3$, and $\varepsilon_3$ have a relationship of

$$\alpha_2 + (90° - \xi_3) + (90° - \varepsilon_3) = 180° \tag{11}$$

as seen from Fig. 7.

Therefore, if at least a part of $\xi_3$ satisfying both of expressions (9) and (10) satisfies the total reflection condition in the core/cladding interface

$$\sin\varepsilon_3 > n_{32}/n_{31} \tag{12}$$

under the condition of expression (11), then at least a part of the light incident on the entrance surface 13a of the output optical member 13 from the exit surface 12b of the intermediate optical member 12 propagates through the output optical member 13 while satisfying the total reflection condition.

In the optical device 10 in accordance with this embodiment, $n_{21} = 1.82$, $n_{22} = 1.495$, $n_{31} = 1.82$, and $n_{32} = 1.495$, whereas $\alpha_2$ is 31° in order for the demagnification in the a-axis direction and that in the b-axis direction to match each other (similar reduction). Therefore, in the optical device in accordance with this embodiment, of the light incident on the entrance surface 13a of the output optical member 13 from the exit surface 12b of the intermediate optical member 12, about 50% of light in terms of the light-receiving angle ratio (incident angle range satisfying the total reflection condition/whole incident angle × 100) is transmitted through the output optical member 13, while satisfying the total reflection condition.

Also, since the angle $\alpha_2$ formed between the optical axis and the entrance surface 13a is set to 31° , and the exit surface 13b is made perpendicular to the optical axis, the output optical member 13 acts to reduce the optical image incident on the entrance surface 13a to 0.52 (sin31° ) in size in the b-axis direction and output thus reduced image to the exit surface 13b.

Because of the foregoing configuration, the optical device 10 in accordance with this embodiment acts to reduce the optical image formed on the entrance surface 11a of the input optical member 11 to 0.52 in size in each of the a- and b-axis directions and transmit thus reduced image to the exit surface 13b of the output optical member 13.

Effects of the optical device in accordance with this embodiment will now be explained. In the optical device 10 in accordance with this embodiment, since each of the angle formed between the respective optical axes of the input optical member 11 and intermediate optical member 12 and the angle formed between the respective optical axes of the intermediate optical member 12 and output optical member 13 is made smaller than the angle formed between the respective optical axes of the input optical member 11 and output optical member 13, nearly 100% of the light incident on the entrance surface 12a of the intermediate optical member 12 from the exit surface 11b of the input optical member 11 satisfies the total reflection condition within the optical fibers 14 constituting the intermediate optical member 12, whereas about 50% of the light incident on the entrance surface 13a of the output optical member 13 from the exit surface 12b of the intermediate optical member 12 satisfies the total reflection condition within the optical fibers 14 constituting the output optical member 13.

As a result, the optical image incident on the entrance surface 11a of the input optical member 11 can efficiently be transmitted to the exit surface 13b of the output optical member 13.

Also, without using any scattering surface at junction surfaces between the individual optical members, optical images can be transmitted, whereby output images with a very high resolution can be obtained, and no fine processing of scattering surfaces and the like will be needed.

Also, the optical device 10 in accordance with this embodiment satisfies the relationships of $\alpha_1 < \beta_1$, $\alpha_2 < \beta_2$, $\gamma_1 = \gamma_2$, whereas a line parallel to both of the entrance surface 11a and exit surface 11b of the input optical member 11 and a line parallel to both of the entrance surface 13a and exit surface 13b of the output optical member 13 are orthogonal to each other. Hence, the input optical member 11 can reduce the incident image in a specific direction (a-axis direction), whereas the output optical member 13 can reduce the incident image in a direction (b-axis direction) perpendicular to the above-mentioned specific direction. As a consequence, an output image two-dimensionally reducing the optical image incident on the entrance surface 11a of the input optical member 11 can be obtained from the exit surface 13b of the output optical member 13. Further, appropriately adjusting $\alpha_1$, $\beta_1$, $\alpha_2$, and $\beta_2$ enables the demagnification to vary.

Also, in the optical device 10 in accordance with this embodiment, since $\beta_1$ and $\beta_2$ are at right angles with respect to the optical axis, an output pattern efficiently reducing the optical image incident on the entrance surface 11a of the input optical member 11 can be obtained from the exit surface 13b of the output optical member 13.

In the optical device 10 in accordance with this embodiment, various modifications can be considered concerning the angle formed between the optical axis and the entrance surface 11a in the input optical member 11, the angle formed between the optical axis and the entrance surface 12a in the intermediate optical member 12, the angle formed between the optical axis and the entrance surface 13a in the output optical member 13, and the like.

Table 2 shows relationships between the light-receiving angle ratio and the reduction efficiency under various angular conditions. In this table, $\gamma_1$ is the angle formed between the optical axis and the entrance surface 12a in the intermediate optical member 12, $\alpha_2$ is the angle formed between the optical axis and the entrance surface 13a in the output optical member 13, A is the light-receiving angle ratio in the intermediate optical member 12, B is the light-receiving angle ratio in the output optical member 13, and m is the demagnification. Also, the refractive indices of the core 14a and cladding 14b of the optical fibers 14 constituting the individual optical members are as shown in Table 1.

TABLE 2

| $\gamma_1$ | $\alpha_2$ | A | B | m |
|---|---|---|---|---|
| 66.0° | 31.0° | 100% | 50% | 1:1.94 |
| 55.0° | 20.0° | 50% | 50% | 1:2.92 |
| 49.5° | 14.5° | 25% | 50% | 1:3.99 |
| 49.5° | 9.0° | 25% | 25% | 1:6.39 |

Also, changes in demagnification upon altering the numerical aperture N. A. of the optical fibers 14 constituting the input optical member 11 are shown in Table 3. Specifically, while the respective refractive indices $n_{31}$ and $n_{32}$ of the core 14a and cladding 14b of the optical fibers 14 constituting the intermediate optical member 12 and output optical member 13 and the refractive index $n_{12}$ of the cladding 14b of the optical fibers 14 forming the input optical member 11 identical to those shown in Table 1 were employed, the refractive index $n_{11}$ of the core 14a of the optical fibers 14 constituting the input optical member 11 is varied within the range of 1.52 to 1.56, and the resulting changes in demagnification m were studied. Here, the angle $\gamma_1$ formed between the optical axis and the entrance surface 12a in the intermediate optical member 12 was determined such that nearly 100% of the light incident on the entrance surface 12a of the intermediate optical member 12 from the exit surface 11b of the input optical member 11 was allowed to propagate while satisfying the total reflection condition, whereas the angle $\alpha_2$ formed between the optical axis and the entrance surface 13a in the output optical member 13 was determined such that about 50% of the light incident on the entrance surface 13a of the output optical member 13 from the exit surface 12b of the intermediate optical member 12 was allowed to propagate while satisfying the total reflection condition (i.e., the light-receiving angle ratio was constant).

TABLE 3

| N.A. | $n_{11}$ | $\gamma_1$ | $\alpha_2$ | m |
|---|---|---|---|---|
| 0.00 | 1.520 | 55.0° | 55.0° | 1:∞ |
| 0.10 | 1.523 | 58.0° | 23.0° | 1:2.6 |
| 0.20 | 1.533 | 61.3° | 26.3° | 1:2.3 |
| 0.30 | 1.550 | 64.6° | 29.6° | 1:2.0 |
| 0.35. | 1.560 | 66.0° | 31.0° | 1:1.94 |

As can be seen from the results of Table 3, as the numerical aperture of the input optical member 11 is made smaller as compared with those of the intermediate optical member 12 and output optical member 13, the demagnification can be enhanced while the light-receiving angle ratio is kept constant.

(2) Imaging Unit Using Optical Device According to Embodiment of Present Invention

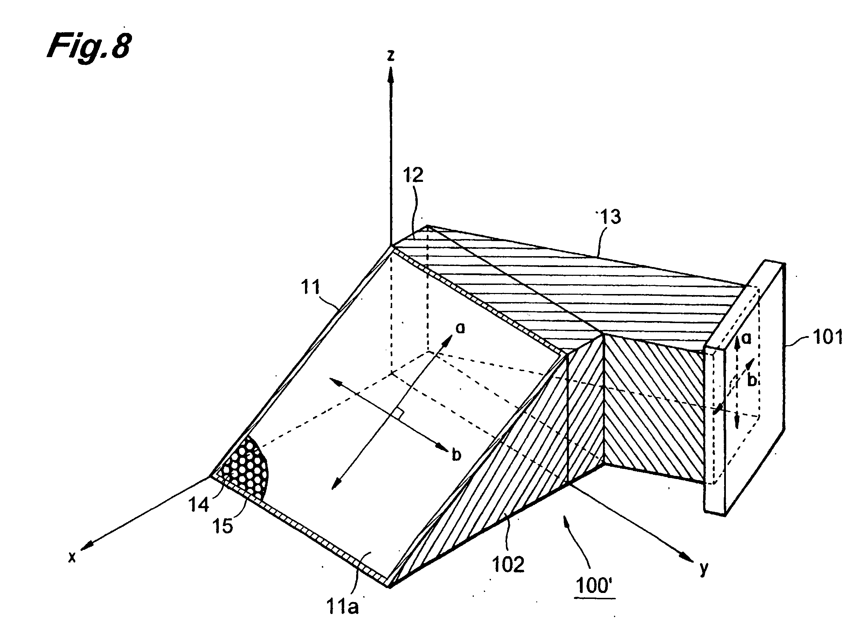

An imaging unit using the optical device in accordance with the above-mentioned embodiment will now be explained with reference to a drawing. First, the configuration of the imaging unit using the optical device in accordance with the above-mentioned embodiment will be explained. The imaging unit 100 comprises, as shown in Fig. 8, the above-mentioned optical device 10 (i.e., optical device 10 comprising the input optical member 11, the intermediate optical member 12, and the output optical member 13) and a CCD 101 disposed in contact with the exit surface 13b of the output optical member 13. Here, more specifically, the exit surface 13b of the output optical member 13 is in contact with the light-receiving surface of the CCD 101.

Further, all the surfaces (hereinafter referred to as side faces) of the input optical member 11 excluding the entrance surface 11a and exit surface 11b, the side faces of the intermediate optical member 12, and the side faces of the output optical member 13 are provided with a light-shielding material 102 (see the hatched areas of Fig. 8).

The side faces of each optical member can be provided with the light-shielding material 102 by a method in which the entrance surface and exit surface of each optical member are masked and then a light-shielding agent (e. g., black paint) is sprayed on the side faces, a method in which the light-shielding agent is applied to the side faces with a brush, a method in which the optical member is immersed into a vessel filled with the light-shielding agent, or the like.

Operations and effects of the imaging unit using the optical device in accordance with the above-mentioned embodiment will now be explained. Since the imaging unit 100 comprises the above-mentioned optical device 10, the optical image incident on the entrance surface 11a of the input optical member 11 can efficiently be transmitted to the exit surface 13b of the output optical member 13.

Also, since the CCD 101 is disposed in contact with the exit surface 13b of the output optical member 13, the imaging unit 100 can capture the optical image transmitted to the exit surface 13b of the output optical member 13.

Further, in the imaging unit 100, since the light-shielding material 102 is disposed on the side faces of each optical member, light is prevented from entering each optical member from the side faces thereof, whereby the S/N ratio can be enhanced.

As a result, the imaging unit 100 can capture a clear, high-contrast, high-resolution, reduced image.

(3) Imaging Apparatus Using Optical Device According to Embodiment of Present Invention

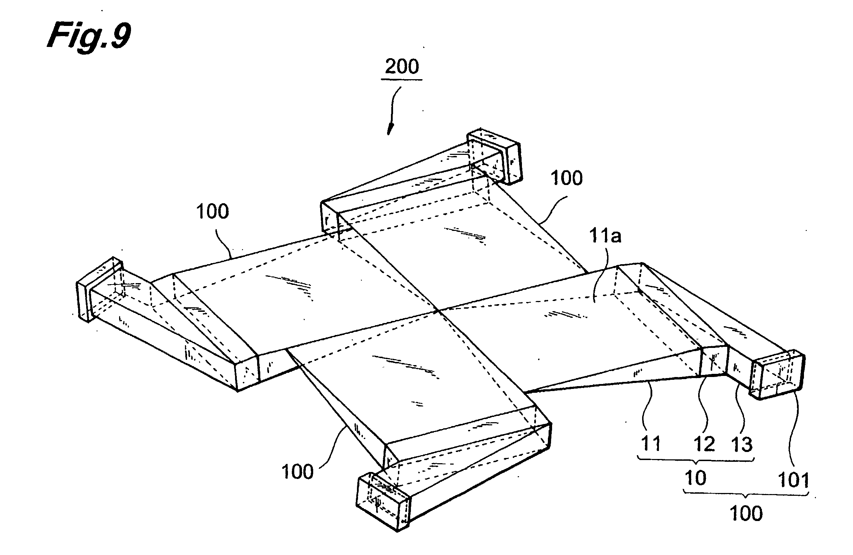

An imaging apparatus using the optical device in accordance with the above-mentioned embodiment will now be explained with reference to a drawing. First, the configuration of the imaging apparatus using the optical device in accordance with the above-mentioned embodiment will be explained. As shown in Fig. 9, the imaging apparatus 200 has four sets of imaging units 100 mentioned above, and is configured such that the individual imaging units 100 are arranged such that the respective entrance surfaces 11a of the input optical members 11 constituting the individual imaging units 100 align on substantially the same plane.

Operations and effects of the imaging apparatus using the optical device in accordance with the above-mentioned embodiment will now be explained. Since the imaging apparatus 200 comprises the above-mentioned imaging unit 100, it can capture a clear, high-contrast, high-resolution, reduced image.

Further, in the imaging apparatus 200, the four sets of imaging units 100 are arranged such that the respective entrance surfaces 11a of the input optical members 11 constituting the individual imaging units 100 align on substantially the same plane. Hence, the light-receiving surface capable of inputting optical images can be enlarged. Here, though a reduced image is divided into the individual CCDs 101 so as to be captured thereby, the whole reduced image can be reproduced when the images captured by the individual CCDs 101 are combined by an image processing unit or the like.

Also, since the imaging apparatus 200 has a very simple configuration comprising a plurality of simple optical members and CCDs, it can be made quite inexpensively as compared with tapered fiber optical members and the like which are similarly made in order to enlarge the light-receiving surface.

Further, in the imaging apparatus 200, since a plurality of imaging units each combining a plurality of optical members together are arranged, the respective CCDs 101 in the individual imaging units 100 would not be placed at positions adjoining each other. As a result, there would be no restriction in terms of arrangement caused by the fact that the outer shape of the CCD 101 is greater than its effective light-receiving surface.

(4) Radiation Image Sensor Using Optical Device According to Embodiment of Present invention

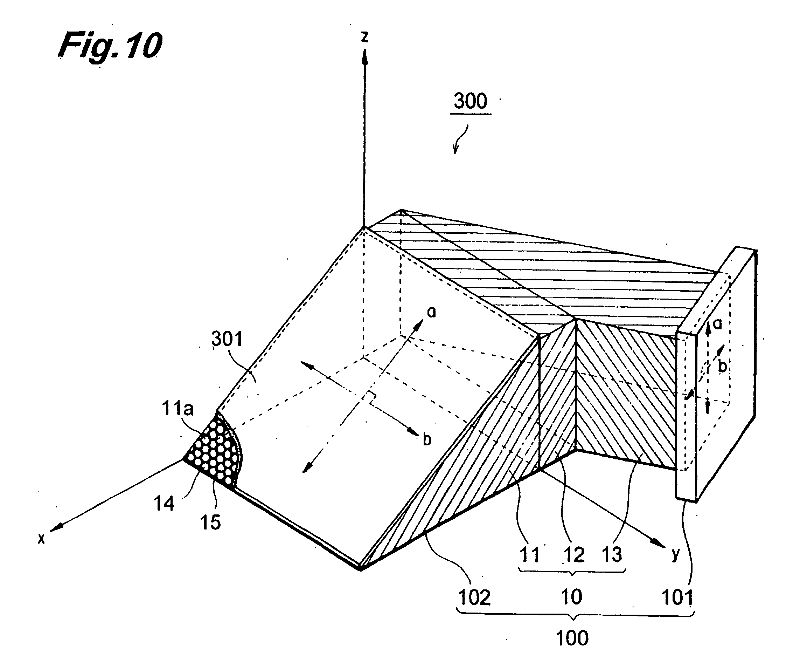

A radiation image sensor using the optical device in accordance with the above-mentioned embodiment will now be explained with reference to drawings. First, the configuration of the radiation image sensor using the optical device in accordance with the above-mentioned embodiment will be explained. The radiation image sensor 300 comprises, as shown in Fig. 10, the above-mentioned imaging unit 100 (i.e., imaging unit 100 comprising the input optical member 11, the intermediate optical member 12, the output optical member 13, the CCD 101, and the light-shielding material 102), and a phosphor 301 which is disposed on the entrance surface 11a of the input optical member 11 constituting the above-mentioned imaging unit 100 and is adapted to emit light upon incidence of a radiation. As the material of the phosphor 301, $Gd_2O_2S$:Tb or the like may be used, for example.

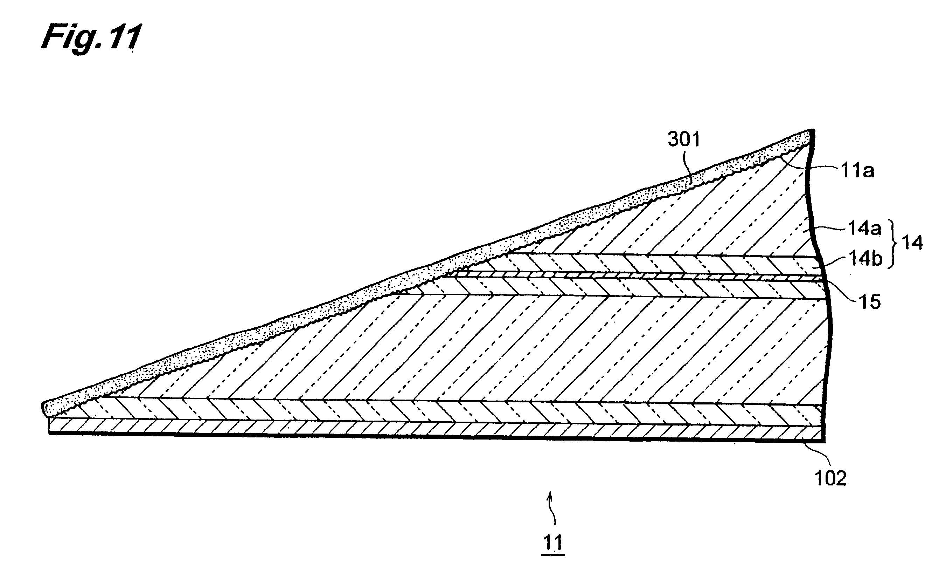

Here, as shown in Fig. 11, which is an enlarged sectional view of the input optical member 11 taken along a plane parallel to the xz plane of Fig. 10, the entrance surface 11a of the input optical member 11 is ground such that the center-line average roughness lies within the range of 0.20 to 0.80 μm (hereinafter referred to as roughly ground). A ground surface having such a range of center-line average roughness can easily be formed, for example, when the surface is ground with an abrasive in which abrasive grains have an average diameter on the order of 6 to 30 μm (e. g., Green Carborundum abrasive grains).

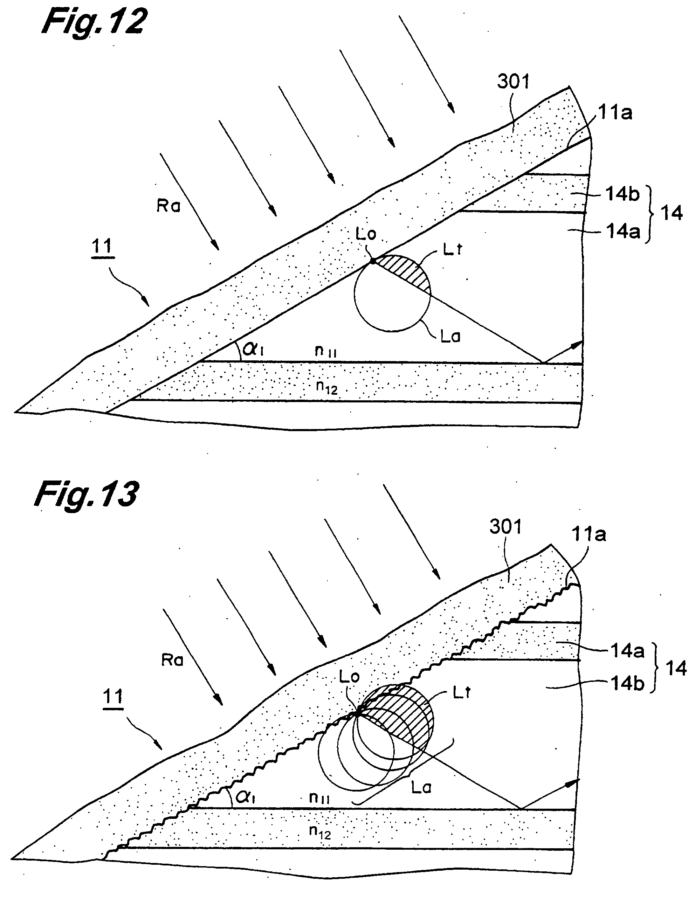

Operations and effects of the radiation image sensor using the optical device in accordance with the above-mentioned embodiment will now be explained. First, a case where light emitted by the radiation incident on the phosphor 301 enters the input optical member 11 will be considered. Fig. 12 shows the state of incidence of light in the case where the entrance surface 11a is not roughly ground, whereas Fig. 13 shows the state of incidence of light in the case where the entrance surface 11a is roughly ground as in the above-mentioned radiation image sensor 300. As shown in Figs. 12 and 13, the light emitted at a specific point $L_0$ within the phosphor 301 by the radiation $R_a$ incident on the entrance surface 11a from the normal direction of the entrance surface 11a enters the input optical member 11 as diffused light having a maximum intensity in the normal direction of the entrance surface 11a. $L_a$ is a circle indicating the advancing direction and intensity of the light emitted at $L_0$. Namely, the length of the chord formed by a line drawn from $L_0$ in a specific direction and this circle indicates the intensity of light advancing in the specific direction. Also, the hatched area $L_t$ indicates, of the light emitted at $L_0$, the part propagating through the input optical member 11 while satisfying the total reflection condition.

Here, as shown in Fig. 12, the part of light $L_t$ propagating through the input optical member 11 while satisfying the total reflection condition is quite small in the case where the entrance surface 11a is not roughly ground; whereas, as shown in Fig. 13, in the case where the entrance surface 11a is roughly ground, diffused light is scattered so as to have the maximum intensity in various directions, whereby the part of light (hatched area $L_t$) propagating through the input optical member 11 while satisfying the total reflection condition becomes quite large.

Also, since the radiation image sensor 300 comprises the above-mentioned optical device 10, it can efficiently transmit the optical image incident on the entrance surface 11a of the input optical member 11 to the exit surface 13b of the output optical member 13, so that this optical image can be captured by the CCD 101.

As a result, the radiation image sensor 300 can capture, in a clear, high-contrast, high-resolution state, a reduced image of the radiation image incident on the phosphor 301.

Also, since the radiation image sensor 300 combines three optical members together, the position where the CCD 101, which is a sensor section, is disposed deviates from the part directly below the entrance surface 11a of the input optical member 11, which is a detection surface, whereby the influences of damage or noise received by the sensor section from the radiation incident on the detection surface can be reduced.

(5) Fingerprint Identifying Apparatus Using Optical Device According to Embodiment of Present Invention

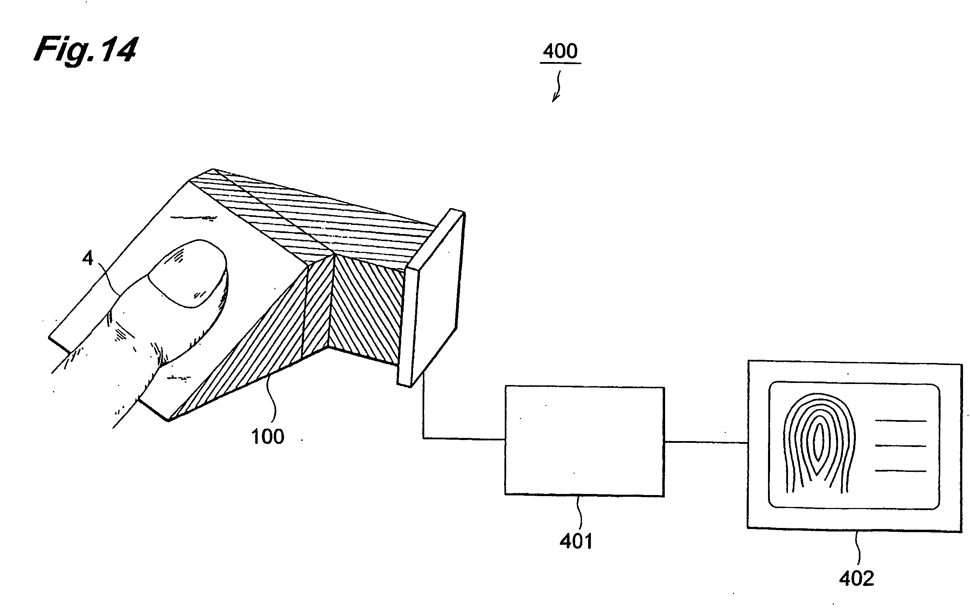

A fingerprint identifying apparatus using the optical device in accordance with the above-mentioned embodiment will now be explained with reference to a drawing. First, the configuration of the fingerprint identifying apparatus using the optical device in accordance with the above-mentioned embodiment will be explained. Fig. 14 is a schematic configurational view of the fingerprint identifying apparatus 400 using the optical device in accordance with the above-mentioned embodiment. The fingerprint identifying apparatus 400 comprises an imaging unit for capturing an image of a fingerprint, an information processing unit 401 which is a fingerprint identifying section for identifying the fingerprint image captured by the above-mentioned imaging unit with a reference pattern registered beforehand, and a display 402 which is a display section for displaying a result of identification obtained by the information processing unit 401.

As the imaging unit for capturing the fingerprint, the imaging unit 100 using the optical device in accordance with the above-mentioned embodiment explained in the foregoing is employed.

The information processing unit 401 comprises a memory for temporarily storing the fingerprint image outputted from the imaging unit 100, a storage device for storing the reference pattern, and an arithmetic unit for identifying the fingerprint image captured by the imaging unit with the reference pattern stored in the storage device.

Operations and effects of the fingerprint identifying apparatus using the optical device in accordance with the above-mentioned embodiment will now be explained. When a finger 4 is brought into contact with the entrance surface 11a of the input optical member 11 constituting the imaging unit 100, then, as explained with reference to Fig. 4, the fingerprint image is transmitted to the exit surface 13b of the output optical member 13 and is captured by the CCD 101.

The fingerprint image captured by the CCD 101 constituting the imaging unit 100 is outputted to the information processing unit 401 and is temporarily stored in the memory. Thereafter, the fingerprint image is identified by the arithmetic unit with the reference pattern registered in the storage device beforehand, and the result of identification is displayed on the display 402 together with the captured fingerprint image and the like.

Since the fingerprint identifying apparatus 400 comprises the above-mentioned optical device 10, it can efficiently transmit the optical image incident on the entrance surface 11a of the input optical device 11 to the exit surface 13b of the output optical member 13. Hence, the CCD 101 can capture a clear, high-contrast, high-resolution, reduced image. As a result, the fingerprint identifying apparatus 400 enables fingerprint identification with a high accuracy with less misidentification.

(6) Modified Examples of Optical Device According to Embodiment of Present Invention

i) First Modified Example

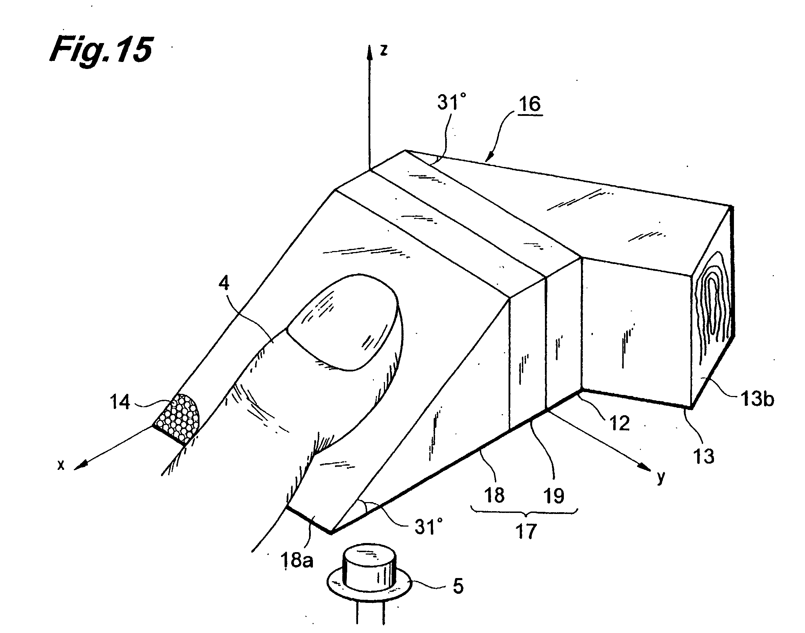

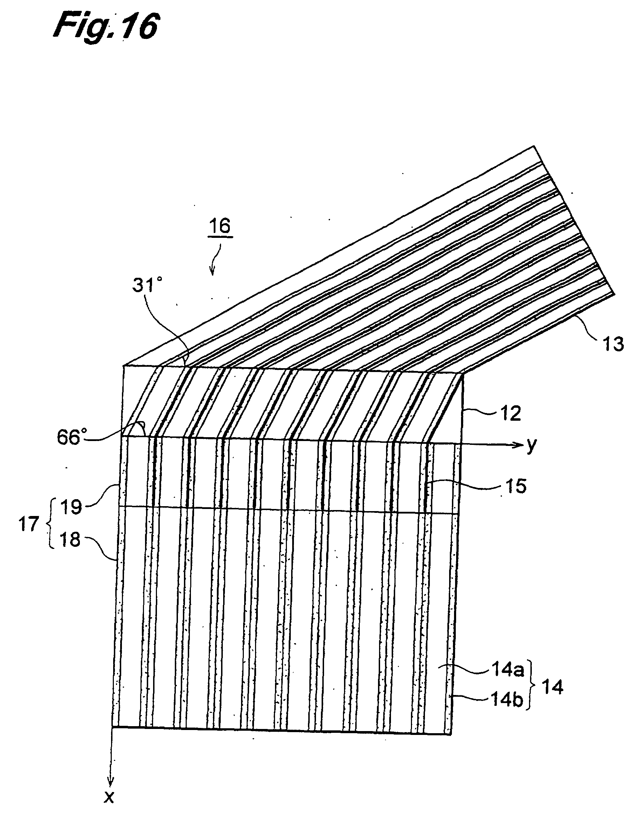

The optical device in accordance with a first modified example will now be explained with reference to drawings. First, the configuration of the optical device in accordance with the first modified example will be explained. Fig. 15 shows the configuration of the optical device 16 in accordance with this modified example. The optical device 16 in accordance with this modified example structurally differs from the optical device 10 in accordance with the above-mentioned embodiment in that, while the gaps among the individual optical fibers 14 in the input optical member 11 used in the optical device 10 in accordance with the above-mentioned embodiment are filled with the light-absorbing material 15, the input optical member 17 used in the optical device 16 in accordance with this modified example is constituted by a first member 18 in which the gaps among the individual optical fibers 14 are not filled with the light-absorbing material 15 and a second member 19 in which the gaps among the individual optical fibers 14 are filled with the light-absorbing material 15. The first member 18 is constituted by an optical member composed of a number of optical fibers 14 arranged parallel to each other and integrally formed while the gaps among the individual optical fibers 14 are not filled with the light-absorbing material 15, wherein its entrance surface 18a forms an angle of 31° with the optical axis such that the incident light from the air does not satisfy the total reflection condition, whereas its exit surface 18b is perpendicular to the optical axis. Also, the second member 19 is constituted by an optical member composed of a number of optical fibers 14 arranged parallel to each other and integrally formed while the gaps among the individual optical fibers 14 are filled with the light-absorbing material 15, wherein its entrance surface 19a and exit surface 19b are perpendicular to the optical axis. The entrance surface 19a of the second member 19 is in contact with the exit surface 18b of the first member 18, whereas the exit surface 19b of the second member 19 is in contact with the entrance surface 12a of the intermediate optical member 12. Also, both of the optical axes of the first member 18 and second member 19 are parallel to the xy plane of Fig. 15. Consequently, when the optical device 16 is cut along a plane parallel to the xy plane in Fig. 15, a cross section shown in Fig. 16 is obtained.

Operations and effects of the optical device in accordance with the first modified example will now be explained. For example, when the optical device 16 is used for reducing and transmitting a fingerprint image, as shown in Fig. 15, the finger 4 is brought into contact with the entrance surface 18a of the first member 18 constituting the input optical member 17, and light is projected by an LED 5 or the like from below the first member 18. The light projected from the LED 5 or the like is transmitted through the first member 18 of the input optical member 17 from the bottom to the top and is reflected by the entrance surface 18a. If a protrusion of the fingerprint is in contact with the entrance surface 18a, then the projected light is not reflected at this portion and is absorbed. As a consequence, the light reflected by the part other than the contact portion of protrusions of the fingerprint is transmitted through each optical member and is outputted from the exit surface 13b of the output optical member 13 as a fingerprint pattern.

In particular, the second member 19 acts to prevent the S/N ratio of the detected image from deteriorating due to the illumination light emitted from the LED 5 or the like directly entering the intermediate optical member 12 or the light scattered within the first member 18 constituting the input optical member 17 entering the intermediate optical member 12.

As with the optical device 10 in accordance with the above-mentioned embodiment, the optical device 16 can efficiently transmit the optical image incident from the entrance surface 18a of the first member 18 constituting the input optical member 17 to the exit surface 13b of the output optical member 13.

ii) Second Modified Example

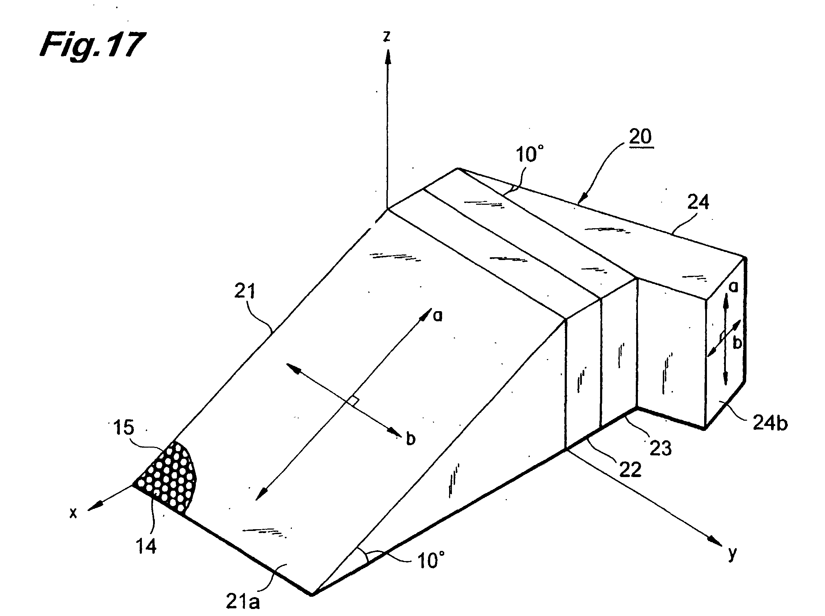

The optical device in accordance with a second modified example will now be explained with reference to drawings. First, the configuration of the optical device in accordance with the second modified example will be explained. Fig. 17 shows the configuration of the optical device 20 in accordance with this modified example. The optical device 20 comprises, as shown in Fig. 17, an input optical member 21, a first intermediate optical member 22, a second intermediate optical member 23, and an output optical member 24.

Each of the input optical member 21, first intermediate optical member 22, second intermediate optical member 23, and output optical member 24 is composed of a number of optical fibers 14 arranged parallel to each other and integrally formed. In the optical fibers 14 constituting each optical member, the refractive index of the core 14a, the refractive index of the cladding 14b, and the numerical aperture are as shown in Table 4.

TABLE 4

|  | Core Refractive Index | Cladding Refractive Index | Numerical Aperture |
|---|---|---|---|
| Input Optical Member | 1.56 | 1.52 | 0.35 |
| 1st Intermediate Optical Member | 1.82 | 1.495 | 1.0 |
| 2nd Intermediate Optical Member | 1.82 | 1.495 | 1.0 |
| Output Optical Member | 1.82 | 1.495 | 1.0 |

Also, gaps among the individual optical fibers 14 constituting each optical member are filled with a light-absorbing material 15.

The input optical member 21 has an entrance surface 21a which is obliquely cut with respect to the optical axis at an angle of 10° and an exit surface 21b which is perpendicularly cut with respect to the optical axis, whereby an optical image incident on the entrance surface 21a can be outputted to the exit surface 21b while being reduced in a specific direction. Also, the angle (10°) formed between the optical axis and the entrance surface 21a is such an angle that the light incident on the entrance surface 21 from the air does not satisfy a total reflection condition within the optical fibers 14 constituting the input optical member 21.

The first intermediate optical member 22 has an entrance surface 22a which is obliquely cut with respect to the optical axis at an angle of 66° and an exit surface 22b which is cut parallel to the entrance surface 22a, whereby an optical image incident on the entrance surface 22a can be outputted to the exit surface 22b.

The second intermediate optical member 23 has an entrance surface 23a which is obliquely cut with respect to the optical axis at an angle of 35° and an exit surface 23b which is cut parallel to the entrance surface 23a, whereby an optical image incident on the entrance surface 23a can be outputted to the exit surface 23b.

The output optical member 24 has an entrance surface 24a which is obliquely cut with respect to the optical axis at an angle of 10° and an exit surface 24b which is perpendicularly cut with respect to the optical axis, whereby an optical image incident on the entrance surface 24a can be outputted to the exit surface 24b while being reduced in a specific direction.

The exit surface 21b of the input optical member 21 and the entrance surface 22a of the first intermediate optical member 22 are in contact with each other, the exit surface 22b of the first intermediate optical member 22 and the entrance surface 23a of the second intermediate optical member 23 are in contact with each other, and the exit surface 23b of the second intermediate optical member 23 and the entrance surface 24a of the output optical member 24 are in contact with each other. In particular, a line parallel to both of the entrance surface 21a and exit surface 21b of the input optical member 21 and a line parallel to both of the entrance surface 24a and exit surface 24b of the output optical member 24 are perpendicular to each other. As a consequence, the optical image incident on the entrance surface 21a of the input optical member 21 is reduced in the a-axis direction of Fig. 17 by the input optical member 21 and is reduced in the b-axis direction perpendicular to the a-axis direction by the output optical member 24, so as to be outputted from the exit surface 24b of the output optical member 24.

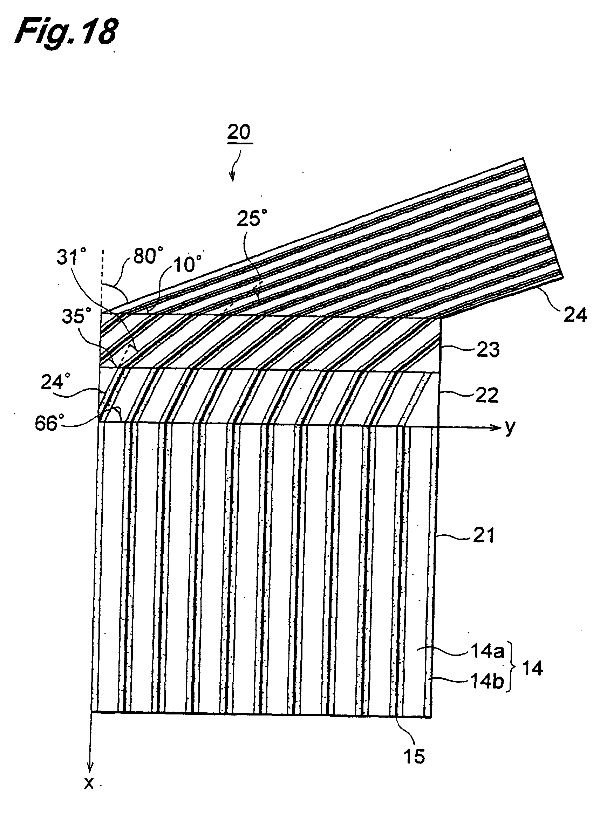

The optical axes of the input optical member 21, first intermediate optical member 22, second intermediate optical member 23, and output optical member 24 are parallel to the xy plane of Fig. 17, whereas Fig. 18 shows a cross-sectional view of the optical device 20 taken along a plane parallel to the xy plane in Fig. 17. Here, since the angle formed between the entrance surface 22a of the first intermediate optical member 22 and its optical axis is 66°, the angle formed between the entrance surface 23a of the second intermediate optical member 23 and its optical axis is 35°, and the angle formed between the entrance surface 24a of the output optical member 24 and its optical axis is 10°, the angle formed between the optical axis of the input optical member 21 and the optical axis of the first intermediate optical member 22 becomes 24°, the angle formed between the optical axis of the first intermediate optical member 22 and the axis of the second intermediate optical member 23 becomes 31°, and the angle formed between the optical axis of the second intermediate optical member 23 and the optical axis of the output optical member 24 becomes 25°, whereby each of them is smaller than 80°, i.e., the angle formed between the optical axis of the input optical member 21 and the optical axis of the output optical member 24.

Further, the angle (24°) formed between the optical axis of the input optical member 21 and the optical axis. of the first intermediate optical member 22 is such an angle that nearly 100% of the light incident on the entrance surface 22a of the intermediate optical member 22 from the exit surface 21b of the input optical member 21 satisfies a total reflection condition within the optical fibers 14 constituting the first intermediate optical member 22. Also, the angle (31°) formed between the optical axis of the first intermediate optical member 22 and the optical axis of the second intermediate optical member 23 is such an angle that about 56% of the light incident on the entrance surface 23a of the second intermediate optical member 23 from the exit surface 22b of the first intermediate optical member 22 satisfies a total reflection condition within the optical fibers 14 constituting the second intermediate optical member 22, whereas the angle (25°) formed between the optical axis of the second intermediate optical member 23 and the optical axis of the output optical member 24 is such that about 64% of the light incident on the entrance surface 24a of the output optical member 24 from the exit surface 23b of the second intermediate optical member 23 satisfies a total reflection condition within the optical fibers 14 constituting the output optical member 24.

Operations and effects of the optical device in accordance with the second modified example will now be explained. In the optical device 20, since each of the angle formed between the respective optical axes of the input optical member 21 and first intermediate optical member 22, the angle formed between the respective optical axes of the first intermediate optical member 22 and second intermediate optical member 23, and the angle formed between the respective optical axes of the second intermediate optical member 23 and output optical member 24 is made smaller than the angle formed between the respective optical axes of the input optical member 21 and output optical member 24, even when the angle formed between the respective optical axes of the input optical member 21 and output optical member 24 is a very large angle of 80°, the optical image incident on the entrance surface 21a of the input optical member 21 can efficiently be transmitted to the exit surface 24b of the output optical member 24 while satisfying the total reflection condition within the optical fibers 14 constituting each optical member.

In the optical device 20 in accordance with this modified example, various modifications can be considered concerning the angle formed between the optical axis and the entrance surface 21a in the input optical member 21, the angle formed between the optical axis and the entrance surface 22a in the first intermediate optical member 22, the angle formed between the optical axis and the entrance surface 23a in the second intermediate optical member 23, the angle formed between the optical axis and the entrance surface 24a in the output optical member 24, and the like.

For example, Table 5 shows, in the case where the angle $\gamma_3$ formed between the optical axis and the entrance surface 23a of the second intermediate optical member 23 is set to various angles, of the light incident on the entrance surface 21a of the input optical member 21, the ratio of light C (product of the respective light-receiving angle ratios of the individual optical members) transmitted to the exit surface 24b of the output optical member 24 while satisfying the total reflection condition. Here, the angle formed between the optical axis of the first optical member 22 and the entrance surface 22a in the first intermediate optical member 22 is set to an angle of 66° such that nearly 100% of the light incident on the entrance surface 22a of the first intermediate optical member 22 from the exit surface 21b of the input optical member 21 propagates through the first intermediate optical member 22 while satisfying the total reflection condition within the optical fibers 14 constituting the first intermediate optical member 22, whereas the angle formed between the optical axis and the entrance surface 24a in the output optical member 24 is set to 10° in order to secure the demagnification. In the column of $\gamma_3$ in the table, "-" indicates the result obtained when the second intermediate optical member 23 is not used.

TABLE 5

| $\gamma_3$ | C |
|---|---|
| - | 20.0% |
| 10.0° | 20.0% |
| 20.0° | 29.4% |
| 30.0° | 34.7% |
| 35.0° | 35.8% |
| 40.0° | 35.9% |
| 55.0° | 30.1% |

As shown in Table 5, in the optical device 20, even when the angle $\gamma_3$ formed between the optical axis and the entrance surface 23a in the second intermediate optical member 23 is changed in a wide range of 10° to 55° , at least a part of the light incident on the entrance surface 21a of the input optical member 21 can be propagated to the exit surface 24b of the output optical member 24 while satisfying the total reflection condition, whereby a clear output image can be obtained. In particular, the highest efficiency is obtained when the angle $\gamma_3$ formed between the optical axis and entrance surface 23a in the second intermediate optical member 23 is set to 35° to 40° , whereby the transmission efficiency remarkably improves as compared with the case where no second intermediate optical member 23 is used.

iii) Third Modified Example

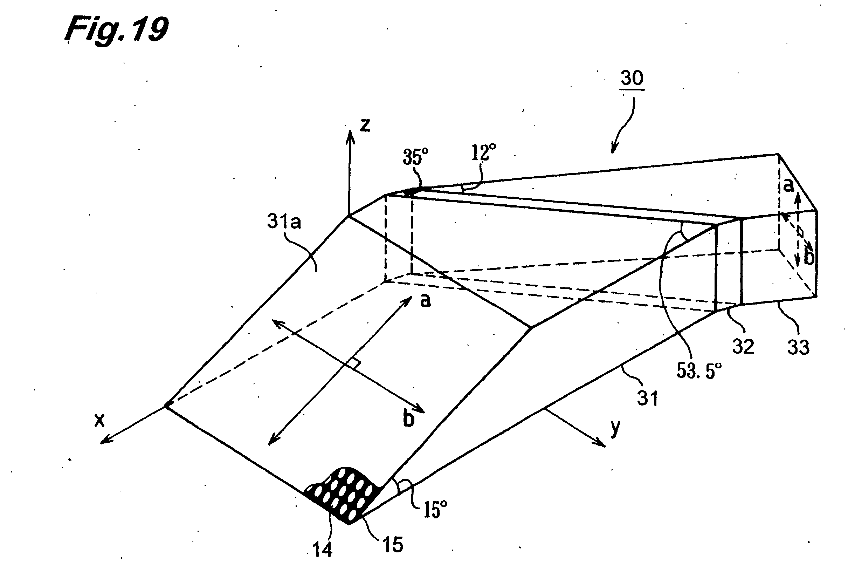

The optical device in accordance with a third modified example will now be explained with reference to drawings. First, the configuration of the optical device in accordance with the third modified example will be explained. Fig. 19 shows the configuration of the optical device 30 in accordance with this modified example. The optical device 30 comprises, as shown in Fig. 19, an input optical member 31, an intermediate optical member 32, and an output optical member 33.

Each of the input optical member 31, intermediate optical member 32, and output optical member 33 is composed of a number of optical fibers 14 arranged parallel to each other and integrally formed. In the optical fibers 14 constituting each optical member, the refractive index of the core 14a, the refractive index of the cladding 14b, and the numerical aperture are as shown in Table 6.

TABLE 6

| | Core Refractive Index | Cladding Refractive Index | Numerical Aperture |
|---|---|---|---|
| Input Optical Member | 1.56 | 1.52 | 0.35 |
| Intermediate Optical Member | 1.82 | 1.495 | 1.0 |
| Output Optical Member | 1.82 | 1.495 | 1.0 |

Also, gaps among the individual optical fibers 14 constituting each optical member are filled with a light-absorbing material 15.

The input optical member 31 has an entrance surface 31a which is obliquely cut with respect to the optical axis (hereinafter referred to as first optical axis) of optical fibers 14 constituting the input optical member 31 at an angle of 15° and an exit surface 31b which is obliquely cut with respect to the first optical axis at an angle of 53.5° (acute angle). Here, a plane (plane parallel to the xy plane of Fig. 19, hereinafter referred to as first reference plane) parallel to the first optical axis and perpendicular to the exit surface 31b and a plane (plane parallel to the xz plane of Fig. 19) parallel to the first optical axis and the entrance surface 31a are perpendicular to each other. Also, the angle (15° ) formed between the first optical axis and the entrance surface 31a is such an angle that the light incident on the entrance surface 31a from the air does not satisfy a total reflection condition within the optical fibers 14 constituting the input optical member 31.

The intermediate optical member 32 has an entrance surface 32a which is obliquely cut with respect to the optical axis (hereinafter referred to as second optical axis) of optical fibers 14 constituting the intermediate optical member 32 at an angle of 35° and an exit surface 32b which is cut parallel to the entrance surface 32a.

The output optical member 33 has an entrance surface 33a which is obliquely cut with respect to the optical axis (hereinafter referred to as third optical axis) of optical fibers 14 constituting the output optical member 33 at an angle of 12° and an exit surface 33b which is cut perpendicular to the third optical axis.

The exit surface 31b of the input optical member 31 and the entrance surface 32a of the intermediate optical member 32 are in contact with each other, whereas the exit surface 32b of the intermediate optical member 32 and the entrance surface 33a of the output optical member 33 are in contact with each other, whereby the incident optical image from the entrance surface 31a of the input optical member 31 is transmitted to the exit surface 33b of the output optical member 33 by way of the intermediate optical member 32.

Here, the first reference plane, a plane (hereinafter referred to as second reference plane) parallel to the second optical axis and perpendicular to the exit surface 32b of the intermediate optical member 32, and a plane (hereinafter referred to as third reference plane) parallel to the third optical axis and perpendicular to the entrance surface 33a of the output optical member 33 are parallel to each other (parallel to the xy plane of Fig. 19). As a consequence, the optical axis of optical fibers 14 constituting each optical member is parallel to the xy plane, whereby the light incident on each optical fiber 14 from the entrance surface 31a of the input optical member 31 advances in parallel with the xy plane.

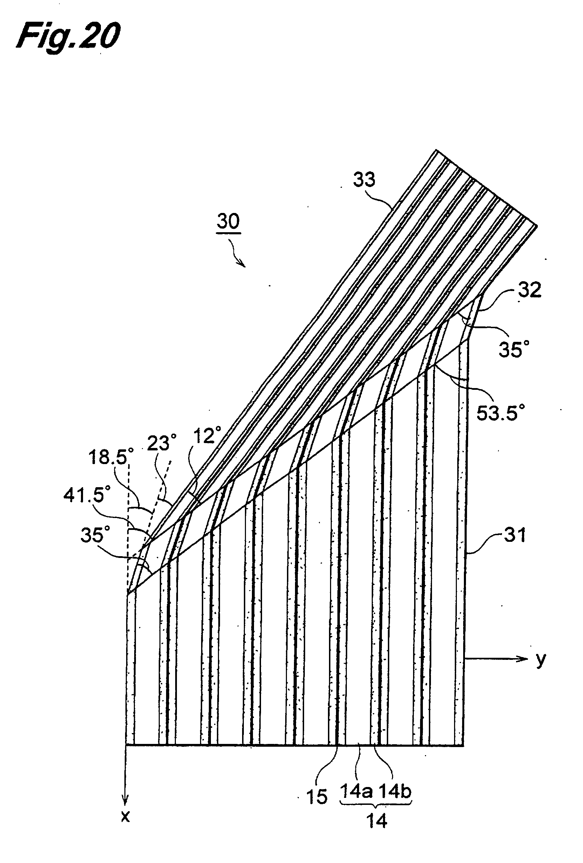

Fig. 20 shows a cross-sectional view of the optical device 30 taken along a plane parallel to the xy plane in Fig. 19. Here, the angle formed between the respective optical axes of the input optical member 31 and intermediate optical member 32 is 18.5° , and the angle formed between the respective optical axes of the intermediate optical member 32 and output optical member 33 is 23° , each being. smaller than 41.5° , i.e., the angle formed between the respective optical axes of the input optical member 31 and output optical member 33. Also, the angle of 35° formed between the second optical axis and the entrance surface 32a of the intermediate optical member 32 on the first reference plane is smaller than the angle of 53.5° formed between the first optical axis and the exit surface 31b of the input optical member 31. On the other hand, since the angle formed between the first and second axes is set to an angle of 18.5° which is the difference between the above-mentioned angles of 53.5° and 35° , the angle of refraction of the optical path (optical fiber 14) at the connecting surface between the input optical member 31 and intermediate optical member 32 is made lower.

Also, the angle of 12° formed between the third optical axis and the entrance surface 33a of the output optical member 33 on the second reference plane is smaller than the angle of 35° formed between the second optical axis and the exit surface 32b of the intermediate optical member 32. On the other hand, since the angle formed between the second and third axes is set to an angle of 23° which is the difference between the above-mentioned angles of 35° and 12° , the angle of refraction of the optical path (optical fiber 14) at the connecting surface between the intermediate optical member 32 and output optical member 33 is made lower.

Operations of the optical device in accordance with this modified example will now be explained. In the imaging device 30, the propagation of the light incident on the input optical member 31 from the air within the input optical member 31 is as explained with reference to Fig. 5 in the description of the optical device 10 in accordance with the above-mentioned embodiment. In the optical device 30, $\alpha_1$ is set to 15° in view of the efficiency of reduction and the light-receiving angle ratio from the intermediate optical member 32 to the output optical member 33.

Here, since the entrance surface 31a of the input optical member 31 is perpendicular to the xz plane of Fig. 19 and forms an angle of 15° with the first optical axis, and the exit surface 31b of the input optical member 31 is perpendicular to the xy plane and forms an angle of 53.5° with the first optical axis, the input optical member 31 acts to output the optical image incident on the entrance surface 31a of the input optical member 31 while reducing it to 1/3.86 (sin15° ) in the a-axis direction of Fig. 19 and enlarging it to 1.24 times (1/sin53.5° ) in the b-axis direction.

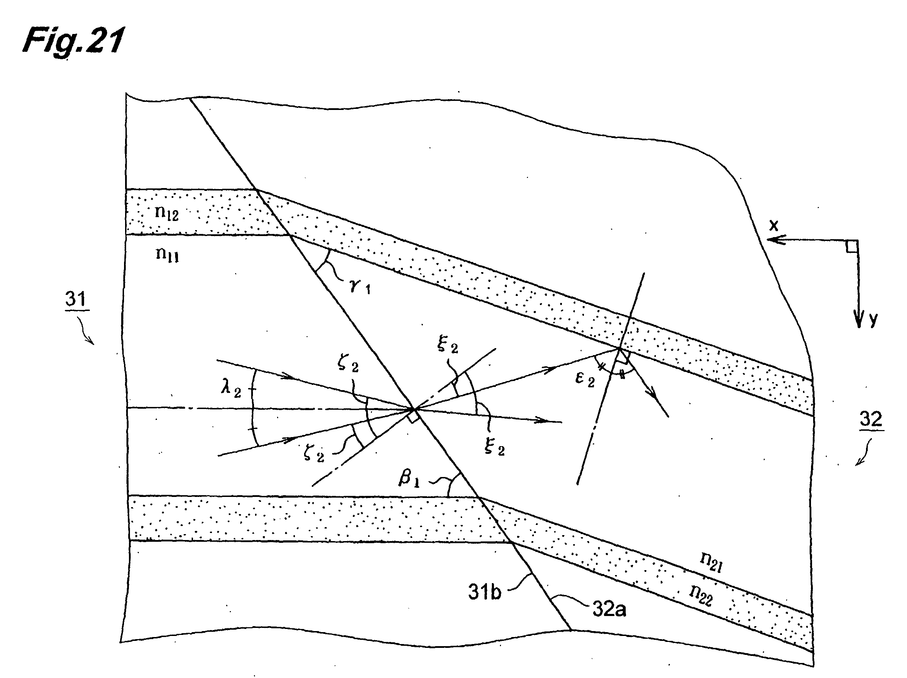

A case where the light incident on the entrance surface 32a of the intermediate optical member 32 from the exit surface 31b of the input optical member 31 propagates while being refracted and reflected by the core/cladding interface of the optical fibers 14 constituting the intermediate optical member 32 as shown in Fig. 21 will now be considered. Here, let $n_{21}$ and $n_{22}$ be the respective refractive indices of the core 14a and cladding 14b of the optical fibers 14 constituting the intermediate optical member 32. Also, let $\gamma_1$ be the angle formed between the second optical axis and the entrance surface 32a of the intermediate optical member 32, $\lambda_2$ be the advancing angle of the light advancing through the input optical member 31 with respect to the first optical axis, $\zeta_2$ be the angle of incidence of light incident on the entrance surface 32a of the intermediate optical member 32 from the exit surface 31b of the input optical member

31, $\xi_2$ be the angle of refraction thereof, $\varepsilon_2$ be the angle of incidence of light incident on the cladding 14b of the optical fibers 14 constituting the intermediate optical member 32 from its core 14a, and $\delta_2$ be the angle of refraction thereof.

According to the total reflection condition of the input optical member 31, $\lambda_2$ is within the range satisfying

$$\sin(90° - \lambda_2) > n_{12}/n_{11}. \tag{13}$$

Since the exit surface 31b of the input optical member 31 intersects the first optical axis at an angle of $\beta_1$, $\lambda_2$ and $\zeta_2$ satisfy a relationship of

$$\zeta_2 = 90° - \beta_1 \pm \lambda_2. \tag{14}$$

Also, $\zeta_2$ and $\xi_2$ satisfy a relationship of

$$n_{11}\sin\zeta_2 = n_{21}\sin\xi_2 \tag{15}$$

according to the law of refraction.

On the other hand, $\gamma_1$, $\xi_2$, and $\varepsilon_2$ have a relationship of

$$\gamma_1 + (90° + \xi_2) + (90° - \varepsilon_2) = 180° \tag{16}$$

as seen from Fig. 21.

Therefore, if at least a part of $\xi_2$ satisfying expressions (13) and (15) satisfies the total reflection condition in the core/cladding interface

$$\sin\varepsilon_2 > n_{22}/n_{21} \tag{17}$$

by using expression (16), then at least a part of the light incident on the entrance surface 32a of the intermediate optical member 32 from the exit surface 31b of the input optical member 31 propagates through the optical fibers 14 constituting the intermediate optical member 32 while satisfying the total reflection condition.

In the optical device 30, since $n_{11} = 1.56$, $n_{12} = 1.52$, $n_{21} = 1.82$, and $n_{22} = 1.495$, the light propagating through the input optical member 31 has an advancing angle $\lambda_2$ of 13° or less with respect to the first optical axis. Also, for generating a total reflection at the core/cladding interface of the optical fibers 14 constituting the intermediate optical member 32, it is necessary that light be incident on the cladding 14b at an incident angle $\varepsilon_2$ of 55° or greater. As a consequence, when $\beta_1 = 53.5°$ and $\gamma_1 = 35°$, then nearly 100% of the light incident on the entrance surface 32a of the intermediate optical member 32 from the exit surface 31b of the input optical member 31 propagates through the optical fibers 14 constituting the intermediate optical member 32 while satisfying the total reflection condition.

Also, since the entrance surface 32a and exit surface 32b of the intermediate optical member 32 are parallel to each other, the optical image incident on the entrance surface 32a of the intermediate optical member 32 is outputted from the exit surface 32b of the intermediate optical member 32 without enlargement or reduction.

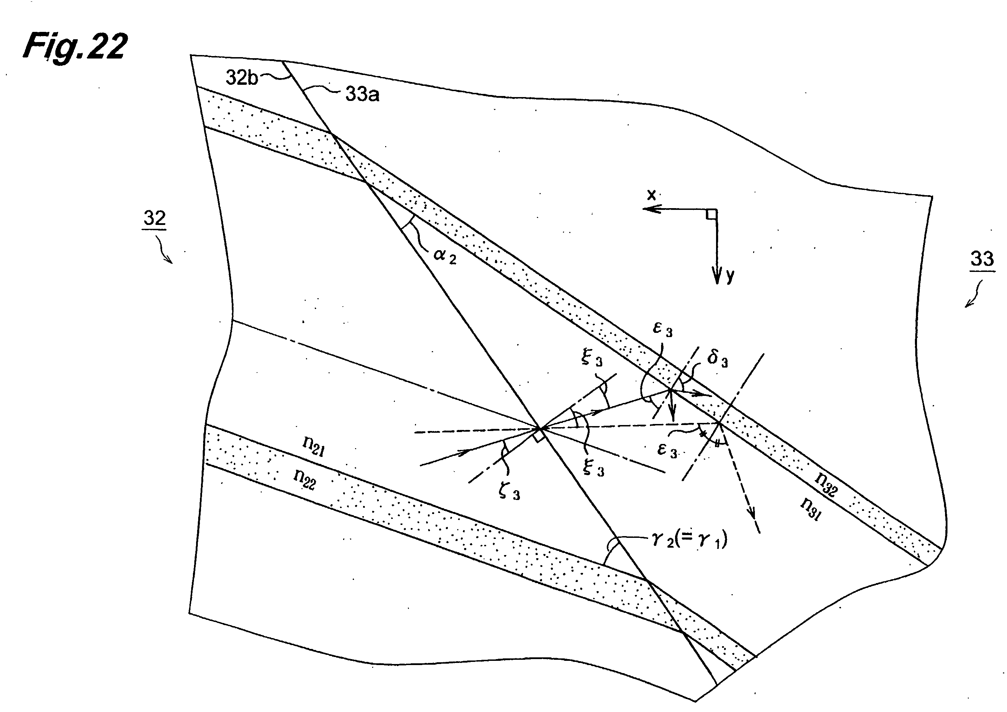

A case where the light incident on the entrance surface 33a of the output optical member 33 from the exit surface 32b of the intermediate optical member 32 propagates while being refracted and reflected by the core/cladding interface of the optical fibers 14 constituting the output optical member 33 as shown in Fig. 22 will now be considered. Here, let $n_{31}$ and $n_{32}$ be the respective refractive indices of the core 14a and cladding 14b of the optical fibers 14 constituting the output optical member 33. Also, let $\alpha_2$ be the angle formed between the third optical axis and the entrance surface 33a of the output optical member 33, $\zeta_3$ be the angle of incidence of light incident on the entrance surface 33a of the output optical member 33 from the exit surface 32b of the intermediate optical member 32, $\xi_3$ be the angle of refraction thereof, $\varepsilon_3$ be the angle of incidence of light incident on the cladding 14b of the output optical member 33 from its core 14a, and $\delta_3$ be the angle of refraction thereof.

According to the total reflection condition of the intermediate optical member 32, $\zeta_3$ is within the range satisfying

$$\sin(\gamma_2 + \zeta_3) > n_{22}/n_{21}. \tag{18}$$

Also, $\zeta_3$ and $\xi_3$ satisfy a relationship of

$$n_{21}\sin\zeta_3 = n_{31}\sin\xi_3 \tag{19}$$

according to the law of refraction.

On the other hand, $\alpha_2$, $\xi_3$, and $\varepsilon_3$ have a relationship of

$$\alpha_2 + (90° + \xi_3) + (90° - \varepsilon_3) = 180° \tag{20}$$

as seen from Fig. 22.

Therefore, if at least a part of $\xi_3$ satisfying both of expressions (18) and (19) satisfies the total reflection condition in the core/cladding interface

$$\sin \varepsilon_3 > n_{32}/n_{31} \tag{21}$$

under the condition of expression (20), then at least a part of the light incident on the entrance surface 33a of the output optical member 33 from the exit surface 32b of the intermediate optical member 32 propagates through the output optical member 33 while satisfying the total reflection condition.

In the optical device 30, since $n_{21}$ = 1.82, $n_{22}$ = 1.495, $n_{31}$ = 1.82, and $n_{32}$ = 1.495, the light transmitted through the intermediate optical member 32 is incident on the entrance surface 33a of the output optical member 33 at the incident angle $\varepsilon_3$ of 20° or greater. For generating a total reflection at the core/cladding interface of the optical fibers 14 constituting the output optical member 33, it is necessary that the light be incident on the cladding 14b at the incident angle $\varepsilon_3$ of 55° or greater, whereby the angle of refraction $\xi_3$ is needed to be greater than 43° . As a consequence, when $\gamma_2$ = 35° and $\alpha_2$ = 12° , of the light incident on the entrance surface 33a of the output optical member 33 from the exit surface 32b of the intermediate optical member 32, about 67% in terms of the light-receiving angle ratio (incident angle range satisfying the total reflection condition/whole incident angle $\times$ 100) is transmitted through the output optical member 33 while satisfying the total reflection condition.

Here, since the entrance surface 33a of the output optical member 33 is perpendicular to the xy plane of Fig. 19 and forms an angle of 12° with the third optical axis, and the exit surface 33b of the output optical member 33 is perpendicular to the third optical axis, the output optical member 33 reduces the optical image incident on the entrance surface 33a of the output optical member 33 to 1/4.81 (sin12° ) in the b-axis direction in Fig. 19. As a consequence, the optical image inputted to the entrance surface 31a of the input optical member 31 and outputted from the exit surface 33b of the output optical member 33 is reduced to 1/3.86 and 1/3.87 in the a- and b-axis directions of Fig. 19, respectively, so as to become a similarly reduced optical image.

As a result, the optical image outputted from the exit surface 33b of the output optical member 33 becomes an optical image which reduces the optical image formed on the entrance surface 31a of the input optical member 31 to 1/3.86 in each of the a- and b-axis directions.

Effects of the optical device in accordance with this modified example will now be explained. In the optical device 30, since each of the angle formed between the respective optical axes of the input optical member 31 and intermediate optical member 32 and the angle formed between the respective optical axes of the intermediate optical member 32 and output optical member 33 is made smaller than the angle formed between the respective optical axes of the input optical member 31 and output optical member 33, the optical image incident on the entrance surface 31a of the input optical member 31 can efficiently be transmitted to the exit surface 33b of the output optical member 33, while satisfying the total reflection condition in each optical member.

Also, since the exit surface 31b of the input optical member 31 is obliquely cut (at an acute angle) with respect to the optical axis, as compared with the case where the exit surface 31b of the input optical member 31 is cut perpendicular to the optical axis, the transmission efficiency from the entrance surface 31a of the input optical member 31 to the exit surface 33b of the output optical member 33 would improve.

iv) Fourth Modified Example

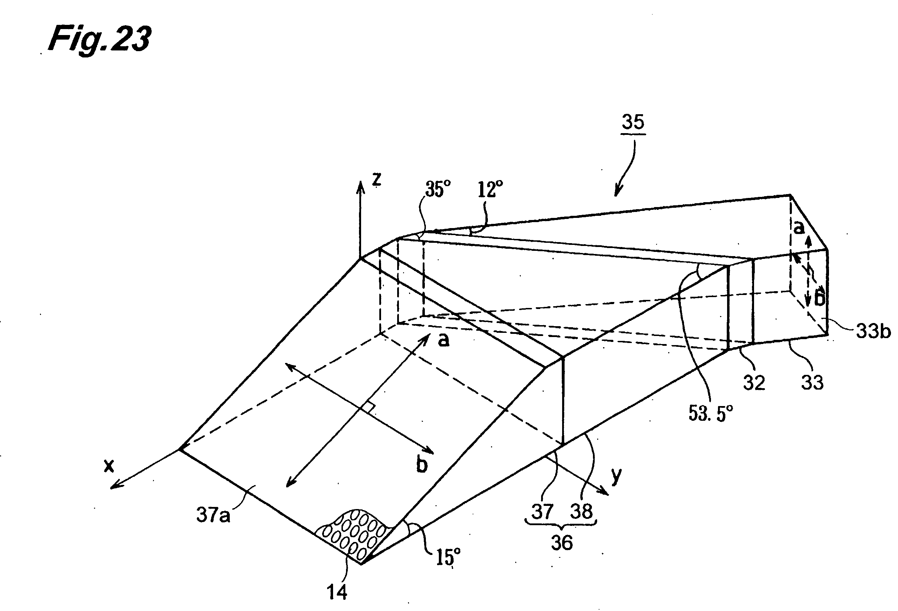

The optical device in accordance with a fourth modified example will now be explained. First, the configuration of the optical device in accordance with this modified example is shown in Fig. 23. The optical device 35 in accordance with this modified example structurally differs from the optical device 30 in accordance with the third modified example as follows. Namely, while the gaps of the individual optical fibers 14 are filled with the light-absorbing material in the input optical member 31 used in the optical device 30 in accordance with the above-mentioned third modified example, the input optical member 36 used in the optical device 35 in accordance with this modified example is constituted by a first member 37 in which the gaps among the individual optical fibers 14 are not filled with the light-absorbing material 15 and a second member 38 in which the gaps among the individual optical fibers 14 are filled with the light-absorbing material 15.

The first member 37 is constituted by an optical member composed of a number of optical fibers 14 arranged parallel to each other and integrally formed while the gaps among the individual optical fibers 14 are not filled with the light-absorbing material 15, wherein its entrance surface 37a forms an angle of 15° with the optical axis such that the incident light from the air does not satisfy the total reflection condition, whereas its exit surface 37b is perpendicular to the optical axis. Also, the second member 38 is constituted by an optical member composed of a number of optical fibers 14 arranged parallel to each other and integrally formed while the gaps among the individual optical fibers 14 are filled with the light-absorbing material 15, wherein its entrance surface 38a and exit surface 38b are perpendicular to the optical axis.

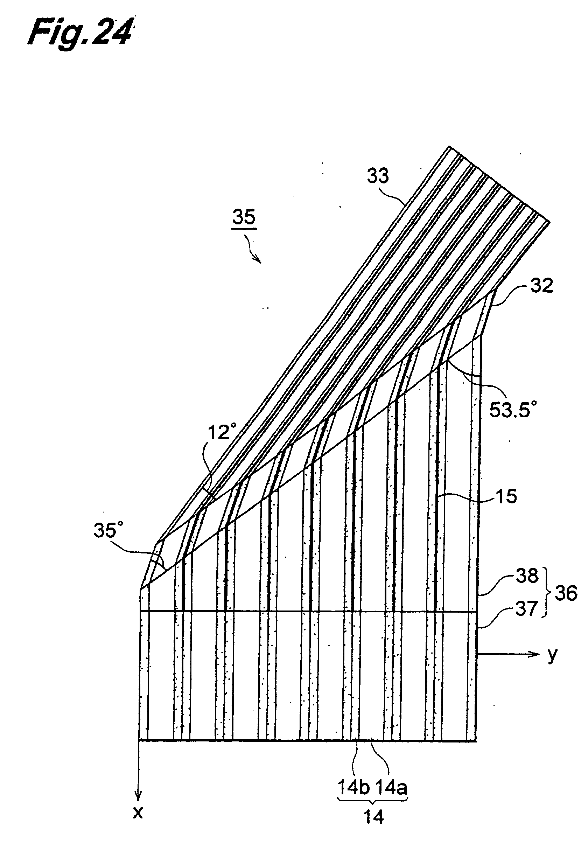

The entrance surface 38a of the second member 38 is in contact with the exit surface 37b of the first member 37, whereas the exit surface 38b of the second member 38 is in contact with the entrance surface 32a of the intermediate optical member 32. Also, both of the optical axes of the first member 37 and second member 38 are parallel to the xy plane of Fig. 23. Consequently, when the optical device 35 is cut along a plane parallel to the xy plane in Fig. 23, a cross section shown in Fig. 24 is obtained.

As with the optical device 10 in accordance with the above-mentioned embodiment, the optical device 35 can efficiently transmit the optical image incident on the entrance surface 37a of the first member 37 constituting the input optical member 36 to the exit surface 33b of the output optical member 33.

v) Fifth Modified Example

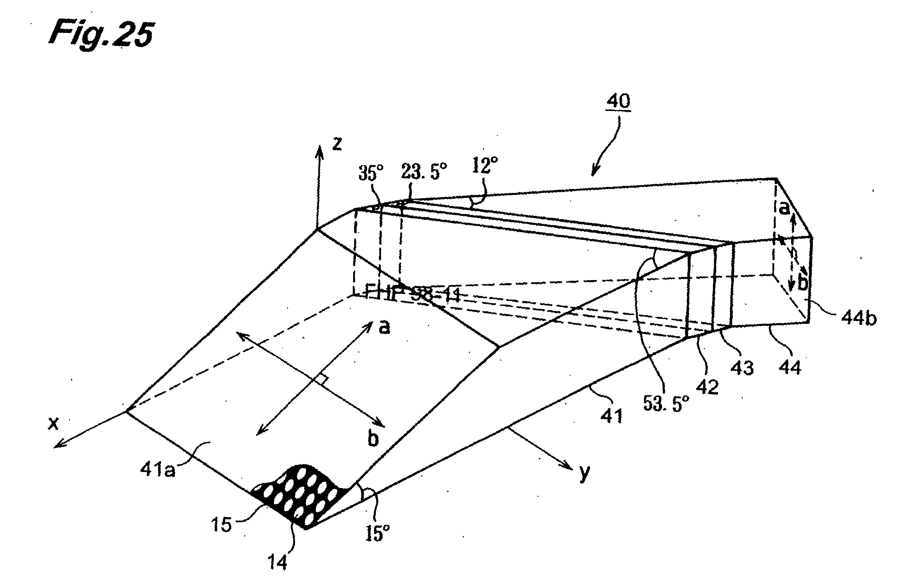

The optical device in accordance with a fifth modified example will now be explained with reference to drawings. First, the configuration of the optical device in accordance with the this modified example will be explained. The optical device 40 comprises, as shown in Fig. 25, an input optical member 41, a first intermediate optical member 42, a second intermediate optical member 43, and an output optical member 44.

Each of the input optical member 41, first intermediate optical member 42, second intermediate optical member 43, and output optical member 44 is composed of a number of optical fibers 14 arranged parallel to each other and integrally formed. In the optical fibers 14 constituting each optical member, the refractive index of the core 14a, the refractive index of the cladding 14b, and the numerical aperture are as shown in Table 7.

TABLE 7

|  | Core Refractive Index | Cladding Refractive Index | Numerical Aperture |
|---|---|---|---|
| Input Optical Member | 1.56 | 1.52 | 0.35 |
| 1st Intermediate Optical Member | 1.82 | 1.495 | 1.0 |
| 2nd Intermediate Optical Member | 1.82 | 1.495 | 1.0 |
| Output Optical Member | 1.82 | 1.495 | 1.0 |

Also, gaps among the individual optical fibers 14 constituting each optical member are filled with a light-absorbing material 15.

The input optical member 41 has an entrance surface 41a which is obliquely cut with respect to the optical axis (hereinafter referred to as first optical axis) of optical fibers 14 constituting the input optical member 41 at an angle of 15° and an exit surface 41b which is obliquely cut with respect to the first optical axis at an angle of 53.5° (acute angle). Here, a plane (plane parallel to the xy plane of Fig. 25, hereinafter referred to as first reference plane) parallel to the first optical axis and perpendicular to the exit surface 41b of the input optical member 41 and a plane (plane parallel to the xz plane of Fig. 25) parallel to the first optical axis and the entrance surface 41a are perpendicular to each other. Also, the angle (15°) formed between the first optical axis and the entrance surface 41a of the input optical member 41 is such an angle that the light incident on the entrance surface 41a from the air does not satisfy a total reflection condition within the optical fibers constituting the input optical member 41.

The first intermediate optical member 42 has an entrance surface 42a which is obliquely cut with respect to the optical axis (hereinafter referred to as second optical axis) of optical fibers 14 constituting the first intermediate optical member 42 at an angle of 35° and an exit surface 42b which is cut parallel to the entrance surface 42a.

The second intermediate optical member 43 has an entrance surface 43a which is obliquely cut with respect to the optical axis (hereinafter referred to as third optical axis) of optical fibers 14 constituting the second intermediate optical member 43 at an angle of 23.5° and an exit surface 43b which is cut parallel to the entrance surface 43a.

The output optical member 44 has an entrance surface 44a which is obliquely cut with respect to the optical axis (hereinafter referred to as fourth optical axis) of optical fibers 14 constituting the output optical member 44 at an angle of 12° and an exit surface 44b which is cut perpendicular to the fourth optical axis.

The exit surface 41b of the input optical member 41 and the entrance surface 42a of the first intermediate optical member 42 are in contact with each other, the exit surface 42b of the first intermediate optical member 42 and the entrance surface 43a of the second intermediate optical member 43 are in contact with each other, and the exit surface 43b of the second intermediate optical member 43 and the entrance surface 44a of the output optical member 44 are in contact with each other, whereby the incident optical image from the entrance surface 41a of the input optical member 41 is transmitted to the exit surface 44b of the output optical member 44 by way of the first intermediate optical member 42 and the second intermediate optical member 43.

Here, the first plane, a plane (hereinafter referred to as second reference plane) parallel to the second optical axis and perpendicular to the exit surface 42b of the first intermediate optical member 42, a plane (hereinafter referred to as third reference plane) parallel to the third optical axis and perpendicular to the exit surface 43b of the second intermediate optical member 43, and a plane (hereinafter referred to as fourth reference plane) parallel to the fourth optical axis and perpendicular to the entrance surface 44a of the output optical member 44 are parallel to each other (parallel to the xy plane of Fig. 25). As a consequence, the optical axis of optical fibers 14 constituting each optical member is parallel to the xy plane, whereby the light incident on each optical fiber 14 from the entrance surface 41a of the input optical member 41 advances in parallel with the xy plane.

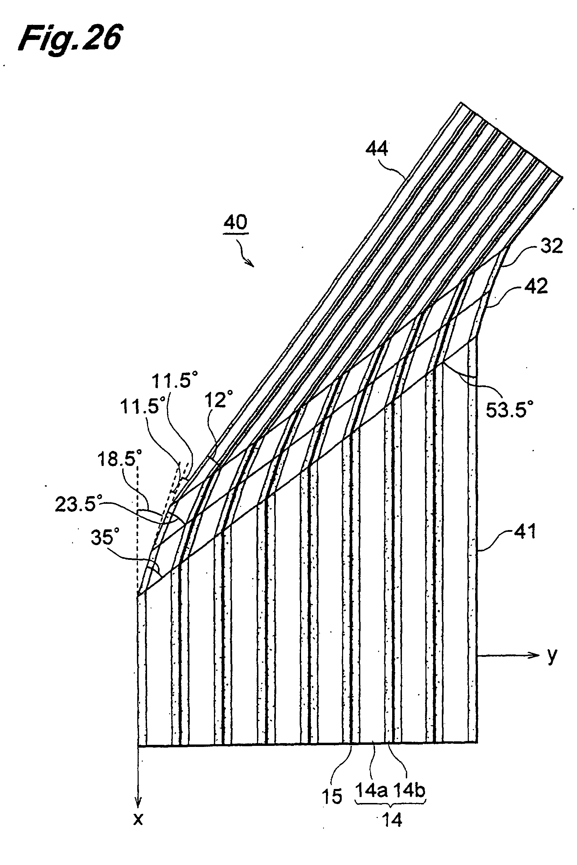

Fig. 26 shows a cross-sectional view of the optical device 40 taken along a plane parallel to the xy plane in Fig. 25. Here, the angle formed between the respective optical axes of the input optical member 41 and first intermediate optical member 42 is 18.5° , the angle formed between the respective optical axes of the first intermediate optical member 42 and second intermediate optical member 43 is 11.5° , and the angle formed between the respective optical axes of the second intermediate optical member 43 and output optical member 44 is 11.5° , each being smaller than 41.5° , i.e., the angle formed between the respective optical axes of the input optical member 41 and output optical member 44.

Also, the angle of 35° formed between the second optical axis and the entrance surface 42a of the first intermediate optical member 42 on the first reference plane is smaller than the angle of 53.5° formed between the first optical axis and the exit surface 41b of the input optical member 41. On the other hand, since the angle formed between the first and second axes is set to an angle of 18.5° which is the difference between the above-mentioned angles of 53.5° and 35° , the angle of refraction of the optical path (optical fiber 14) at the connecting surface between the input optical member 41 and first intermediate optical member 42 is made lower.

Also, the angle of 23.5° formed between the third optical axis and the entrance surface 43a of the second intermediate optical member 43 on the second reference plane 54d is smaller than the angle of 35° formed between the second optical axis and the exit surface 42b of the first intermediate optical member 42. On the other hand, since the angle formed between the second and third axes is set to an angle of 11.5° which is the difference between the above-mentioned angles of 35° and 23.5° , the angle of refraction of the optical path (optical fiber 14) at the connecting surface between the first intermediate optical member 42 and second intermediate optical member 43 is made lower.

Further, the angle of 12° formed between the fourth optical axis and the entrance surface 44a of the output optical member 44 on the third reference plane is smaller than the angle of 23.5° formed between the third optical axis and the exit surface 43b of the second intermediate optical member 43. On the other hand, since the angle formed between the third and fourth axes is set to an angle of 11.5° which is the difference between the above-mentioned angles of 23.5° and 12° , the angle of refraction of the optical path (optical fiber 14) at the connecting surface between the second intermediate optical member 43 and output optical member 44 is made lower.

Operations and effects of the optical device 40 will now be explained. In the optical device 40, since each of the angle formed between the respective optical axes of the input optical member 41 and first intermediate optical member 42, the angle formed between the respective optical axes of the first intermediate optical member 42 and second intermediate optical member 43, and the angle formed between the respective optical axes of the second intermediate optical member 43 and output optical member 44 is made smaller than the angle formed between the respective optical axes of the input optical member 41 and output optical member 44, the optical image incident on the entrance surface 41a of the input optical member 41 can efficiently be transmitted to the exit surface 44b of the

# EP 1 001 284 B1

output optical member 44, while satisfying the total reflection condition in each optical member.

More specifically, since the angle formed between the respective optical axes of the input optical member 41 and first intermediate optical member 42 is set to 18.5° , 100% of the light incident on the entrance surface 42a of the first intermediate optical member 42 from the exit surface 41b of the input optical member 41 propagates through the first intermediate optical member 42 while satisfying the total reflection condition. Also, since the angle formed between the respective optical axes of the first intermediate optical member 42 and second intermediate optical member 43 is set to 11.5° , about 84% of the light incident on the entrance surface 43a of the second intermediate optical member 43 from the exit surface 42b of the first intermediate optical member 42 propagates through the second intermediate optical member 43 while satisfying the total reflection condition. Further, since the angle formed between the respective optical axes of the second intermediate optical member 43 and output optical member 44 is set to 11.5° , about 84% of the light incident on the entrance surface 44a of the output optical member 44 from the exit surface 43b of the second intermediate optical member 43 propagates through the output optical member 44 while satisfying the total reflection condition. Hence, transmission efficiency can be improved as compared with the case where the optical device is constituted by a combination of three optical members.

In the above-mentioned optical device 10, 20, 30, or 40, various modifications can be considered concerning the angle formed between the optical axis and the entrance surface in the input optical member, the angles formed between the optical axis and the entrance surface and exit surface in the intermediate optical member, the angle formed between the optical axis and the entrance surface in the output optical member, and the like.

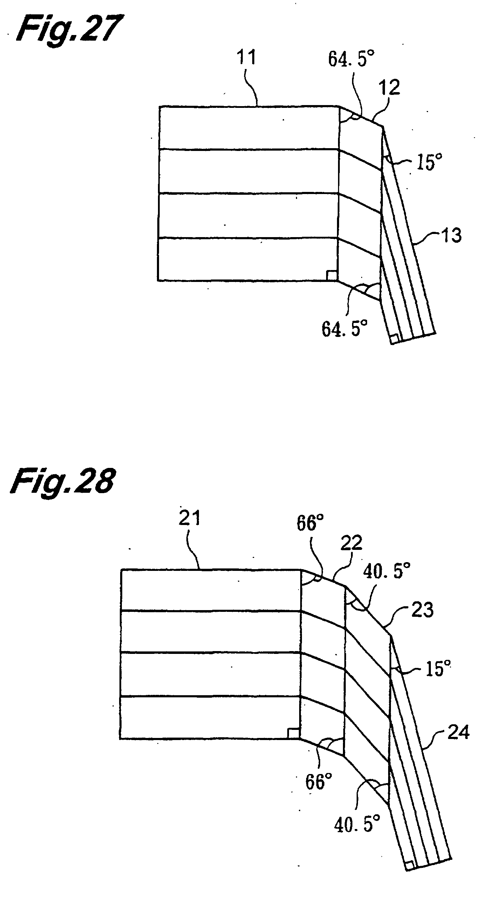

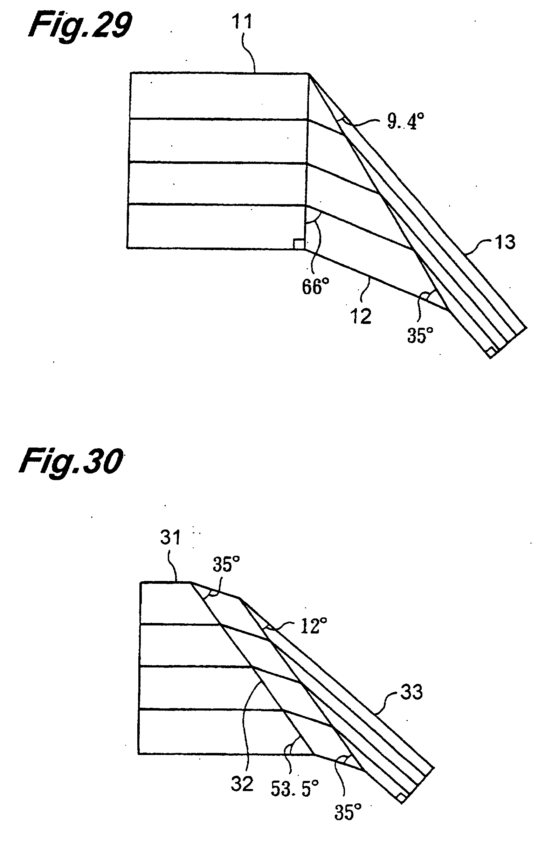

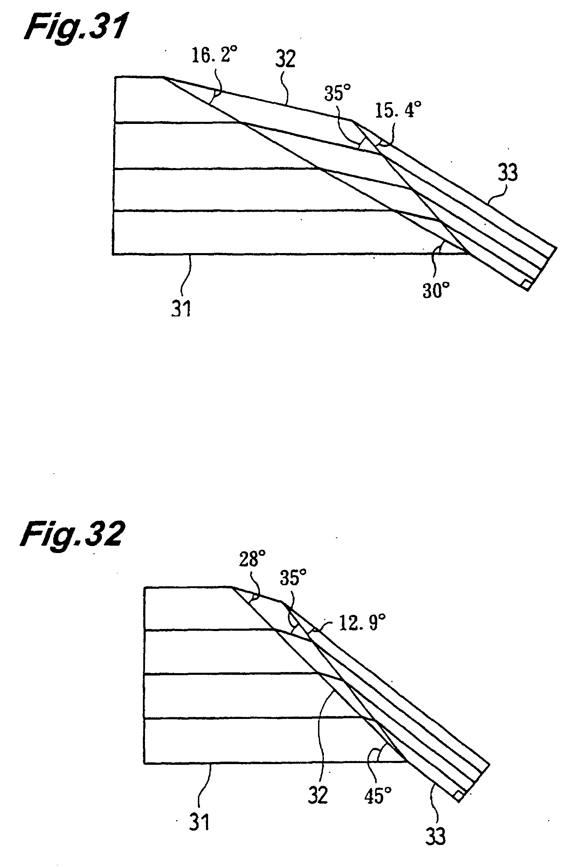

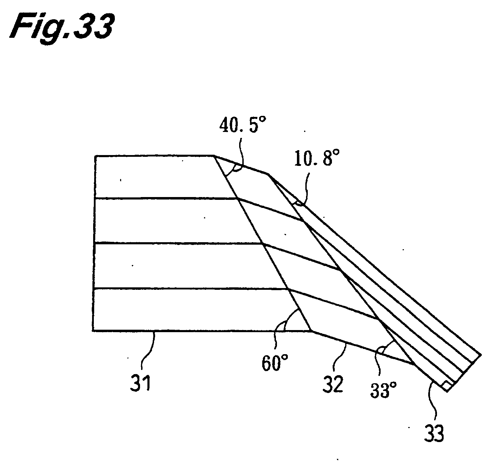

Here, Table 8 shows changes in light transmission efficiency (product of the respective light-receiving angle ratios of the individual connecting portions) when the angle formed by the exit surface of the input optical member with the optical axis and the angles formed by the entrance surface and exit surface of the intermediate optical member with the optical axis are varied as shown in Figs. 2.7 to 33, while the demagnification is held at 1/3.86.

TABLE 8

| Fig No. | $\beta_1$ | $\gamma_1$ | $\gamma_2$ | $\gamma_3$ | $\gamma_4$ | $\alpha_2$ | Reduction Rate | Transmission Efficiency |
|---|---|---|---|---|---|---|---|---|
| 27 | 90° | 64.5° | 64.5° | - | - | 15° | 3.86:1 | 27.3% |
| 28 | 90° | 66° | 66° | 40.5° | 40.5° | 15° | 3.86:1 | 40.4% |
| 29 | 90° | 66° | 35° | - | - | 9.4° | 3.86:1 | 63.0% |
| 30 | 53.5° | 35° | 35° | - | - | 12° | 3.86:1 | 67.1% |
| 31 | 30° | 16.2° | 35° | - | - | 15.4° | 3.86:1 | 72.0% |
| 32 | 45° | 28° | 35° | - | - | 12.9° | 3.86:1 | 68.3% |
| 33 | 60° | 40.5° | 33° | - | - | 10.8° | 3.86:1 | 68.3% |

It can be seen from Table 8 that the light transmission efficiency remarkably improves in the cases where the exit surface of the input optical member is cut obliquely with respect to the optical axis (27 to 29 in Table 8) as compared with the cases where it is cut perpendicular to the optical axis (30 to 33 in Table 8). It can also be seen that the effect obtained by slanting the exit surface of the input optical member with respect to the optical axis in order to improve the transmission efficiency (30 to 33 in Table 8) is greater than the effect obtained by insertion of two intermediate optical members, such as the first and second intermediate optical members, when the exit surface of the input optical member is perpendicular (28 in Table 8).

vi) Sixth Modified Example

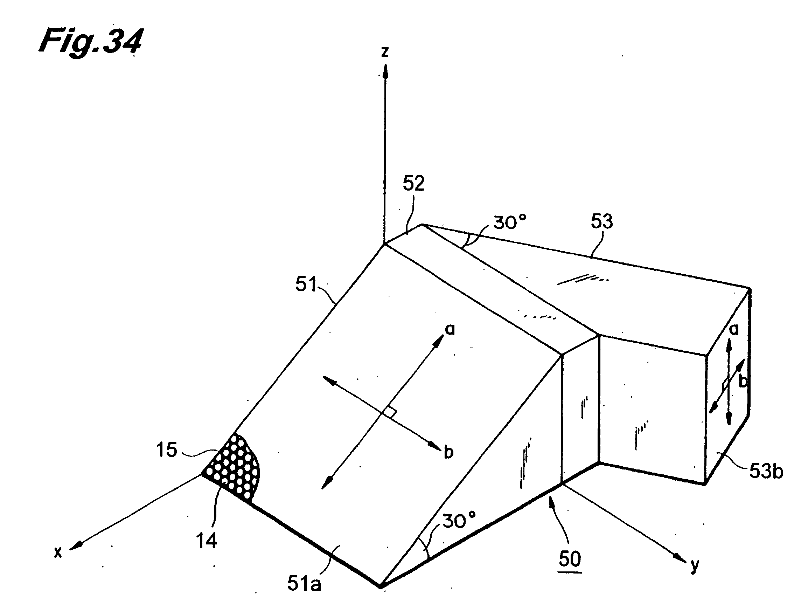

The optical device in accordance with a sixth modified example will now be explained. First, the configuration of the optical device in accordance with the this modified example will be explained. The optical device 50 comprises, as shown in Fig. 34, an input optical member 51, an intermediate optical member 52, and an output optical member 53.

The input optical member 51 is composed of a number of optical fibers 14 arranged parallel to each other and integrally formed. In each optical fiber 14, its core 14a has a refractive index of 1.56, its cladding 14b has a refractive index of 1.52, and its numerical aperture is 0.35, whereas gaps among the individual optical fibers 14 are filled with a light-absorbing material 15. Also, the input optical member 51 has an entrance surface 51a obliquely cut with respect to the optical axis at an angle of 30° and an exit surface 51b perpendicularly cut with respect to the optical axis, such that the optical image incident on the entrance surface 51a can be outputted to the exit surface 51b while being reduced in a specific direction. The angle (30° ) formed between the optical axis and the entrance surface 51a is such an angle that the light incident on the entrance surface 51a from the air does not satisfy the total reflection condition within the input optical member 51.

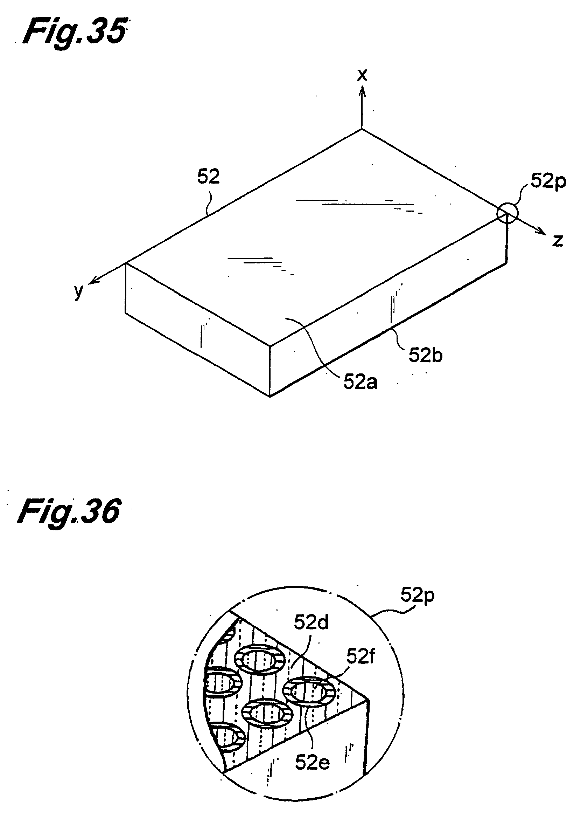

The intermediate optical member 52 has a structure shown in Figs. 35 and 36. Here, Fig. 36 is an enlarged view of a part 52p in Fig. 35. The intermediate optical member 52 is made by preparing a capillary plate 52d having a number of through holes formed parallel to each other each having a diameter on a par with or smaller than the optical fiber 14 constituting the input optical member 51; forming a light-reflecting metal film 52e on the inner wall of each through hole by vapor deposition, plating, or the like; and filling the through hole with a light-transmitting material 52f having a refractive index of 1.56, so as to form a light-transmitting line.

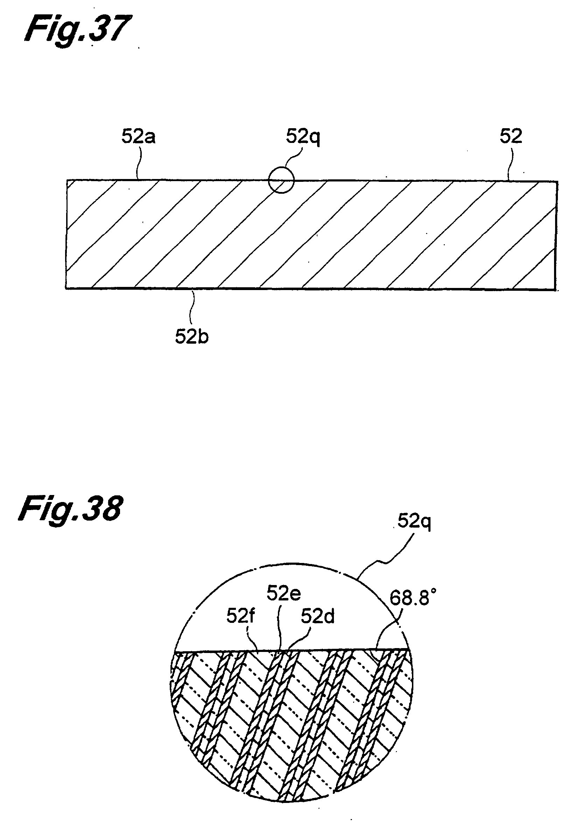

When the intermediate optical member 52 is cut along a plane parallel to the xy plane in Fig. 35, a form shown in Figs. 37 and 38 is yielded. Fig. 38 is an enlarged view of apart 52q in Fig. 37. A first end face (hereinafter referred to as entrance surface 52a) forms an angle of 68.8° with respect to the axis (hereinafter referred to as optical axis) of the light-transmitting line, whereas a second end face (hereinafter referred to as exit surface 52b) is formed. parallel to the entrance surface 52a. As a result, the optical image incident on the entrance surface 52a can be outputted to the exit surface 52b without reduction or enlargement.

The output optical member 53 is composed of a number of optical fibers 14 arranged parallel to each other and integrally formed. In each optical fiber 14, its core 14a has a refractive index of 1.82, its cladding 14b has a refractive index of 1.495, and its numerical aperture is 1.0, whereas gaps among the individual optical fibers 14 are filled with the light-absorbing material 15. Also, the output optical member 53 has an entrance surface 53a obliquely cut with respect to the optical axis at an angle of 30° and an exit surface 53b perpendicularly cut with respect to the optical axis, such that the optical image incident on the entrance surface 53a can be outputted to the exit surface 53b while being reduced in a specific direction.

The exit surface 51b of the input optical member 51 and the entrance surface 52a of the intermediate optical member 52 are in contact with each other, and the exit surface 52b of the intermediate optical member 52 and the entrance surface 53a of the output optical member 53 are in contact with each other. In particular, a line parallel to both of the entrance surface 51a and exit surface 51b of the input optical member 51 and a line parallel to both of the entrance surface 53a and exit surface 53b of the output optical member 53 are perpendicular to each other. As a consequence, the optical image incident on the entrance surface 51a of the input optical member 51 is reduced in the a-axis direction of Fig. 34 by the input optical member 51 and is reduced in the b-axis direction perpendicular to the a-axis direction by the output optical member 53, so as to be outputted from the exit surface 53b of the output optical member 53.

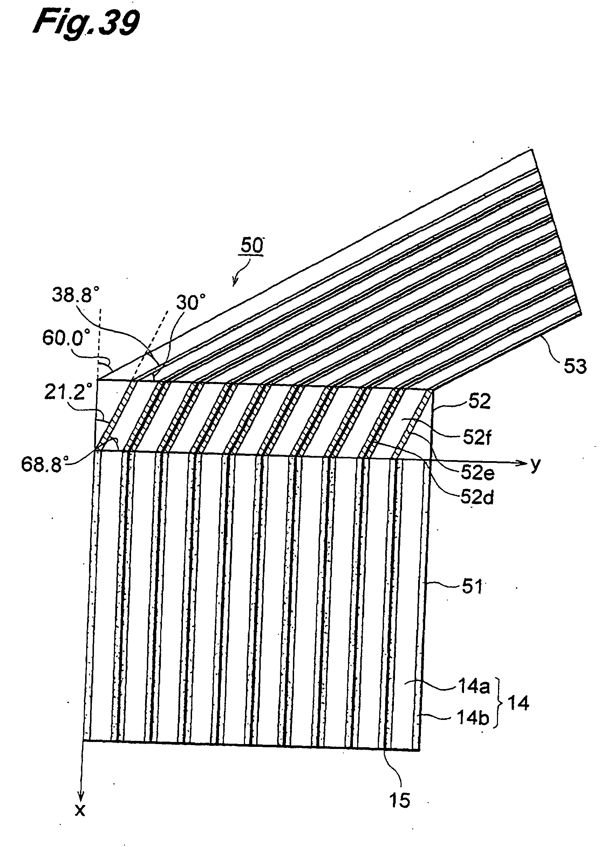

The optical axes of the input optical member 51, intermediate optical member 52, and output optical member 53 are parallel to the xy plane of Fig. 34, whereas Fig. 39 shows a cross-sectional view of the optical device 50 taken along a plane parallel to the xy plane in Fig. 34.

Here, since the angle formed between the entrance surface 52a of the intermediate optical member 52 and its optical axis is 68.8° , and the angle formed between the entrance surface 53a of the output optical member 53 and its optical axis is 30° , the angle formed between the optical axis of the input optical member 51 and the optical axis of the intermediate optical member 52 becomes 21.2° , and the angle formed between the optical axis of the intermediate optical member 52 and the optical axis of the output optical member 53 becomes 38.8° , whereby each of them is smaller than 60° , i.e., the angle formed between the optical axis of the input optical member 51 and the optical axis of the output optical member 53.

Further, the angle (28.8° ) formed between the optical axis of the intermediate optical member 52 and the optical axis of the output optical member 53 is such that about 50% of the light incident on the entrance surface 53a of the output optical member 53 from the exit surface 52b of the intermediate optical member 52 satisfies a total reflection condition within the optical fibers 14 constituting the output optical member 53.

Operations of the optical device 50 in accordance with this modified example will now be explained. The propagation of the light incident on the input optical member 51 from the air within the input optical member 51 is as explained with reference to Fig. 5 in the description of the optical device 10. In the optical device 50, $\alpha_1$ is set to 30° in view of the efficiency of reduction and the light-receiving angle ratio from the intermediate optical member 52 to the output optical member 53.

Also, since the angle $\alpha_1$ formed between the optical axis and the entrance surface 51a is 30° , and the exit surface 51b is perpendicular to the optical axis, the input optical member 51 acts to output the optical image incident on the entrance surface 51a to the exit surface 51b while reducing it to 0.5 (sin30° ) in the a-axis direction.

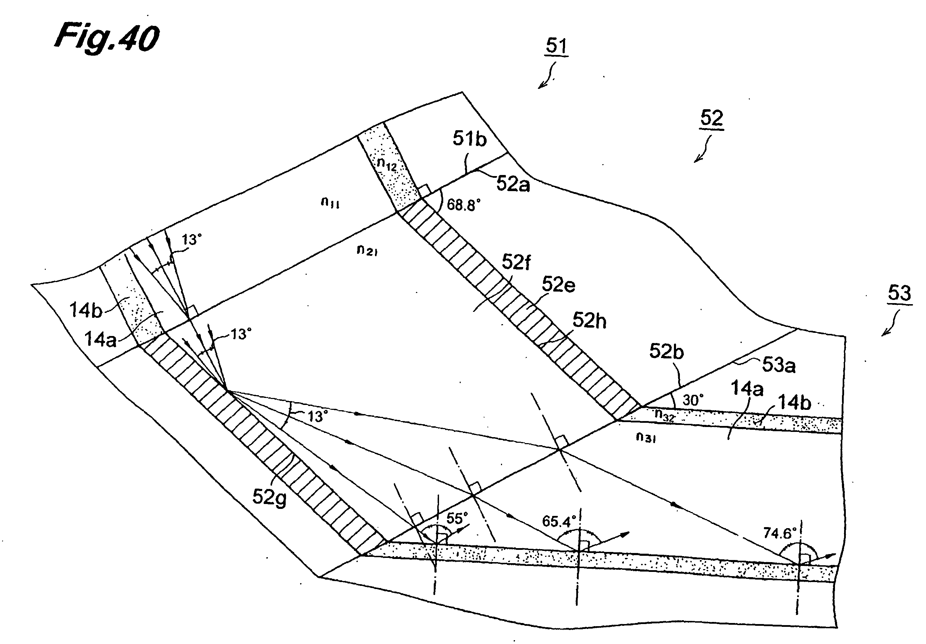

A case where light having propagated through the input optical member 51 is incident on the output optical member 53 by way of the intermediate optical member 52 will now be explained. Fig. 40 is a view showing a case where the light incident on the entrance surface 52a of the intermediate optical member 52 from the exit surface 51b of the input optical member 51 is eventually reflected by a part 52g (part on the outer side of the bent optical path) of the metal film 52e of the intermediate optical member 52 so as to enter the output optical member 53. Here, let $n_{11}$ and $n_{12}$ be the respective refractive indices of the core 14a and cladding 14b of the optical fibers 14 constituting the input optical member 51, $n_{21}$ be the refractive index of the light-transmitting material 52f within the intermediate optical

member 52, and $n_{31}$ and $n_{32}$ be the respective refractive indices of the core 14a and cladding 14b of the optical fibers 14 constituting the output optical member 53.

The light propagating through the input optical member 51 satisfies the total reflection condition at the core/cladding interface of the optical fiber 14 constituting the input optical member 51. Here, when $n_{11}$ = 1.56 and $n_{12}$ = 1.52, then the light satisfying the total reflection condition within the input optical member 51 has an incident angle of 77° or greater with respect to the cladding 14b at the core/cladding interface. As a consequence, the light transmitted through the input optical member 51 would be made incident on the entrance surface 52a of the intermediate optical member 52 at an incident angle of 13° (= 90° - 77° ) or smaller.

Since both of $n_{11}$ and $n_{21}$ are 1.56, the light incident on the intermediate optical member 52 does not change its advancing direction and advances with a spread angle of 26° .

When the light reflected by the part 52g of the metal film 52e in the intermediate optical member 52 is finally made incident on the output optical member 53, since $n_{21}$ = 1.56 and $n_{31}$ = 1.82, and since the angle formed between the optical axis of the intermediate optical member 52 and the entrance surface 52a is 68.8° , whereas the angle formed between the optical axis of the output optical.member 53 and the entrance surface 53a is 30° , the incident angle of this incident light with respect to the cladding 14 at the core/cladding interface is 55° to 74.6° .

Here, due to the total reflection condition at the core/cladding interface in the output optical member 53, the light incident on the cladding 14b at an incident angle of 55° or greater is totally reflected. As a consequence, the light reflected by the part 52g of the metal film 52e in the intermediate optical member 52 and then made incident on the output optical member 53 propagates through the output optical member 53 while satisfying the total reflection condition.

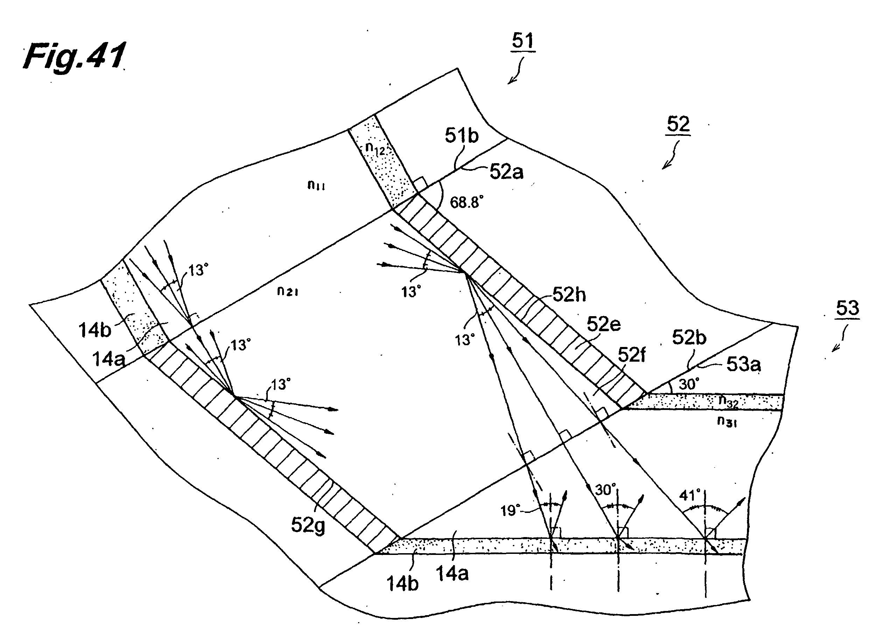

On the other hand, Fig. 41 is a view showing a case where the light incident on the entrance surface 52a of the intermediate optical member 52 from the exit surface 51b of the input optical member 51 is eventually reflected by a part 52h (part on the inner side of the bent optical path) of the metal film 52e of the intermediate optical member 52 so as to enter the output optical member 53.

When the light having entered the intermediate optical member 52 from the input optical member 51 and finally reflected by the part 52h of the metal film 52e in the intermediate optical member 52 is made incident on the output optical member 53, since $n_{21}$ = 1.56 and $n_{31}$ = 1.82, and since the angle formed between the optical axis of the intermediate optical member 52 and its exit surface 52b is 68.8° , whereas the angle formed between the optical axis of the output optical member 53 and its entrance surface 53a is 30° , the incident angle of this incident light with respect to the cladding 14 at the core/cladding interface is 19° to 41°. Since the light incident on the cladding 14b at an incident angle of 55° or less does not satisfy the total reflection condition according to the same at the core/cladding interface in the output optical member. 53, the light reflected by the part 52h of the metal film 52e in the intermediate optical member 52 so as enter the output optical member 53 would attenuate and disappear within the output optical member 53.

As a consequence, at least a part of the light incident on the entrance surface 53a of the output optical member 53 from the exit surface 52b of the intermediate optical member 52, i.e., about 50% of light in terms of the light-receiving angle ratio (incident angle range satisfying the total reflection condition/whole incident angle $\times$ 100) satisfies the total reflection condition within the output optical member 53 and is transmitted to the exit surface 53b of the output optical member 53.

Since the angle formed between the optical axis and the entrance surface 53a is 30° , whereas the exit surface 53b is perpendicular to the optical axis, the output optical member 53 acts to output the optical image incident on the entrance surface 53a to the exit surface 53b while reducing it to 0.50 (sin30° ) in the b-axis direction.

Effects of the optical device in accordance with this modified example will now be explained. In the optical device 50, since each of the angle formed between the respective optical axes of the input optical member 51 and intermediate optical member 52 and the angle formed between the respective optical axes of the intermediate optical member 52 and output optical member 53 is made smaller than the angle formed between the respective optical axes of the input optical member 51 and output optical member 53, at least a part of the light incident on the entrance surface 53a of the output optical member 53 from the exit surface 51b of the input optical member 51 by way of the intermediate optical member 52 satisfies the total reflection condition within the output optical member 53.

As a result, the optical image incident on the entrance surface 51a of the input optical member 51 can efficiently be transmitted to the exit surface 53b of the output optical member 53 while satisfying the total reflection condition.

In the optical device 50, various modifications can be considered concerning the angle formed between the optical axis and the entrance surface 51a in the input optical member 51, the angle formed between the optical axis and the entrance surface 52a in the intermediate optical member 52, the angle formed between the optical axis and the entrance surface 53a in the output optical member 53, and the like.

Table 9 shows relationships between the light-receiving angle ratio and the reduction efficiency under various angular conditions. In this table, $\gamma_1$ is the angle formed between the optical axis and the entrance surface 52a in the intermediate optical member 52, $\alpha_2$ is the angle formed between the optical axis and the entrance surface 53a in the output optical member 53, A is the light-receiving angle ratio in the output optical member 53, and m is the demagnification. Also, the refractive indices of the core 14a and cladding 14b of the optical fibers 14 constituting the individual optical members and the refractive index of the light-transmitting material 52f are as mentioned above.

TABLE 9

| $\gamma_1$ | $\alpha_2$ | A | m |
|---|---|---|---|
| 68.8° | 30.0° | 50.0% | 1:2 |
| 62.5° | 20.0° | 50.0% | 1:2.9 |
| 55.7° | 10.0° | 50.0% | 1:5.8 |

vii) Seventh Modified Example

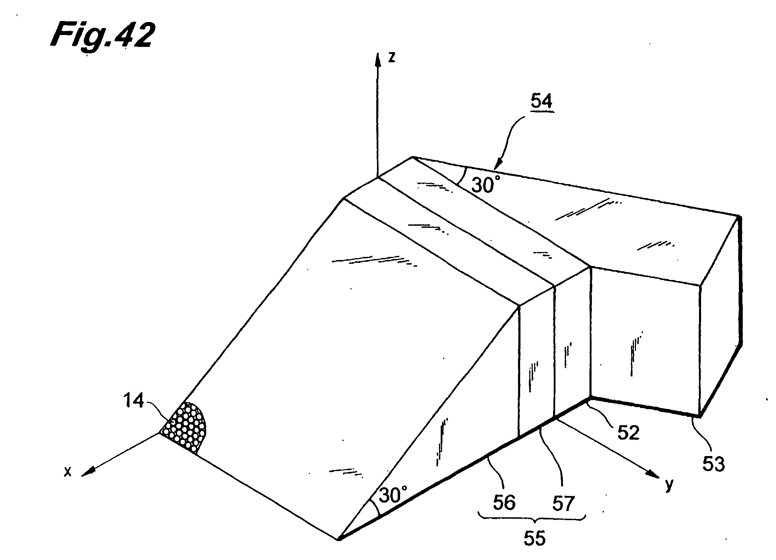

The optical device in accordance with a seventh modified example will now be explained with reference to drawings. First, the configuration of the optical device in accordance with the this modified example will be explained. The configuration of the optical device 54 in accordance with this modified example is shown in Fig. 42. The optical device 54 in accordance with this modified example structurally differs from the optical device 50 in accordance with the sixth modified example in the following points. Namely, while the gaps of the individual optical fibers 14 are filled with the light-absorbing material 15 in the input optical member 51 used in the optical device 50 in accordance with the above-mentioned sixth modified example, the input optical member 55 used in the optical device 55 in accordance with this modified example is constituted by a first member 56 in which the gaps among the individual optical fibers 14 are not filled with the light-absorbing material 15 and a second member 57 in which the gaps among the individual optical fibers 14 are filled with the light-absorbing material 15.

The first member 56 is constituted by an optical member composed of a number of optical fibers 14 arranged parallel to each other and integrally formed while the gaps among the individual optical fibers 14 are not filled with the light-absorbing material 15. The entrance surface 56a of the first member 56 forms an angle of 30° with the optical axis such that the incident light from the air does not satisfy the total reflection condition, whereas its exit surface 56b is perpendicular to the optical axis.

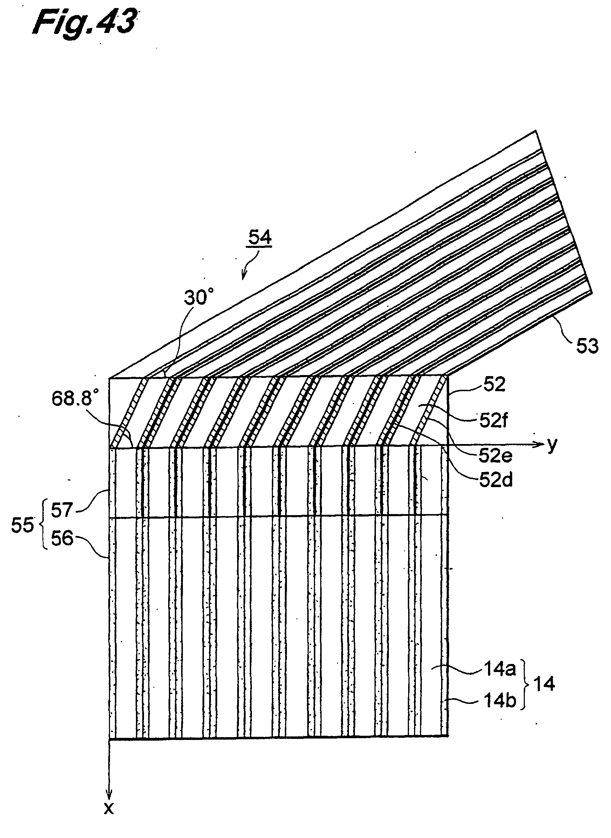

The second member 57 is constituted by an optical member composed of a number of optical fibers 14 arranged parallel to each other and integrally formed while the gaps among the individual optical fibers 14 are filled with the light-absorbing material 15. The entrance surface 57a and exit surface 57b of the second member 57 are perpendicular to the optical axis. The entrance surface 57a of the second member 57 is in contact with the exit surface 56b of the first member, whereas the exit surface 57b of the second member 57 is in contact with the entrance surface 52a of the intermediate optical member 52. Also, both of the optical axes of the first member 56 and second member 57 are parallel to the xy plane of Fig. 42. Consequently, when the optical device 54 is cut along a plane parallel to the xy plane in Fig. 42, a cross section shown in Fig. 43 is obtained.

Operations and effects of the optical device in accordance with this modified example will now be explained. In the optical device 54, as with the optical device 10 in accordance with the above-mentioned embodiment, the incident optical image from the entrance surface 56a of the first member 56 constituting the input optical member 55 can efficiently be transmitted to the exit surface of the output optical member 53, whereby an output pattern with a high resolution can be obtained.

viii) Eighth Modified Example

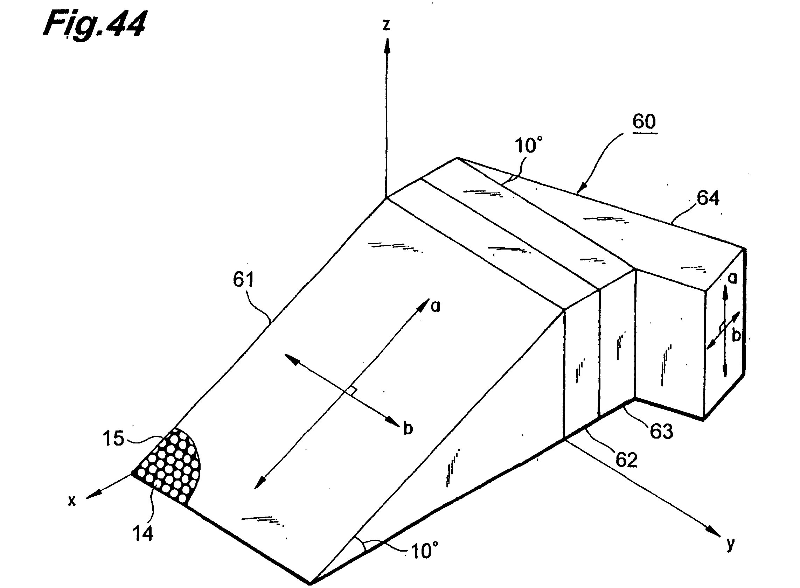

The optical device 60 in accordance with an eighth modified example will now be explained. The optical device 60 comprises, as shown in Fig. 44, an input optical member 61, a first intermediate optical member 62, a second intermediate optical member 63, and an output optical member 64.

The input optical member 61 is composed of a number of optical fibers 14 arranged parallel to each other and integrally formed. In each optical fiber 14, its core 14a has a refractive index of 1.56, its cladding 14b has a refractive index of 1.52, and its numerical aperture is 0.35, whereas gaps among the individual optical fibers 14 are filled with a light-absorbing material 15. Also, the input optical member 61 has an entrance surface 61a obliquely cut with respect to the optical axis at an angle of 10° and an exit surface 61b perpendicularly cut with respect to the optical axis, such that the optical image incident on the entrance surface 61a can be outputted to the exit surface 61b while being reduced in a specific direction. The angle (10° ) formed between the optical axis and the entrance surface 61a is such an angle that the light incident on the entrance surface 61a from the air does not satisfy the total reflection condition within the optical fibers 14 constituting the input optical member 61.

As with the intermediate optical member 52 employed in the optical device 50, the first intermediate optical member 62 is made by preparing a capillary plate 62d having a number of through holes formed parallel to each other each having a diameter on a par with or smaller than the optical fiber 14 constituting the input optical member 61; forming a light-reflecting metal film 62e on the inner wall of each through hole by vapor deposition, plating, or the like; and filling the through hole with a light-transmitting material 62f having a refractive index of 1.56, so as to form a light-transmitting line. The first intermediate optical member 62 has an entrance surface 62a obliquely cut with respect to the optical axis at an angle of 83.5° and an exit surface 62b cut parallel to the entrance surface 62a, whereby the optical image incident on the entrance surface 62a can be outputted to the exit surface 62b.

The second intermediate optical member 63 is configured similar to the first intermediate optical member 62 but differs therefrom in that it has an entrance surface 63a obliquely cut with respect to the optical axis at an angle of 62.2° and an exit surface 63b cut parallel to the entrance surface 63a.

The output optical member 64 is composed of a number of optical fibers 14 arranged parallel to each other and integrally formed. Also, the output optical member 64 has an entrance surface 64a obliquely cut with respect to the optical axis at an angle of 10° and an exit surface 64b perpendicularly cut with respect to the optical axis, whereby the optical image incident on the entrance surface 64a can be outputted to the exit surface 64b while being reduced in a specific direction.

The exit surface 61b of the input optical member 61 and the entrance surface 62a of the first intermediate optical member 62 are in contact with each other, the exit surface 62b of the first intermediate optical member 62 and the entrance surface 63a of the second intermediate optical member 63 are in contact with each other, and the exit surface 63b of the second intermediate optical member 63 and the entrance surface 64a of the output optical member 64 are in contact with each other. In particular, a line parallel to both of the entrance surface 61a and exit surface 61b of the input optical member 61 and a line parallel to both of the entrance surface 64a and exit surface 64b of the output optical member 64 are perpendicular to each other. As a consequence, the optical image incident on the entrance surface 61a of the input optical member 61 is reduced in the a-axis direction of Fig. 44 by the input optical member 61 and is reduced in the b-axis direction perpendicular to the a-axis direction by the output optical member 64, so as to be outputted from the exit surface 64b of the output optical member 64.

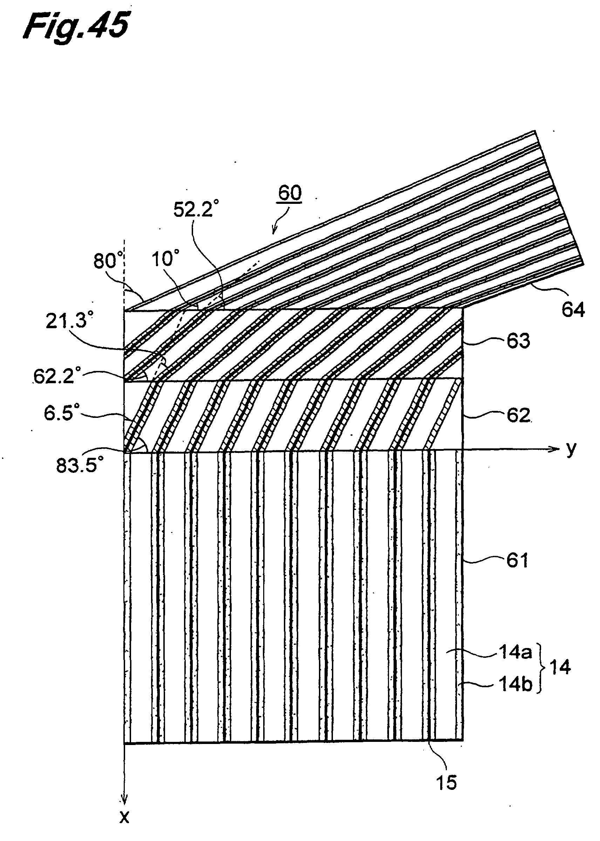

The optical axes of the input optical member 61, first intermediate optical member 62, second intermediate optical member 63, and output optical member 64 are parallel to the xy plane of Fig. 44, whereas Fig. 45 shows a cross-sectional view of the optical device 60 taken along a plane parallel to the xy plane in Fig. 44. Here, since the angle formed between the entrance surface 62a of the first intermediate optical member 62 and its optical axis is 83.5° , the angle formed between the entrance surface 63a of the second intermediate optical member 63 and its optical axis is 62.2° , and the angle formed between the entrance surface 64a of the output optical member 64 and its optical axis is 10° , the angle formed between the optical axis of the input optical member 61 and the optical axis of the first intermediate optical member 62 becomes 6.5° , the angle formed between the optical axis of the first intermediate optical member 62 and the optical axis of the second intermediate optical member 63 becomes 21.3° , and the angle formed between the optical axis of the second intermediate optical member 63 and the optical axis of the output optical member 64 becomes 52.2° , whereby each of them is smaller than 80° , i.e., the angle formed between the optical axis of the input optical member 61 and the optical axis of the output optical member 64.

Further, the angle (52.2° ) formed between the optical axis of the second intermediate optical member 63 and the optical axis of the output optical member 64 is such that a part of the light incident on the entrance surface 64a of the output optical member 64 from the exit surface 63b of the second intermediate optical member 63 satisfies a total reflection condition within the optical fibers 14 constituting the output optical member 64.

Operations and effects of the optical device 60 will now be explained. In the optical device 60, since each of the angle formed between the respective optical axes of the input optical member 61 and first intermediate optical member 62, the angle formed between the respective optical axes of the first intermediate optical member 62 and second intermediate optical member 63, and the angle formed between the respective optical axes of the second intermediate optical member 63 and output optical member 64 is made smaller than the angle formed between the respective optical axes of the input optical member 61 and output optical member 64, even when the angle formed between the respective optical axes of the input optical member 61 and output optical member 64 is a very large angle of 80° , the optical image incident on the entrance surface 61a of the input optical member 61 can efficiently be transmitted to the exit surface 64b of the output optical member 64 while satisfying the total reflection condition within the input optical member 61, first intermediate optical member 62, second intermediate optical member 63, and output optical member 64.

In the above-mentioned optical device 60, various modifications can be considered concerning the angle formed between the optical axis and the entrance surface 61a in the input optical member 61, the angle formed between the optical axis and the entrance surface 62a in the first intermediate optical member 62, the angle formed between the optical axis and the entrance surface 63a in the second intermediate optical member 63, the angle formed between the optical axis and the entrance surface 64a in the output optical member 64, and the like.

Further, though the intermediate optical member 52, first intermediate optical member 62, or second intermediate optical member 63 is made by use of a capillary plate in the above-mentioned optical member 50, 54, 60, or the like, a photosensitive glass substrate may be exposed to light by use of an optical mask, crystallized, etched, and processed into a capillary plate for use.

Also, in the above-mentioned optical device 50, 54, or 60, while the through hole of the intermediate optical member 52, first intermediate optical member 62, or second intermediate optical member 63 is filled with a light-transmitting material, it may be left hollow without being filled with the light-transmitting material.

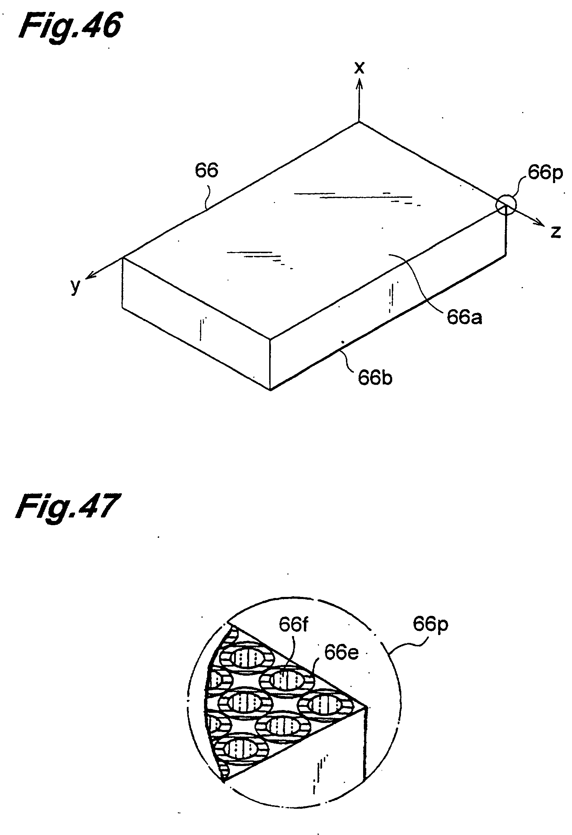

Further, in the above-mentioned optical device 50, 54, or 60, the intermediate optical member 52, first intermediate optical member 62, or second intermediate optical member 63 may be an intermediate optical member 66 as shown in Figs. 46 and 47. Here, Fig. 47 is an enlarged view of a part 66p in Fig. 46. The intermediate optical member 66 is made by preparing light-transmitting fibers 66f, each made of a light-transmitting material such as glass, plastic, or the like, having a diameter on a par with or smaller than the optical fiber 14 constituting the input optical member 51 or the like; coating the outer periphery of each light-transmitting fiber 66f with a metal film 66e by vapor deposition, plating, or the like; arranging the coated light-transmitting fibers 66f parallel to each other; and obliquely cutting the resulting entrance surface 66a and exit surface 66b with respect to the optical axis.

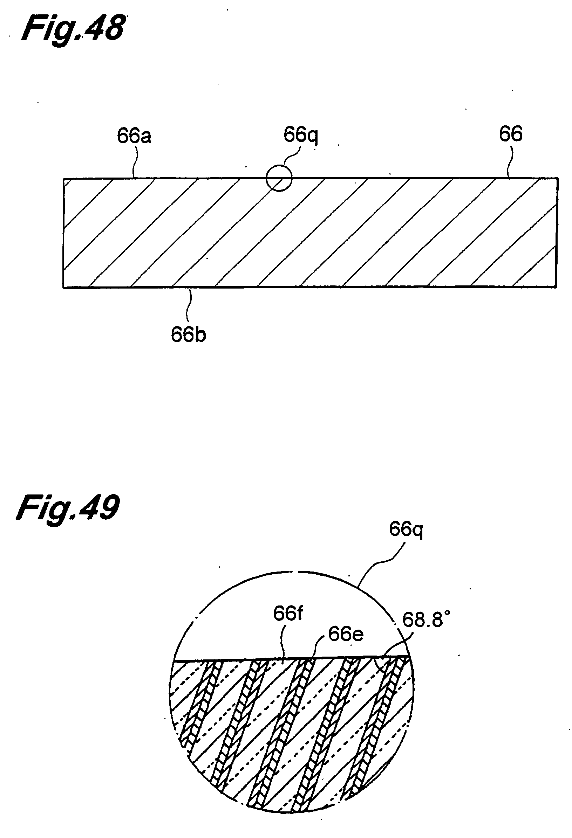

When the intermediate optical member 66 is cut along a plane parallel to the xy plane in Fig. 46, a form shown in Figs. 48 and 49 is yielded. Fig. 49 is an enlarged view of a part 66q in Fig. 48. The'entrance surface 66a forms an angle of 68.8° with respect to the optical axis, whereas the exit surface 66b is formed parallel to the entrance surface 66a.

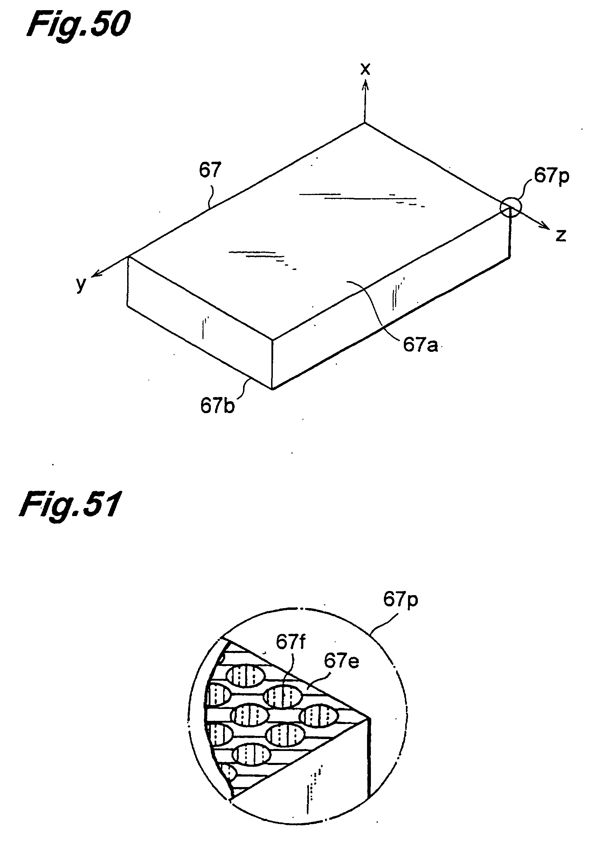

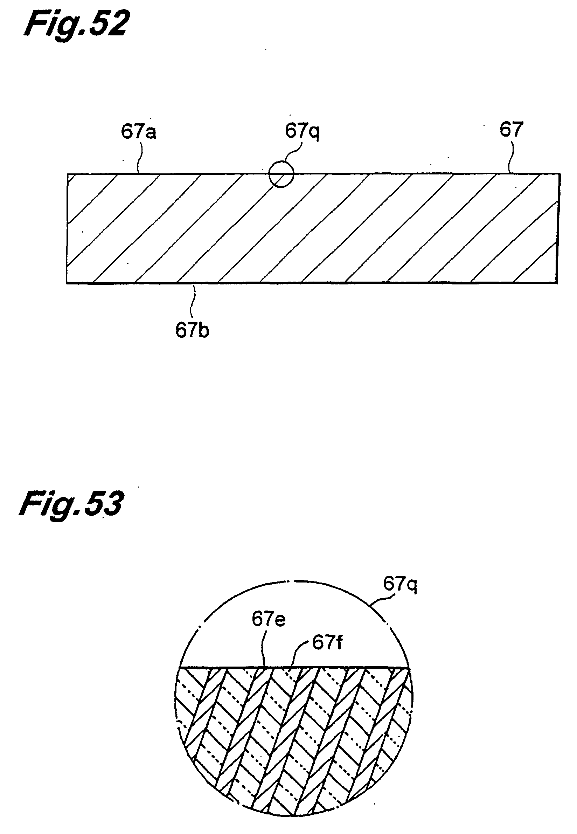

Also, in the above-mentioned optical device 50, 54, or 60, the intermediate optical member 52, first intermediate optical member 62, or second intermediate optical member 63 may be an intermediate optical member 67 as shown in Figs. 50 and 51. Here, Fig. 51 is an enlarged view of a part 67p in Fig. 50. The intermediate optical member 67 is made by forming a plurality of through holes parallel to each other in a thin metal sheet 67e by such a method as punching, etching, or the like, and filling thus formed through holes with a light-transmitting material 67f such as an adhesive, an oil, or the like. The diameter of each through hole is on a par with or smaller than the diameter of the optical fiber 14 constituting the input optical member 51. When the intermediate optical member 67 is cut along a plane parallel to the xy plane in Fig. 50, a form shown in Figs. 52 and 53 is yielded. Fig. 53 is an enlarged view of a part 67q in Fig. 52. The entrance surface 67a forms an angle of 68.8° with respect to the optical axis, whereas the exit surface 67b is formed parallel to the entrance surface 67a.

ix) Ninth Modified Example

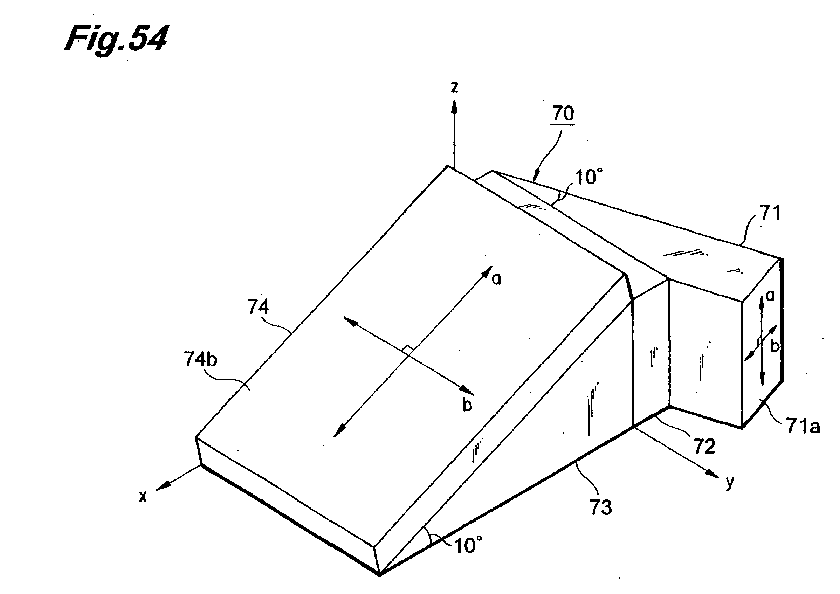

The optical device in accordance with a ninth modified example will now be explained. The optical device in accordance with this modified example is an optical device which transmits an input image while similarly enlarging it. First, the configuration of the optical device in accordance with this modified example will be explained. The optical device 70 in accordance with this modified example mainly comprises, as shown in Fig. 54, an input optical member 71, an intermediate optical member 72, an output optical member 73, and a display optical member 74.

Each of the input optical member 71, intermediate optical member 72, output optical member 73, and display optical member 74 is composed of a number of optical fibers 14 arranged parallel to each other and integrally formed. In the optical fibers 14 constituting each optical member, the refractive index of the core 14a, the refractive index of the cladding 14b, and the numerical aperture are as shown in Table 10.

TABLE 10

|  | Core Refractive Index | Cladding Refractive Index | Numerical Aperture |
| --- | --- | --- | --- |
| Input Optical Member | 1.82 | 1.495 | 1.0 |
| Intermediate Optical Member | 1.82 | 1.495 | 1.0 |
| Output Optical Member | 1.82 | 1.495 | 1.0 |
| Display Optical Member | 1.82 | 1.495 | 1.0 |

Also, gaps among the individual optical fibers 14 constituting each optical member are filled with a light-absorbing material 15.

The input optical member 71 has an entrance surface 71a which is perpendicularly cut with respect to the optical axis, and an exit surface 71b which is obliquely cut with respect to the optical axis at an angle of 10° , whereby an optical image incident on the entrance surface 71a can be outputted to the exit surface 71b while being enlarged in a specific direction.

The intermediate optical member 72 has an entrance surface 72a which is obliquely cut with respect to the optical axis at an angle of 55° and an exit surface 72b which is cut parallel to the entrance surface 72a, whereby an optical image incident on the entrance surface 72a can be outputted to the exit surface 72b.

The output optical member 73 has an entrance surface 73a which is perpendicularly cut with respect to the optical axis, and an exit surface 73b which is obliquely cut with respect to the optical axis at an angle of 10° , whereby an optical image incident on the entrance surface 73a can be outputted to the exit surface 73b while being enlarged in a specific direction.

The display optical member 74 has an entrance surface 74a which is obliquely cut with respect to the optical axis at an angle of 55° and an exit surface 74b which is cut parallel to the entrance surface 74a, whereby an optical image incident on the entrance surface 74a can be outputted to the exit surface 74b.

The exit surface 71b of the input optical member 71 and the entrance surface 72a of the intermediate optical member 72 are in contact with each other, the exit surface 72b of the intermediate optical member 72 and the entrance surface 73a of the output optical member 73 are in contact with each other, and the exit surface 73b of the output optical member 73 and the entrance surface 74a of the display optical member 74 are in contact with each other. In particular, a line parallel to both of the entrance surface 71a and exit surface 71b of the input optical member 71 and a line parallel to both of the entrance surface 73a and exit surface 73b of the output optical member 73 are perpendicular to each other. As a consequence, the optical image incident on the entrance surface 71a of the input optical member 71 is enlarged in the b-axis direction of Fig. 54 by the input optical member 71 and in the a-axis direction perpendicular to the b-axis direction by the output optical member 73, and then is outputted from the exit surface 74b of the display optical member 74.

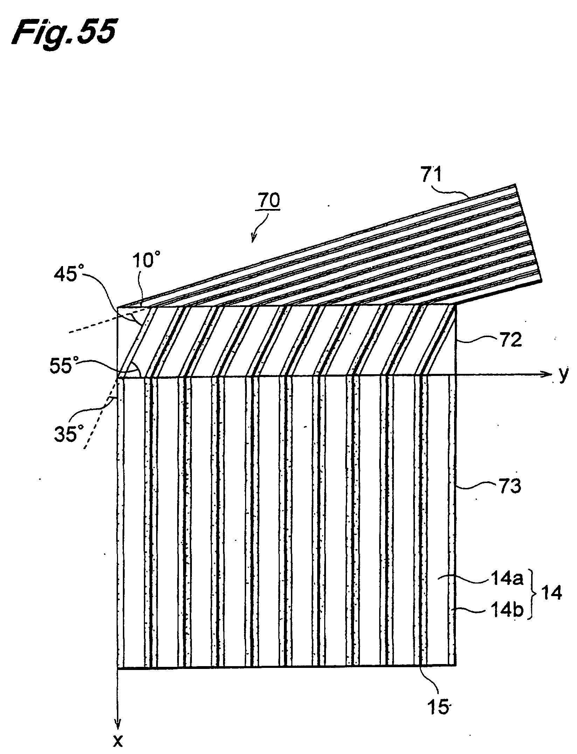

The optical axes of the input optical member 71, intermediate optical member 72, and output optical member 73 are parallel to the xy plane of Fig. 54, whereas Fig. 55 shows a cross-sectional view of the optical device 70 taken along a plane parallel to the xy plane in Fig. 54. Here, since the angle formed between the entrance surface 71a of the intermediate optical member 71 and its optical axis is 10° , and the angle formed between the entrance surface 72a of the output optical member 72 and its optical axis is 10° , the angle formed between the optical axis of the input optical member 71 and the optical axis of the intermediate optical member 72 becomes 45° , and the angle formed between the optical axis of the intermediate optical member 72 and the optical axis of the output optical member 73 becomes 35° , whereby each of them is smaller than 80° , i.e., the angle formed between the optical axis of the input optical member 71 and the optical axis of the output optical member 73.

Further, the angle (45° ) formed between the optical axis of the input optical member 71 and the optical axis of the intermediate optical member 72 is such an angle that about 50% of the light incident on the entrance surface 72a of the intermediate optical member 72 from the exit surface 71b of the input optical member 71 satisfies a total reflection condition within the optical fibers 14 constituting the intermediate optical member 72, whereas the angle (35° ) formed between the optical axis of the intermediate optical member 72 and the optical axis of the output optical member 73 is such that about 36% of the light incident on the entrance surface 73a of the output optical member 73 from the exit surface 72b of the intermediate optical member 72 satisfies a total reflection condition within the output optical member 73.

Operations and effects of the optical device in accordance with this modified example will now be explained. As a consequence of the above-mentioned configuration, the optical device 70 can efficiently enlarge and transmit an optical image incident on the entrance surface 71a of the input optical member 71, thereby yielding an enlarged image with a high resolution from the exit surface 74b of the display optical member 74.

Also, since the optical device 70 comprises the display optical member 74, it can cause the light outputted from the exit surface 73b of the output optical member 73 toward the oblique surface to be emitted perpendicular to the viewing surface, whereby a brighter, clearer enlarged image can be obtained.

In the optical device 70, the angle formed between the optical axis of the input optical member 71 and its exit surface 71b is not needed to be restricted to 10° but may be set freely so as to satisfy a desirable magnification.

Also, in the optical device 70, though the angle formed between the optical axis of the intermediate optical member 72 and its entrance surface 72a is set to 55° in order that about 50% of the light incident on the entrance surface 72a of the intermediate optical member 72 from the exit surface 71b of the input optical member 71 can be transmitted while satisfying the total reflection condition and in order that about 36% of the light incident on the entrance surface 73a of the output optical member 73 from the exit surface 72b of the intermediate optical member 72 can be transmitted while satisfying the total reflection condition, this angle is not limited to 55° but any angle as long as at least a part of the light incident on the entrance surface 72a of the intermediate optical member 72 from the exit surface 71b of the input optical member 71 can propagate while satisfying the total reflection condition and at least a part of the light incident on the entrance surface 73a of the output optical member 73 from the exit surface 72b of the intermediate optical member 72 can propagate while satisfying the total reflection condition.

Here, Table 11 shows, in the case where the angle $\gamma_1$ formed between the optical axis and the entrance surface 72a of the intermediate optical member 72 is varied, of the light incident on the entrance surface 71a of the input optical member 71, the ratio D (product of the respective light-receiving angle ratios of the individual optical members) of the light propagating to the exit surface 73b of the output optical member 73 while satisfying the total reflection condition.

TABLE 11

| $\gamma_1$ | D |
|---|---|
| 70.0° | 10.2% |
| 55.0° | 17.9% |
| 45.0° | 17.9% |
| 35.0° | 13.8% |

As shown in Table 11, even when the angle $\gamma_1$ formed between the optical axis and the entrance surface 72a in the intermediate optical member 72 is changed in a wide range of 35° to 70° , the optical image incident on the entrance surface 71a of the input optical member 71 can efficiently be transmitted to the exit surface 73b of the output optical member 73.

(7) Modified Example of Imaging Unit Using Optical Device According to Embodiment of Present Invention

Though the above-mentioned imaging unit 100 mainly comprises the above-mentioned optical device 10 and CCD 101, it may mainly comprise any of the optical devices in accordance with the above-mentioned first to eighth modified examples and the CCD 101.
Also, though all the side faces of each optical device are provided with the light-shielding material 102 in the above-mentioned imaging unit 100, it need not be formed on all the side faces. In the case where the optical device 16 in accordance with the first modified example, the optical device 35 in accordance with the above-mentioned fourth modified example, or the optical device 54 in accordance with the seventh modified example is used for constituting the imaging unit, in particular, it is preferred that the side faces be formed with a part having no light-shielding material 102 in order for the light to be incident on the entrance surface of the input optical member.

(8) Modified Example of Imaging Apparatus Using Optical Device According to Embodiment of Present Invention

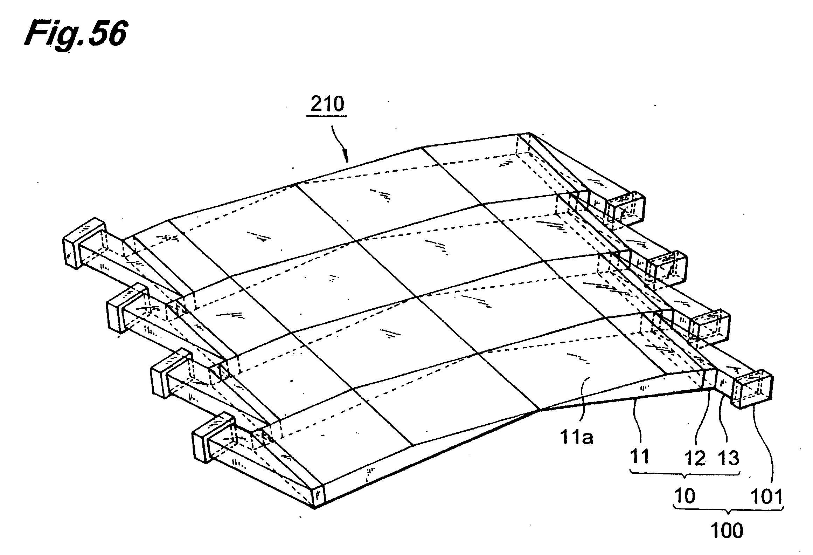

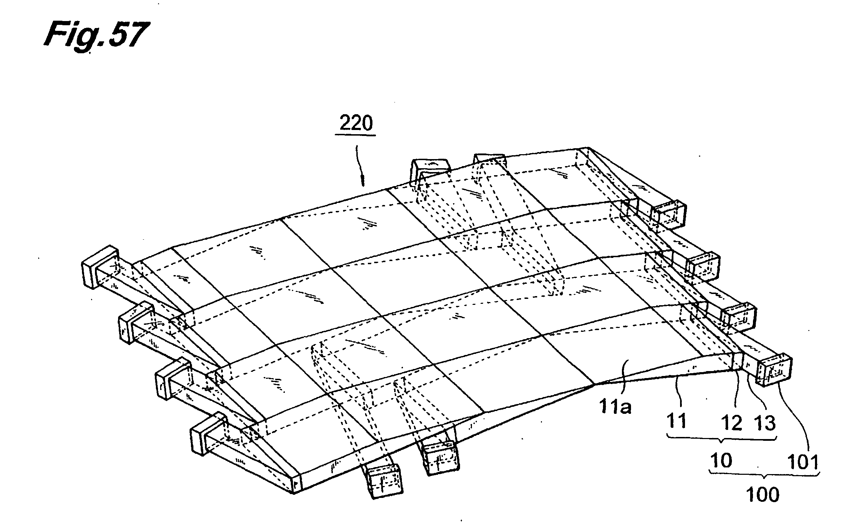

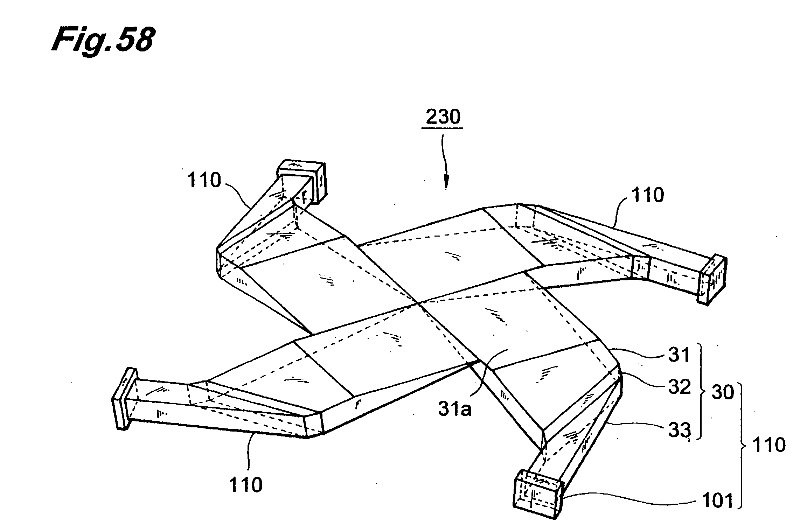

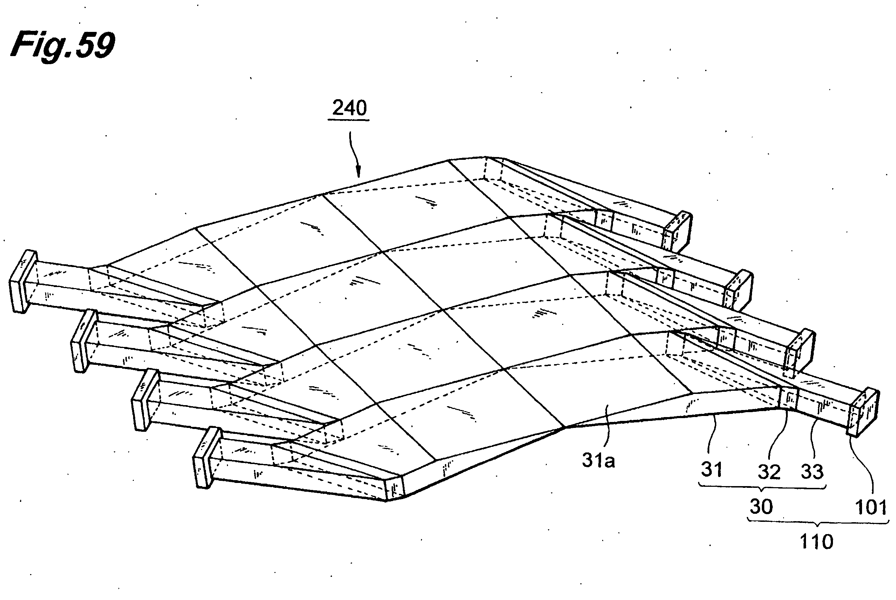

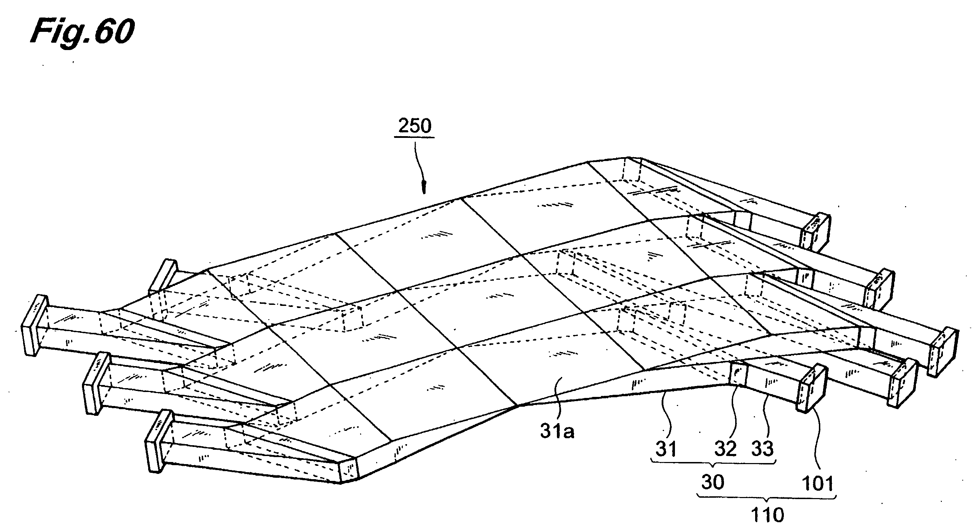

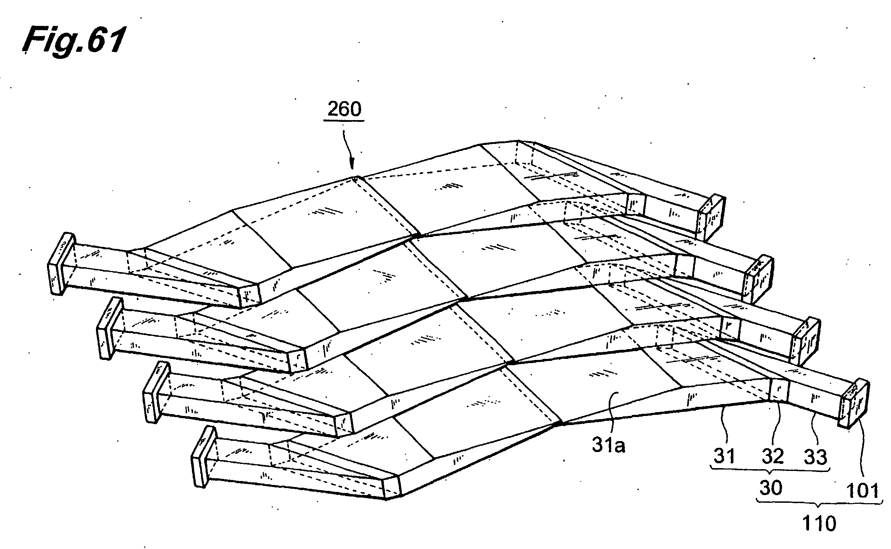

A modified example of the imaging apparatus using the optical device in accordance with the embodiment of the present invention will now be explained. Though the imaging apparatus explained with reference to Fig. 9 is constituted by four sets of imaging units 100 explained with reference to Fig. 8, they are not restricted to four sets, but may be varied according to the size of imaging patterns.
For example, 8 sets of imaging units 100 may be assembled to constitute an imaging apparatus 210 as shown in Fig. 56. Also, 12 sets of imaging units 100 may be assembled to constitute an imaging apparatus 220 as shown in Fig. 57.
Further, though the modified examples mentioned above comprise the imaging units 100 using the optical device 10 explained with reference to Fig. 2, they may be constituted by optical devices in accordance with various modified examples mentioned above. For example, when four sets of imaging units 110 each comprising the optical device 30 explained with reference to Fig. 19 and the CCD 101 in combination are arranged, an imaging apparatus 230 shown in Fig. 58 is realized. Similarly, an imaging apparatus 240 shown in Fig. 59 is realized when eight sets of imaging units 110 are arranged, whereas an imaging apparatus 250 shown in Fig. 60 is realized when nine sets of imaging units 110 are arranged.
Also, though the individual imaging units 110 are arranged without gaps such that the entrance surfaces 31a of their respective input optical members 31 do not overlap each other, so as to constitute each of the above-mentioned imaging apparatus, the imaging units 110 may be arranged such that the edge side portions of the entrance surfaces 31a of the input optical members 31 overlap each other as in the imaging apparatus 260 shown in Fig. 61. When the edge side portions of the entrance surfaces 31a of the input optical members 31 are arranged in an overlapping fashion, then influences of dead spaces occurring in the edge side portions can be eliminated. Here, data in the overlapping areas can be eliminated by image processing as appropriate.

(9) Modified Example of Radiation Image Sensor Using Optical Device According to Embodiment of Present invention

A modified example of the radiation image sensor using the optical device in accordance with the embodiment of the present invention will now be explained. First, the configuration of the radiation image sensor in accordance with this modified example will be explained. Though the entrance surface 11a of the input optical member 11 is roughly ground in the radiation image sensor 300 explained with reference to Fig. 10 in order for the light generated upon incidence of a radiation on the phosphor 301 to efficiently enter the input optical member 11, a flat optical member 311 as indicated in the following may be provided instead of roughly grinding the entrance surface 11a of the input optical member 11. It will be explained in detail in the following.

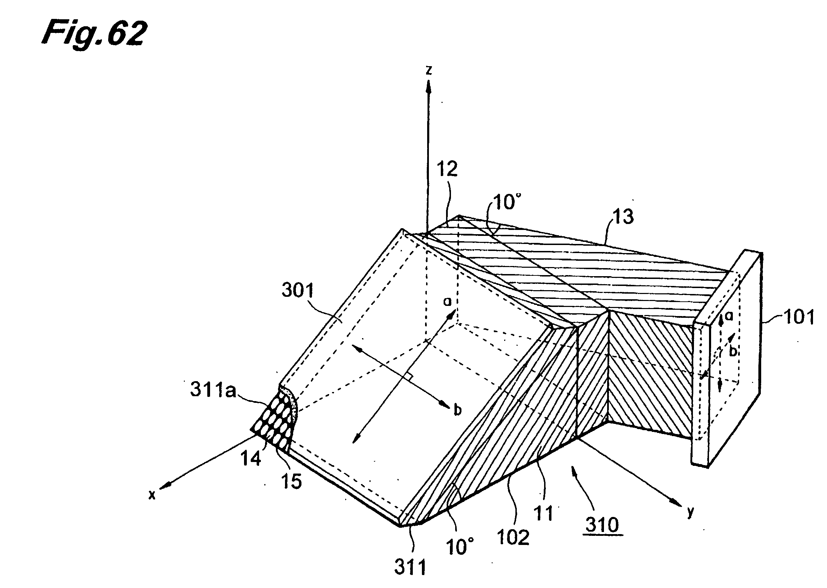

The radiation image sensor 310 comprises, as shown in Fig. 62, the above-mentioned imaging unit 100 (i.e., imaging unit 100 comprising an input optical member 11, an intermediate optical member 12, an output optical member 13, a CCD 101, and a light-shielding material 102); the flat optical member 311 disposed on the entrance surface 11a of the input optical member 11 constituting the imaging unit 100; and the phosphor 301, disposed on the entrance surface 311a of the flat optical member 311, for emitting light upon incidence of a radiation. Here, for securing a demagnification of incident images, the entrance surface 11a of the input optical member 11 forms an angle of 10° with the optical axis, and the entrance surface 13a of the output optical member 13 forms an angle of 10° with the optical axis.

The flat optical member 311 is composed of a number of optical fibers 14 arranged parallel to each other and integrally formed. Also, the flat optical member 311 has the entrance surface 311a obliquely cut with respect to the optical axis at an angle of 50° and an exit surface 311b cut parallel to the entrance surface 311a, whereas all the surfaces of the flat optical member 311 excluding the entrance surface 311a and exit surface 311b are covered with the light-shielding material 102. The entrance surface 311a of the flat optical member 311 is formed with the phosphor 301 adapted to emit light upon incidence of a radiation.

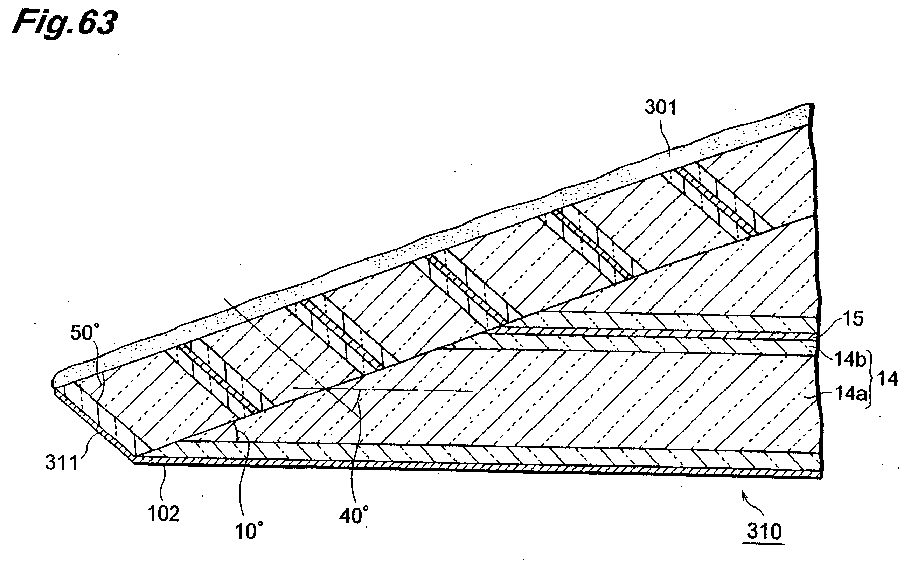

The exit surface 311b of the flat optical member 311 and the entrance surface 11a of the input optical member 11 are in contact with each other, the exit surface 11b of the input optical member 11 and the entrance surface 12a of the intermediate optical member 12 are in contact with each other, the exit surface 12b of the intermediate optical member 12 and the entrance surface 13a of the output optical member 13 are in contact with each other, and the exit surface 13b of the output optical member 13 and the light-receiving surface of the CCD 101 are in contact with each other. Here, as shown in Fig. 63 which is an enlarged sectional view of the radiation image sensor 310 taken along a plane parallel to the xz plane of Fig. 62, the flat optical member 311 and the input optical member 11 are arranged such that the angle (40°) formed between the optical axis of the flat optical member 311 and the optical axis of the input optical member 11 is the difference between the angle (50°) formed between the optical axis of the flat optical member 311 and its exit surface 311b and the angle (10°) formed between the optical axis of the input optical member 11 and its entrance surface 11a.

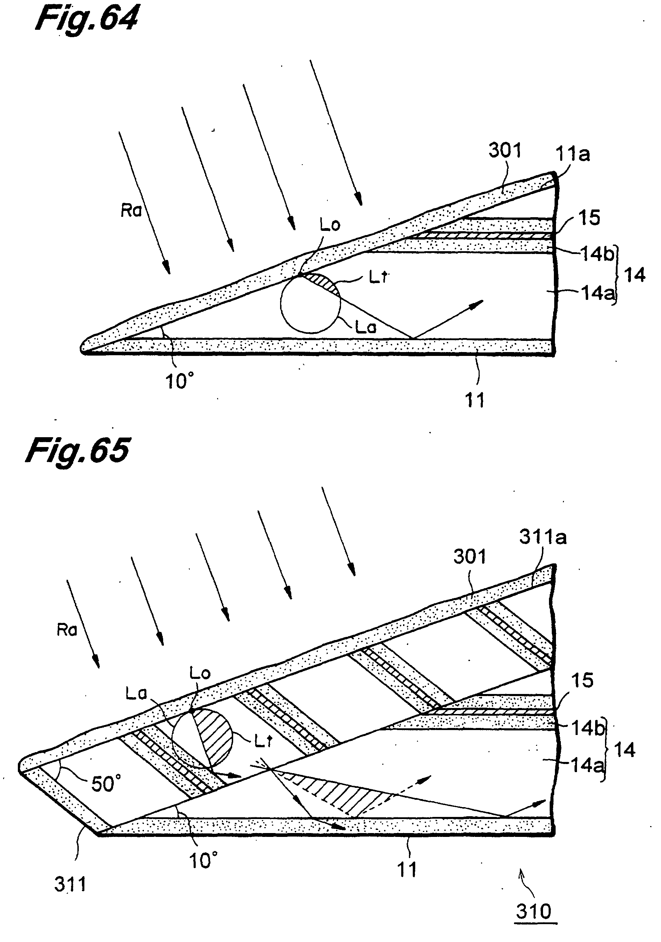

Operations and effects of the radiation image sensor 310 will now be explained. Fig. 64 shows the state of incidence of light in the case where the light emitted by the phosphor upon incidence of a radiation enters the entrance surface 11a of the input optical member 11 without the aid of the flat optical member 311, whereas Fig. 65 shows the state of incidence of light in the case where the light enters the entrance surface 311a of the flat optical member 311.

$L_a$ shown in Figs. 64 and 65 is a circle indicating the advancing direction and intensity of the light emitted at $L_0$ as with the one shown in Figs. 12 and 13. Here, the length of the chord formed by a line drawn from $L_0$ in a specific direction and this circle indicates the intensity of light advancing in the specific direction. Also, the hatched area $L_t$ indicates, of the light emitted at $L_0$, the part propagating through the optical fibers 14 constituting the optical members while satisfying the total reflection condition.

Here, in the case where the flat optical member 311 is not provided, as shown in Fig. 64, of the diffused light $L_a$ emitted from $L_0$, the ratio of light (hatched area $L_t$) propagating through the optical fibers 14 constituting the input optical member 11 while satisfying the total reflection condition is quite small, since the angle formed between the normal direction of the entrance surface 11a and the optical axis is large. By contrast, in the case where the flat optical member 311 is provided, as shown in Fig. 65, the angle formed between the normal direction of the entrance surface 311a and the optical axis can be reduced, so that, of the diffused light $L_a$ emitted from $L_0$, the ratio of light (hatched area $L_t$) propagating through the optical fibers 14 constituting the flat optical member 311 while satisfying the total reflection condition can be increased. As a result, the amount of light transmitted through each of the optical members constituting the radiation image sensor 310 increases, whereby a quite clear captured image can be obtained by the CCD 101.

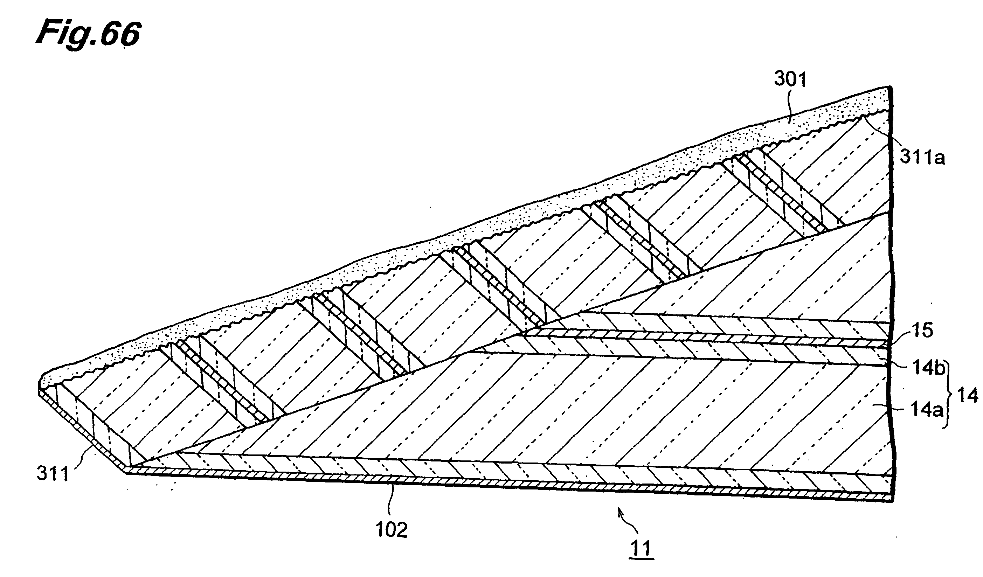

Also, when the flat optical member 311 is provided as mentioned above, the entrance surface 311a of the flat optical member 311 may be ground, as shown in Fig. 66, such that the center-line average roughness lies within the range of 0.20 to 0.80 μm. When the entrance surface 311a of the flat optical member 311 is roughly ground, the light generated upon incidence of a radiation on the phosphor 301 is scattered by the entrance surface 311a of the flat optical member 311, so that the light is incident on the flat optical member 311 with a wider angle of incidence, whereby the ratio of light advancing through each optical member while satisfying the total reflection condition increases.

Though the entrance surface 11a of the input optical member 11 constituting the radiation image sensor 300 or the entrance surface 311a of the flat optical member 311 constituting the radiation image sensor 310 is ground such that the center-line average roughness lies within the range of 0.20 to 0.80 μm, the following configuration may be employed as well.

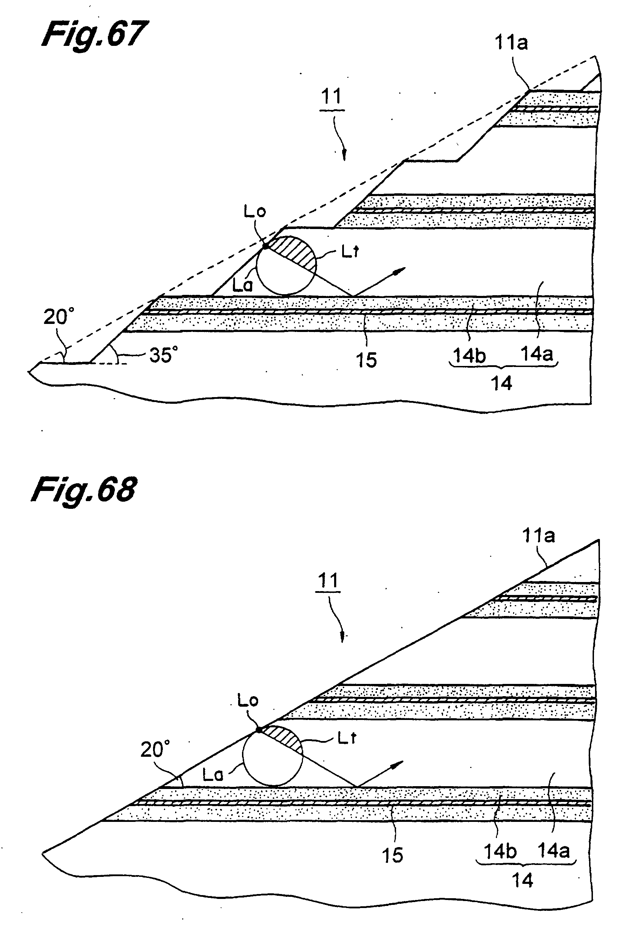

Namely, as shown in Fig. 67, the entrance surface 11a of the input optical member 11 may be cut stepwise in its tilting direction. As a consequence of such processing, while the entrance surface as a whole maintains an angle of 20° with respect to the optical axis, portions having an angle of 35° with respect to the optical axis are partly formed therein. As a result, the angle formed between the normal of such a portion and the fiber axis becomes smaller, whereby the ratio of light propagating through each optical member while satisfying the total reflection condition can be increased as compared with the input optical member 11 shown in Fig. 68 uniformly having an angle of 20° with respect to the optical axis.

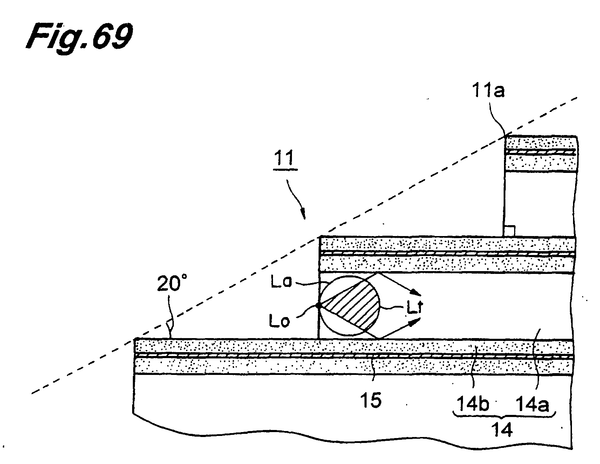

Also, as shown in Fig. 69, the entrance surface 11a of the input optical member 11 can be processed stepwise such that it becomes partly perpendicular to the optical axis. Such processing also makes it possible to increase the ratio of light propagating through each optical member while satisfying the total reflection condition as compared with the input optical member 11 shown in Fig. 68 uniformly having an angle of 20° with respect to the optical axis.

**Industrial Applicability**

As mentioned above, the optical device of the present invention can be used in radiation image sensors and fingerprint identifying apparatus, for example.

**Claims**

**1.** An optical device comprising:

a first optical member (1; 11; 17; 31; 36; 51; 55; 71), composed of a plurality of optical fibers (14) arranged parallel to each other and integrally formed, having a first entrance surface (1a; 11a; 18a; 31a; 37a; 51a; 71a) and a first exit surface (1b; 11b; 31b; 51b) which intersect an optical axis (62) at respective angles of $\alpha_1$, $\beta_1$;
an intermediate optical member (2; 12; 32; 52; 66; 67; 72), composed of a plurality of light-transmitting lines (14; 52e,52f; 66e,66f; 67f) arranged parallel to each other, having a first end face (2a; 12a; 32a; 52a; 66a; 67a) and a second end face (2b; 12b; 32b; 52b; 66b; 67b) which intersect an axis (62) of said light-transmitting lines at respective angles of $\gamma_1$, $\gamma_2$; and
a second optical member (3; 13; 33; 53; 73), composed of a plurality of optical fibers (14) arranged parallel to each other and integrally formed, having a second entrance surface (3a; 13a; 33a) and a second exit surface (3b; 13b; 33b; 53b) which intersect an optical axis (3) at respective angles of $\alpha_2$, $\beta_2$;

wherein said first exit surface and said first end face are in contact with each other, and said second end face and said second entrance surface are in contact with each other; and
wherein an angle $\theta_1$ formed between the optical axis of the fibres of said first optical member and the axis of the light-transmitting lines of said intermediate optical member,
an angle $\theta_2$ formed between the axis of the light-transmitting lines of said intermediate optical member and the optical axis of the fibres of said second optical member, and
an angle $\theta_3$ formed between the optical axis of the fibres of said first optical member and the optical axis of the fibres of said second optical member have relationships of

$$\theta_3 > \theta_1, \text{ and } \theta_3 > \theta_2$$

therebetween **characterised in that** the optical axes of the fibres of said first and second optical members and said axis of the light-transmitting lines of the intermediate optical member all lie parallel to the same plane (x, y).

**2.** An optical device according to claim 1, wherein said intermediate optical member (2; 12; 32; 72) is an optical member in which a plurality of optical fibers (14) are arranged parallel to each other and integrally formed.

**3.** An optical device according to claim 1 or 2, wherein relationships of $\alpha_1 < \beta_1$, $\alpha_2 < \beta_2$, and $\gamma_1 = \gamma_2$ are satisfied; and
wherein a line parallel to both of said first entrance surface and said first exit surface and a line parallel to both of said second entrance surface and said second exit surface are orthogonal to each other.

**4.** An optical device comprising:

a first optical member (21; 41; 61), composed of a plurality of optical fibers (14) arranged parallel to each other and integrally formed, having a first entrance surface (21a; 41a; 61a) and a first exit surface (21b; 41b; 61b) which intersect an optical axis at respective angles of $\alpha_1$, $\beta_1$;
first to n-th intermediate optical members (22,23; 42,43; 62,63) whose number is n, where n is an integer of at least 2; and
a second optical member (24; 44; 64), composed of a plurality of optical fibers (14) arranged parallel to each other and integrally formed, having a second entrance surface (24a; 44a; 64a) and a second exit surface (24b; 44b; 64b) which intersect an optical axis at respective angles of $\alpha_2$, $\beta_2$;

wherein the i-th intermediate optical member, where i is an integer from 1 to n, is composed of a plurality of light-transmitting lines (14; 52e,52f; 66e,66f; 67f) arranged parallel to each other and has a (2i-1)-th end face and a 2i-th end face which intersect an axis of said light-transmitting lines at respective angles of $\gamma_{2i-1}$, $\gamma_{2i}$;
wherein the optical axes of the fibres of said first and second optical members and said axis of the light-transmitting lines of each of said intermediate optical members all lie parallel to the same plane (x, y);
wherein said first exit surface and the first end face of the first intermediate optical member are in contact with each other when i = 1, and said 2i-th end face and said (2i+1)-th end face are in contact with each other when i is an integer from i to n-1, and said 2n-th end face and said second entrance surface are in contact with each other; and
wherein each of an angle $\theta_1$ formed between the optical axis of the fibres of said first optical member and the axis of the light-transmitting lines of said first intermediate optical member,
an angle $\theta_{i+1}$ formed between the axis of the light-transmitting lines of said i-th intermediate optical member and the axis of the light-transmitting lines of said (i+1)-th intermediate optical member, where i is an integer from 1 to n-1, and
an angle $\theta_{n+1}$ formed between the axis of the light-transmitting lines of said n-th intermediate optical member and the optical axis of the fibres of said second optical member is smaller than an angle $\theta_{n+2}$ formed between the optical axis of the fibres of said first optical member and the optical axis of the fibres of said second optical member.

5. An optical device according to claim 4, wherein at least one of said n intermediate optical members (22,23; 42,43) is an optical member in which a plurality of optical fibers (14) are arranged parallel to each other and integrally formed.

6. An optical device according to claim 4 or 5, wherein relationships of $\alpha_1 < \beta_1$, and $\alpha_2 < \beta_2$ are satisfied, and a relationship of $\gamma_{2i-1} = \gamma_{2i}$ is satisfied for each i from 1 to n; and
wherein a line parallel to both of said first entrance surface and said first exit surface and a line parallel to both of said second entrance surface and said second exit surface are orthogonal to each other.

7. An optical device according to claim 3 or 6, wherein $\beta_1$ is a right angle.

8. An optical device according to claim 3 or 6, wherein $\beta_1$ is an acute angle.

9. An imaging unit comprising:

the optical device according to claim 1 or 4; and
an imaging device (101) disposed in contact with said second exit surface.

10. An imaging unit according to claim 9, wherein at least a part of surfaces of said first optical member, second optical member, and intermediate optical member is provided with a light-shielding material (102).

11. An imaging apparatus having a plurality of sets of the imaging units (100; 110) according to claim 9,
wherein said plurality of sets of imaging units are arranged such that the respective first entrance surfaces of said imaging units substantially align on an identical plane.

12. A radiation image sensor comprising:

the imaging unit according to claim 9; and
a phosphor (301), disposed on said first entrance surface, for emitting light upon incidence of a radiation.

13. A radiation image sensor according to claim 12, wherein said first entrance surface (11a) is ground so as to yield a center-line average roughness within the range of 0.20 to 0.80 $\mu$m.

**14.** A fingerprint identifying apparatus comprising:

an imaging unit (100) for capturing an image of a fingerprint;
a fingerprint identifying section (401) for identifying the fingerprint image captured by said imaging unit with a reference pattern registered beforehand; and
a display section (402) for displaying a result of identification obtained by said fingerprint identifying section;

wherein said imaging unit is the imaging unit according to claim 9.

**Patentansprüche**

**1.** Optische Vorrichtung, die aufweist:

- ein erstes optisches Element (1; 11; 17; 31; 36; 51; 55; 71), das aus einer Vielzahl von optischen Fasern (14) besteht, die zueinander parallel angeordnet und einstückig ausgebildet sind, mit einer ersten Eintrittsoberfläche (1a; 11a; 18a; 31a; 37a; 51a; 71a) und einer ersten Austrittsoberfläche (1b; 11b; 31b; 51b), welche eine optische Achse (62) jeweils in Winkeln $\alpha_1$, $\beta_1$ schneiden,
- ein optisches Zwischenelement (2; 12; 32; 52; 66; 67; 72), das aus einer Vielzahl von lichtübertragenden Leitungen (14; 52e, 52f; 66e, 66f; 67f) besteht, die zueinander parallel angeordnet sind, mit einer ersten Endfläche (2a; 12a; 32a; 52a; 66a; 67a) und einer zweiten Endfläche (2b; 12b; 32b; 52b; 66b; 67b), welche eine Achse (62) der lichtübertragenden Leitungen jeweils in Winkeln $\gamma_1$, $\gamma_2$ schneiden, und
- ein zweites optisches Element (3; 13; 33; 53; 73), das aus einer Vielzahl von optischen Fasern (14) besteht, die zueinander parallel angeordnet und einstückig ausgebildet sind, mit einer zweiten Eintrittsoberfläche (3a; 13a; 33a) und einer zweiten Austrittsoberfläche (3b; 13b; 33b; 53b), welche eine optische Achse (3) jeweils in Winkeln $\alpha_2$, $\beta_2$ schneiden,

wobei die erste Austrittsoberfläche und die erste Endfläche miteinander in Kontakt sind sowie die zweite Endfläche und die zweite Eintrittsoberfläche miteinander in Kontakt sind, und
wobei ein Winkel $\theta_1$, der zwischen der optischen Achse der Fasern des ersten optischen Elements und der Achse der lichtübertragenden Leitungen des optischen Zwischenelements ausgebildet ist,
ein Winkel $\theta_2$, der zwischen der Achse der lichtübertragenden Leitungen des optischen Zwischenelements und der optischen Achse der Fasern des zweiten optischen Elements ausgebildet ist, und
ein Winkel $\theta_3$, der zwischen der optischen Achse der Fasern des ersten optischen Elements und der optischen Achse der Fasern des zweiten optischen Elements ausgebildet ist, untereinander die Beziehungen

$$\theta_3 > \theta_1 \text{ und } \theta_3 > \theta_2$$

aufweisen,
**dadurch gekennzeichnet, daß**
die optischen Achsen der Fasern des ersten optischen Elements und des zweiten optischen Elements sowie die Achsen der lichtübertragenden Leitungen des optischen Zwischenelements alle parallel zu derselben Ebene (x, y) liegen.

**2.** Optische Vorrichtung gemäß Anspruch 1, wobei das optische Zwischenelement (2; 12;; 32; 72) ein optisches Element ist, in welchem eine Vielzahl von optischen Fasern (14) zueinander parallel angeordnet und einstückig ausgebildet ist.

**3.** Optische Vorrichtung gemäß Anspruch 1 oder 2, wobei die Beziehungen $\alpha_1 < \beta_1$, $\alpha_2 < \beta_2$ und $\gamma_1 = \gamma_2$ erfüllt sind, und wobei eine Linie parallel zu sowohl der ersten Eintrittsoberfläche als auch der ersten Austrittsoberfläche und eine Linie parallel zu sowohl der zweiten Eintrittsoberfläche als auch der zweiten Austrittsoberfläche zueinander rechtwinklig sind.

**4.** Optische Vorrichtung, die aufweist:

- ein erstes optisches Element (21; 41; 61), das aus einer Vielzahl von optischen Fasern (14) besteht, die zueinander parallel angeordnet und einstückig ausgebildet sind, mit einer ersten Eintrittsoberfläche (21a; 41a;

61a) und einer ersten Austrittsoberfläche (21b; 41b; 61b), welche eine optische Achse jeweils in Winkeln $\alpha_1$, $\beta_1$ schneiden,

- erste bis n-te optische Zwischenelemente (22, 23; 42, 43; 62, 63), deren Anzahl n ist, wobei n eine Ganzzahl von mindestens 2 ist, und

- ein zweites optisches Element (24; 44; 64), das aus einer Vielzahl von optischen Fasern (14) besteht, die zueinander parallel angeordnet und einstückig ausgebildet sind, mit einer zweiten Eintrittsoberfläche (24a; 44a; 64a) und einer zweiten Austrittsoberfläche (24b; 44b; 64b), welche eine optische Achse jeweils in Winkeln $\alpha_2$, $\beta_2$ schneiden,

wobei das i-te optische Zwischenelement, wenn i eine Ganzzahl von 1 bis n ist, aus einer Vielzahl von lichtübertragenden Leitungen (14; 52e, 52f; 66e, 66f; 67f) besteht, die zueinander parallel angeordnet sind, und eine (2i-1)-te Endfläche und eine 2i-te Endfläche aufweist, welche eine Achse der lichtübertragenden Leitungen jeweils in Winkeln $\gamma_{2i-1}$, $\gamma_{2i}$ schneiden,

wobei die optischen Achsen der Fasern des ersten optischen Elements und des zweiten optischen Elements sowie die Achsen der lichtübertragenden Leitungen jedes der optischen Zwischenelemente alle parallel zu derselben Ebene (x, y) liegen,

wobei die erste Austrittsoberfläche und die erste Endfläche des ersten optischen Zwischenelements miteinander in Kontakt sind, wenn i = 1 ist, und die 2i-te Endfläche und die (2i+1)-te Endfläche miteinander in Kontakt sind, wenn i eine Ganzzahl von i bis n-1 ist, und die 2n-te Endfläche und die zweite Eintrittsoberfläche miteinander in Kontakt sind, und

wobei jeweils ein Winkel $\theta_1$, der zwischen der optischen Achse der Fasern des ersten optischen Elements und der Achse der lichtübertragenden Leitungen des ersten optischen Zwischenelements ausgebildet ist,

ein Winkel $\theta_{i+1}$, der zwischen der Achse der lichtübertragenden Leitungen des i-ten optischen Zwischenelements und der Achse der lichtübertragenden Leitungen des (i+1)-ten optischen Zwischenelements ausgebildet ist, wenn i eine Ganzzahl von 1 bis n-1 ist, und

ein Winkel $\theta_{n+1}$, der zwischen der Achse der lichtübertragenden Leitungen des n-ten optischen Zwischenelements und der optischen Achse der Fasern des zweiten optischen Elements ausgebildet ist, kleiner als ein Winkel $\theta_{n+2}$ ist, der zwischen der optischen Achse der Fasern des ersten optischen Elements und der optischen Achse der Fasern des zweiten optischen Elements ausgebildet ist.

5. Optische Vorrichtung gemäß Anspruch 4, wobei mindestens eines der n optischen Zwischenelemente (22, 23; 42, 43) ein optisches Element ist, in welchem eine Vielzahl von optischen Fasern (14) zueinander parallel angeordnet und einstückig ausgebildet ist.

6. Optische Vorrichtung gemäß Anspruch 4 oder 5, wobei die Beziehungen $\alpha_1 < \beta_1$ und $\alpha_2 < \beta_2$ erfüllt sind und eine Beziehung $\gamma_{2i-1} = \gamma_{2i}$ für jedes i von 1 bis n erfüllt ist, und

wobei eine Linie parallel zu sowohl der ersten Eintrittsoberfläche als auch der ersten Austrittsoberfläche und eine Linie parallel zu sowohl der zweiten Eintrittsoberfläche als auch der zweiten Austrittsoberfläche zueinander rechtwinklig sind.

7. Optische Vorrichtung gemäß Anspruch 3 oder 6, wobei $\beta_1$ ein rechter Winkel ist.

8. Optische Vorrichtung gemäß Anspruch 3 oder 6, wobei $\beta_1$ ein spitzer Winkel ist.

9. Abbildungseinheit, die aufweist:

- die optische Vorrichtung gemäß Anspruch 1 oder 4 und
- eine Abbildungsvorrichtung (101), die in Kontakt mit der zweiten Austrittsoberfläche angeordnet ist.

10. Abbildungseinheit gemäß Anspruch 9, wobei mindestens ein Teil der Oberflächen des ersten optischen Elements, des zweiten optischen Elements und des optischen Zwischenelements mit einem lichtabschirmenden Material (102) versehen ist.

11. Abbildungsvorrichtung mit einer Vielzahl von Sätzen der Abbildungseinheiten (100; 110) gemäß Anspruch 9, wobei die Vielzahl von Sätzen von Abbildungseinheiten so angeordnet sind, daß die jeweils ersten Eintrittsoberflächen der Abbildungseinheiten auf einer übereinstimmenden Ebene im wesentlichen ausgerichtet sind.

12. Strahlungsbildsensor, der aufweist:

- die Abbildungseinheit gemäß Anspruch 9 und
- einen Leuchtstoff (301), der auf der ersten Eintrittsoberfläche angeordnet ist, um beim Einfall einer Strahlung Licht abzustrahlen.

13. Strahlungsbildsensor gemäß Anspruch 12, wobei die erste Eintrittsoberfläche (11a) geschliffen ist, um einen arithmetischen Mittenrauhwert innerhalb des Bereichs von 0,20 bis 0,80 um zu erzielen.

14. Fingerabdruckanalysator, der aufweist:

- eine Abbildungseinheit (100) zum Aufnehmen eines Bilds eines Fingerabdrucks,
- einen Fingerabdruck-Erkennungsabschnitt (401) zum Erkennen des Fingerabdruckbilds, das durch die Abbildungseinheit aufgenommen ist, durch Vergleichen mit einem vorhergehend amtlich erfaßten Bezugsmuster, und
- einen Anzeigeabschnitt (402) zum Anzeigen eines Erkennungsergebnisses, das durch den Fingerabdruck-Erkennungsabschnitt erhalten ist,

wobei die Abbildungseinheit die Abbildungseinheit gemäß Anspruch 9 ist.

**Revendications**

1. Dispositif optique comprenant :

un premier élément optique (1 ; 11 ; 17 ; 31 ; 36 ; 51 ;55 ;71), composé d'une pluralité de fibres optiques (14) agencées parallèlement les unes aux autres et formées de façon intégrale, ayant une première surface d'entrée (1a ; 11a ; 18a ; 31a ; 37a ; 51a ; 71a) et une première surface de sortie (1b ; 11b ; 31b ; 51b) qui coupent un axe optique (62) sous des angles respectifs de $\alpha_1$, $\beta_1$ ;
un élément optique intermédiaire (2 ; 12 ; 32 ; 52 ; 66 ; 67 ; 72), composé d'une pluralité de lignes de transmission optique (14 ; 52e, 52f ; 66e, 66f ; 67f) agencées parallèlement les unes aux autres, ayant une première face d'extrémité (2a ; 12a ; 32a ; 52a ; 66a ; 67a) et une seconde face d'extrémité (2b ; 12b ; 32b ; 52b ; 66b ; 67b) qui coupent un axe (62) desdites lignes de transmission optique sous des angles respectifs de $\gamma_1$, $\gamma_2$ ; et
un second élément optique (3 ; 13 ; 33 ; 53 ; 73), composé d'une pluralité de fibres optiques (14) agencées parallèlement les unes aux autres et formées de façon intégrale, ayant une seconde surface d'entrée (3a ; 13a ; 33a) et une seconde surface de sortie (3b ; 13b ; 33b ; 53b) qui coupent un axe optique (3) sous des angles respectifs de $\alpha_2$, $\beta_2$;

dans lequel ladite première surface de sortie et ladite première face d'extrémité sont en contact l'une avec l'autre, et ladite seconde face d'extrémité et ladite seconde surface d'entrée sont en contact l'une avec l'autre ; et
dans lequel un angle $\theta_1$ formé entre l'axe optique des fibres dudit premier élément optique et l'axe des lignes de transmission optique dudit élément optique intermédiaire,
un angle $\theta_2$ formé entre l'axe des lignes de transmission optique dudit élément optique intermédiaire et l'axe optique des fibres dudit second élément optique, et
un angle $\theta_3$ formé entre l'axe optique des fibres dudit premier élément optique et l'axe optique des fibres dudit second élément optique sont liés entre eux par les relations

$$\theta_3 > \theta_1, \text{ et } \theta_3 > \theta_2$$

**caractérisé en ce que** les axes optiques des fibres desdits premier et second éléments optique et ledit axe des lignes de transmission optique de l'élément optique intermédiaire sont tous parallèles à un même plan (x, y).

2. Dispositif optique selon la revendication 1, dans lequel ledit élément optique intermédiaire (2 ; 12 ; 32 ; 72) est un élément optique dans lequel une pluralité de fibres optiques (14) sont agencées parallèlement les unes aux autres et sont formées de façon intégrale.

3. Dispositif optique selon la revendication 1 ou 2, dans lequel les relations $\alpha_1 < \beta_1$, $\alpha_2 < \beta_2$, et $\gamma_1 = \gamma_2$ sont satisfaites ; et
dans lequel une ligne simultanément parallèle à ladite première surface d'entrée et à ladite première surface de sortie et une ligne simultanément parallèle à ladite seconde surface d'entrée et à ladite seconde surface de

**33**

sortie sont orthogonales l'une à l'autre.

4. Dispositif optique comprenant :

un premier élément optique (21 ; 41 ; 61), composé d'une pluralité de fibres optiques (14) agencées parallèlement les unes aux autres et formées de façon intégrale, ayant une première surface d'entrée (21a ; 41a ; 61a) et une première surface de sortie (21b ; 41b ; 61b) qui coupent un axe optique sous des angles respectifs de $\alpha_1$, $\beta_1$ ;
des premier à n-ème éléments optiques intermédiaires (22, 23 ; 42, 43 ; 62, 63) dont le nombre est n, où n est un entier au moins égal à 2 ; et
un second élément optique (24 ; 44 ; 64), composé d'une pluralité de fibres optiques (14) agencées parallèlement les unes aux autres et formées de façon intégrale, ayant une seconde surface d'entrée (24a ; 44a ; 64a) et une seconde surface de sortie (24b ; 44b ; 64b) qui coupent un axe optique sous des angles respectifs de $\alpha_2$, $\beta_2$;

dans lequel le i-ème élément optique intermédiaire, où i est un entier de 1 à n, est composé d'une pluralité de lignes de transmission optique (14 ; 52e, 52f ; 66e, 66f ; 67f) agencées parallèlement les unes aux autres et a une (2i-1)-ème face d'extrémité et une 2i-ème face d'extrémité qui coupent un axe desdites lignes de transmission optique sous des angles respectifs de $\gamma_{2i-1}$, $\gamma_{2i}$ ;
dans lequel les axes optiques des fibres desdits premier et second éléments optiques et ledit axe des lignes de transmission optique de chacun desdits éléments optiques intermédiaires sont tous parallèles à un même plan (x, y) ;
dans lequel ladite première surface de sortie et ladite première face d'extrémité du premier élément optique intermédiaire sont en contact l'une avec l'autre lorsque i = 1, et ladite 2i-ème face d'extrémité et ladite (2i+1)-ème face d'extrémité sont en contact l'une avec l'autre lorsque i est un entier de i à n-1, et ladite 2n-ème face d'extrémité et ladite seconde surface d'entrée sont en contact l'une avec l'autre ; et
dans lequel chacun d'un angle $\theta_1$ formé entre l'axe optique dudit premier élément optique et l'axe des lignes de transmission optique dudit premier élément optique intermédiaire,
d'un angle $\theta_{i+1}$ formé entre l'axe des lignes de transmission optique dudit i-ème élément optique intermédiaire et l'axe des lignes de transmission optique dudit (i+1)-ème élément optique intermédiaire, où i est un entier de 1 à n-1, et
d'un angle $\theta_{n+1}$ formé entre l'axe des lignes de transmission optique dudit n-ème élément optique intermédiaire et l'axe optique des fibres dudit second élément optique est inférieur à un angle $\theta_{n+2}$ formé entre l'axe optique des fibres dudit premier élément optique et l'axe optique des fibres dudit second élément optique.

5. Dispositif optique selon la revendication 4, dans lequel au moins l'un desdits n éléments optiques intermédiaires (22, 23 ; 42, 43) est un élément optique dans lequel une pluralité de fibres optiques (14) sont agencées parallèlement les unes aux autres et sont formées de façon intégrale.

6. Dispositif optique selon la revendication 4 ou 5, dans lequel les relations $\alpha_1 < \beta_1$, et $\alpha_2 < \beta_2$ sont satisfaites, et une relation $\gamma_{2i-1} = \gamma_{2i}$ est satisfaite pour chaque i de 1 à n ; et
dans lequel une ligne simultanément parallèle à ladite première surface d'entrée et à ladite première surface de sortie et une ligne simultanément parallèle à ladite seconde surface d'entrée et à ladite seconde surface de sortie sont orthogonales l'une à l'autre.

7. Dispositif optique selon la revendication 3 ou 6, dans lequel $\beta_1$ est un angle droit.

8. Dispositif optique selon la revendication 3 ou 6, dans lequel $\beta_1$ est an angle aigu.

9. Unité de formation d'image comprenant :

le dispositif optique selon la revendication 1 ou 4 ; et
un dispositif de formation d'image (101) disposé en contact avec ladite seconde surface de sortie.

10. Unité de formation d'image selon revendication 9, dans laquelle au moins une partie de surfaces dudit premier élément optique, dudit second élément optique, et dudit élément optique intermédiaire est munie d'un matériau d'occultation de la lumière (102).

**11.** Appareil de formation d'image ayant une pluralité d'ensembles d'unités de formation d'image (100 ; 110) selon revendication 9,

dans lequel ladite pluralité d'ensembles d'unités de formation d'image sont agencées de manière à ce que les premières surfaces d'entrée respectives desdites unités de formation d'image s'alignent sensiblement sur un même plan.

**12.** CSapteur d'image de rayonnement comprenant :

l'unité de formation d'image selon revendication 9 ; et

un luminophore (301), disposé sur ladite première surface d'entrée, pour émettre de la lumière lors de l'incidence d'un rayonnement.

**13.** Capteur d'image de rayonnement selon revendication 12, dans lequel ladite première surface d'entrée (11a) est dépolie de façon à produire une rugosité moyenne au centre dans l'intervalle de 0,20 à 0,80 $\mu$m.

**14.** Appareil d'identification d'empreinte digitale comprenant :

une unité de formation d'image (100) servant à former l'image d'une empreinte digitale ;

une section d'identification d'empreinte digitale (401) pour identifier l'image de l'empreinte digitale formée par ladite unité de formation d'image au moyen d'un motif de référence enregistré préalablement ; et

une section d'affichage (402) servant à afficher un résultat d'identification obtenu par ladite section d'identification d'empreinte digitale ;

dans lequel ladite unité de formation d'image est l'unité de formation d'image selon revendication 9.

## Fig.1

**Fig.2**

EP 1 001 284 B1

# *Fig.3*

*Fig.4*

EP 1 001 284 B1

**Fig.5**

**Fig.6**

*Fig.7*

*Fig.8*

Fig.9

EP 1 001 284 B1

Fig.10

EP 1 001 284 B1

Fig.11

## Fig.12

301
11a
Ra
11
14b
14
14a
Lo
Lt
La
$\alpha_1$
$n_{11}$
$n_{12}$

## Fig.13

301
11a
Ra
11
14a
14
14b
Lo
Lt
La
$\alpha_1$
$n_{11}$
$n_{12}$

Fig.14

Fig.15

EP 1 001 284 B1

## Fig.16

*Fig.17*

EP 1 001 284 B1

# Fig.18

## Fig.19

EP 1 001 284 B1

*Fig.20*

Fig.21

Fig.22

*Fig.23*

EP 1 001 284 B1

# Fig.24

EP 1 001 284 B1

## Fig.25

*Fig.26*

## Fig.27

11    64.5°    12

15°

13

64.5°

## Fig.28

21    66°    22    40.5°

23

15°

24

66°

40.5°

*Fig.29*

11

9. 4°

13

66°

12

35°

*Fig.30*

31

35°

12°

33

32    53. 5°

35°

*Fig.31*

*Fig.32*

# Fig.33

Fig.34

EP 1 001 284 B1

## Fig.35

## Fig.36

## Fig.37

## Fig.38

*Fig.39*

Fig.40

Fig.41

EP 1 001 284 B1

Fig.42

EP 1 001 284 B1

*Fig.43*

*Fig.44*

*Fig.45*

*Fig.46*

*Fig.47*

*Fig.48*

66a 66q 66

66b

*Fig.49*

66q

66f 66e 68.8°

*Fig.50*

*Fig.51*

**Fig.52**

**Fig.53**

Fig.54

# Fig.55

Fig.56

EP 1 001 284 B1

*Fig.57*

Fig.58

*Fig.59*

EP 1 001 284 B1

*Fig.60*

EP 1 001 284 B1

Fig.61

EP 1 001 284 B1

260

31a

31　32　33
30　　　101
110

Fig.62

EP 1 001 284 B1

EP 1 001 284 B1

## Fig.63

*Fig.64*

*Fig.65*

**Fig.66**

EP 1 001 284 B1

*Fig.67*

11a

11

Lo

Lt

La

20°

35°

15

14b  14a

14

*Fig.68*

11a

11

Lo

Lt

La

20°

15

14b  14a

14

*Fig.69*